(19) Europäisches Patentamt / European Patent Office / Office européen des brevets

(11) **EP 4 253 475 A1**

(12) **EUROPEAN PATENT APPLICATION**
published in accordance with Art. 153(4) EPC

(43) Date of publication:
04.10.2023 Bulletin 2023/40

(21) Application number: 21898192.6

(22) Date of filing: 30.11.2021

(51) International Patent Classification (IPC):
C08L 25/04 (2006.01)   C08L 25/08 (2006.01)
C08L 51/04 (2006.01)   C08L 91/00 (2006.01)
C08L 91/08 (2006.01)   C08L 63/08 (2006.01)

(52) Cooperative Patent Classification (CPC):
C08L 25/04; C08L 25/08; C08L 51/04; C08L 63/08;
C08L 91/00; C08L 91/08

(86) International application number:
PCT/JP2021/043865

(87) International publication number:
WO 2022/114221 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.11.2020  JP 2020198999
10.08.2021  JP 2021130990
08.10.2021  JP 2021166317
08.10.2021  JP 2021166318
24.11.2021  JP 2021190613

(71) Applicant: PS Japan Corporation
Tokyo 112-0002 (JP)

(72) Inventors:
• IWAMOTO, Hirokazu
Tokyo 100-0006 (JP)
• NAKAGAWA, Yu
Tokyo 100-0006 (JP)

(74) Representative: D Young & Co LLP
120 Holborn
London EC1N 2DY (GB)

(54) **STYRENE-BASED RESIN COMPOSITION, AND FORMED BODY THEREOF**

(57) Provided are a styrene-based resin composition that reduces environmental load by use of a biomass raw material and has excellent mechanical strength, and a molded article thereof. A styrene-based resin composition comprises: 82.5 mass% to 99.9 mass% of a styrene-based resin (A) containing a styrene-based monomer unit; and 0.1 mass% to 15 mass% of a biomass plasticizer (B) having a biomass carbon ratio (pMC%) of 10 % or more.

EP 4 253 475 A1

**Description**

TECHNICAL FIELD

The present disclosure relates to a styrene-based resin composition and a molded article made of the styrene-based resin.

BACKGROUND

Styrene-based resins are used in various applications such as miscellaneous goods and home appliances because of their moldability and mechanical strength. Biomass materials are attracting attention from the viewpoint of establishing a low-carbon society and a recycling-oriented society, and composite materials of styrene-based resin materials and naturally-derived biomass materials are studied.

For example, PTL 1 discloses a styrene-based resin composition containing rubber-modified polystyrene, polylactic acid, and a styrene monomer unit-containing thermoplastic elastomer. PTL 2 discloses a method of producing a heat-resistant resin foamed sheet by adding epoxidized soybean oil and/or linseed oil and a higher fatty acid metal salt to a resin composition containing a styrene-methacrylic acid copolymer as a main component. PTL 3 discloses a styrene-based resin composition containing plant-derived polyethylene and a compatibilizer.

In recent years, in the injection molding field among the styrene-based resin fields, there is a demand to enhance the fluidity of resin and shorten the time required for the molding cycle for the purpose of improving the productivity. As a result of increasing the fluidity of resin, the residual stress that occurs in the molded article during injection molding cooling decreases, and the residual strain is reduced. Since it is known that reduction in residual strain contributes to improved mechanical strength of molded articles, it can be expected that the mechanical strength is improved by increasing the fluidity of resin.

Typically, a large amount of liquid paraffin is used as a plasticizer to increase the fluidity of resin. There is, however, a problem in that the low boiling point components volatilize during molding and stain the mold and the molded article. For example, PTL 4 discloses a method of producing a rubber-modified styrene-based resin having an excellent balance of surface impact resistance, rigidity, and fluidity. There are also techniques of adjusting the molecular weight and molecular weight distribution of resin in order to enhance the fluidity of the resin while preventing mold staining during molding. For example, PTL 5 discloses a method of producing a styrene-based resin having high fluidity with few mold deposits by adjusting the molecular weight and molecular weight distribution without adding liquid paraffin.

Styrene-based resins are transparent and have excellent rigidity, and therefore are widely used in recent years for biaxially stretched sheets and food containers made by secondary working biaxially stretched sheets. Biaxially stretched sheets using styrene-based resins have a problem in that, if the fluidity of the styrene-based resin is low, the productivity decreases and the thickness unevenness of the sheet worsens. Meanwhile, if the fluidity of the styrene-based resin is high, drawdown tends to occur during sheet molding, causing poor sheet moldability. Hence, styrene-based resins for use in biaxially stretched sheets need to have fluidity suitable for biaxially stretched sheet molding.

One method used to control the fluidity of styrene-based resin in this way is to add liquid paraffin. For example, PTL 6 discloses an example in which liquid paraffin is added to a highly branched styrene-based resin.

Another method used to control the fluidity of resin is to adjust the molecular weight and molecular weight distribution of the resin. For example, PTL 7 discloses a styrene-based resin composition having fluidity suitable for biaxially stretched sheets by adjusting the molecular weight and molecular weight distribution of a styrene-methacrylic acid copolymer.

In the case of working or molding hollow containers using styrene-based resins, injection blow molding with which deep containers are easily molded and that has high productivity is widely used for production. Injection blow molding is suitable for producing hollow containers with heat-sealed opening portions as it enables only the opening portion of the hollow container to be thick. Particularly in recent years, there is a demand in the technical field of injection blow molding to develop a molding material with excellent strength that can maintain certain strength even when the container is reduced in thickness. Reduction in thickness, however, causes a decrease in the opening portion impact strength, leading to a problem in that cracks occur, for example, during air transport in molding factories. Moreover, reduction in thickness causes a decrease in the buckling strength of the container, leading to a problem in that, when the container is filled with beverage and transported, the container cannot withstand the load and deforms. A molding material that has an excellent balance of opening portion impact strength and buckling strength is therefore needed. Reduction in mold staining is also required from the viewpoint of improving the productivity of container molding, Techniques related to such injection blow molding include, for example, the techniques described in PTL 8 to PTL 10.

PTL 8 discloses a styrene-based resin composition containing a rubber-modified styrene-based resin and polylactic acid and suitable for injection blow molding. PTL 9 discloses a technique for a molded beverage container excellent in both buckling strength and opening portion strength. PTL 10 discloses a rubber-modified styrene-based resin composition for highly branched injection blow molding, and mentions a technique of reducing the total amount of residual styrene monomer and residual polymerization solvent and reducing mold staining.

CITATION LIST

Patent Literature

PTL 1: JP 2016-199652 A
PTL 2: JP 2005-239914 A
PTL 3: JP 2020-193274 A
PTL 4: JP H10-251355 A
PTL 5: JP 2017-222770 A
PTL 6: JP 2013-100430 A
PTL 7: WO 2017/122775 A1
PTL 8: WO 2021/132692 A1
PTL 9: JP H10-76565 A
PTL 10: JP 2013-100435 A

SUMMARY

(Technical Problem)

With the technique in PTL 1, a polymer alloy of styrene-based resin and polylactic acid, which has a relatively high melting point, toughness, and transparency among plant-derived biodegradable polymers, is studied. However, since polylactic acid has very low compatibility with styrene-based resin and poor fluidity, etc., it is difficult to design products that satisfy mechanical properties such as impact resistance and stretchability required in the market. Moreover, since polylactic acid is incompatible with styrene-based resin, it is difficult to recycle scrap materials.

With the technique in PTL 2, a crosslinked styrene-(meth)acrylic acid-based copolymer resin obtained by reacting epoxidized soybean oil as a component having a crosslinked structure with a styrene-(meth)acrylic acid-based copolymer is studied. The method of producing a closed-cell styrene-based resin foam by introducing a crosslinking agent to control the fluidity or viscoelasticity in the molten state is a typical foam forming method. However, since the compatibility varies greatly depending on the type of styrene-based resin and the type of crosslinking agent used, it is difficult to produce a molded article having both stretchability and mechanical strength. In addition, in a system in which (meth)acrylic polymer resin and modified vegetable oil such as epoxidized soybean oil coexist, the modifying group reacts with (meth)acrylic acid to form a gel, making it difficult to control the crosslink density and the like and causing a decrease in moldability. Gelation may also impair the appearance of the molded product.

With the technique in PTL 3, a polystyrene-based resin containing plant-derived polyethylene and a compatibilizer is studied. Due to low compatibility between polystyrene and polyethylene, however, the mechanical strength is low, and it is difficult to maintain high transparency even with the use of the compatibilizer.

With the technique in PTL 4, a method of producing a rubber-modified styrene-based resin having an excellent balance of surface impact resistance, rigidity, and fluidity is studied. However, due to the use of a large amount of liquid paraffin, low boiling point components volatilize during injection molding, which increases the amount of volatile components during molding. This causes a new problem of staining of the mold during molding or staining of the molded article.

With the technique in PTL 5, a styrene-based resin with high fluidity and little adhesion of low-molecular substances to the mold is studied. However, the low molecular weight of the resin makes it difficult to design products without lowering the Charpy impact strength or the rigidity of the molded article. Moreover, biomass raw materials, which is attracting attention in recent years for the purpose of environmental load reduction, is not used.

With the technique in PTL 6, a highly branched styrene-based resin composition excellent in biaxially stretched sheet moldability and productivity is studied. However, since liquid paraffin is added, there is a possibility that the sheet appearance deteriorates due to bleed-out and generation of volatile gas during molding.

With the technique in PTL 7, a styrene-based resin composition excellent in biaxially stretched sheet moldability and productivity by adjusting the molecular weight of a styrene-methacrylic acid copolymer to control the fluidity is studied. However, since the molecular weight is relatively low in order to increase the fluidity, there is a possibility that the mechanical strength decreases. Besides, in PTL 6 and PTL 7, biomass raw materials, which is attracting attention in recent years for the purpose of environmental load reduction, is not used.

With the technique in PTL 8, a polymer alloy of styrene-based resin and polylactic acid, which has a relatively high melting point and toughness among plant-derived biodegradable polymers, is studied. However, since polylactic acid has very low compatibility with styrene-based resin, it is difficult to design products that satisfy mechanical properties such as impact resistance and stretchability required in the market of hollow containers. Moreover, since polylactic acid is incompatible with styrene-based resin, it is difficult to recycle hollow container scrap materials.

With the technique in PTL 9, a molded beverage container excellent in both buckling strength and opening portion strength as mechanical strength is studied. However, since a large amount of liquid paraffin is used, volatile components generated during molding increase, as a result of which mold staining during molding is likely to worsen. With the technique in PTL 10, a molding material with excellent injection blow moldability and a small total amount of residual styrene monomer and residual polymerization solvent is studied. However, since a large amount of white oil is used, the effect of reducing mold staining is likely to be insufficient. Besides, in PTL 9 and PTL 10, biomass raw materials for the purpose of environmental load reduction is not used.

Thus, with the techniques in PTL 1 to PTL 10, plasticizers using biomass raw materials that can reduce environmental load and maintain high mechanical strength are not studied.

It could therefore be helpful to provide a styrene-based resin composition using a biomass raw material that reduces environmental load by use of the biomass raw material and maintains high mechanical strength during molding, and a molded article thereof.

It could also be helpful to provide a styrene-based resin composition that reduces environmental load by use of a biomass raw material, reduces mold staining during injection molding, has high mechanical strength, and has an excellent molding cycle, and a molded article thereof.

It could also be helpful to provide a styrene-based resin composition that reduces environmental load by use of a biomass raw material, reduces mold staining during injection molding, has high fluidity and high mechanical strength, and has high transparency, and a molded article thereof.

It could also be helpful to provide a styrene-based resin composition that reduces environmental load by use of a biomass raw material, maintains high mechanical strength, has excellent moldability into a biaxially stretched sheet and excellent sheet appearance, and has high transparency, and a molded article thereof.

It could also be helpful to provide a rubber-modified styrene-based resin composition that reduces environmental load by use of a biomass raw material, has excellent injection blow moldability, reduces mold staining during molding, has high opening portion impact strength and buckling strength, and is suitable for injection blow molding.

(Solution to Problem)

Upon repeated experiments and careful examination, we discovered that the foregoing problems can be solved by using a styrene-based resin composition obtained by mixing, at a specific ratio, a styrene-based resin (A) and a biomass plasticizer (B) having a high boiling point and a biomass carbon ratio (pMC%) of 10 % or more. In particular, if the compatibility between the biomass plasticizer (B) having a biomass carbon ratio (pMC%) of 10 % or more and the styrene-based resin (A) is low, the biomass plasticizer (B) is hard to disperse in the styrene-based resin (A) (for example, the biomass plasticizer (B) and the styrene-based resin (A) separate from each other), so that the mechanical strength tends to decrease. As a result of conducting a solubility test using the following turbidity evaluation experiment for the compatibility between the biomass plasticizer (B) and the styrene-based resin (A), we discovered that, when the SP value difference between the biomass plasticizer (B) and the styrene-based resin (A) is within a specific range, the biomass plasticizer (B) uniformly dissolves in the styrene-based resin (A) and thus excellent mechanical strength is achieved.

[Turbidity evaluation experiment]

5 parts by mass or 10 parts by mass of each plasticizer shown in Table 1 or 2 was liquid-added to and kneaded with 100 parts by mass of polystyrene resin (trade name "685" produced by PS Japan Corporation, corresponding to styrene-based resin (A)) or acrylonitrile-styrene resin (trade name "Stylac® 789" (Stylac is a registered trademark in Japan, other countries, or both) produced by Asahi Kasei Corporation, corresponding to styrene-based resin (A)), with a twin screw extruder. As the twin screw extruder, a twin screw extruder "TEM-26SS" (screw diameter: 26 mm) produced by the Japan Steel Works, Ltd. was used. Melt extrusion was carried out under the conditions of a melt temperature of 220 °C and an extrusion rate 10 kg/hr, and the extruded strands were solidified by cooling in a cooling bath and then cut to obtain a pelleted resin composition.

After this, the total light transmittance of a 2 mm thick plate was measured in accordance with JIS K7361-1. A total light transmittance of 85 % or more was evaluated as transparent "○", a total light transmittance of 65 % or more and less than 85 % as semitransparent "△", and a total light transmittance of less than 65 % as white turbid "×". The measurement of the total light transmittance of the 2 mm thick plate was carried out as follows.

Measurement of total light transmittance

(I) Test piece preparation conditions

The obtained styrene-based resin composition was injection-molded using a mold for flat plate molded articles under the following conditions to prepare a flat plate with a thickness of 2 mm and thus prepare a sheet body:

Molding machine: EC60N produced by Toshiba Machine Co., Ltd.
Cylinder temperature: 220 °C.
Injection pressure: 45 MPa, injection time: 10 sec.
Cooling time: 15 sec, mold temperature: 45 °C.

(II) Total light transmittance measurement conditions

Using the sheet body of the test piece prepared as described above, the total light transmittance (%) was measured in accordance with JIS K7361-1.

Table 1 shows the turbidity evaluation results when each plasticizer was added to the polystyrene resin. Table 2 shows the turbidity evaluation results when each plasticizer was added to the acrylonitrile-styrene resin.

[Table 1]

| Table 1 | | Resin used | |
|---|---|---|---|
| SP value difference | Plasticizer used | Polystyrene with 5 parts by mass of plasticizer added (SP value: 8.6) | Polystyrene with 10 parts by mass of plasticizer added (SP value: 8.6) |
| 1.3 | Liquid paraffin (SP value: 7.3) | △ | × |
| 0.4 | Palm oil (SP value: 8.2) | ○ | ○ |
| 0.4 | Epoxidized soybean oil (SP value: 9.0) | ○ | ○ |
| 1.5 | Hydrogenated castor oil (SP value: 10.1) | △ | × |

[Table 2]

| Table 2 | | Resin used | |
|---|---|---|---|
| SP value difference | Plasticizer used | Acrylonitrile-styrene resin with 5 parts by mass of plasticizer added (SP value: 9.9) | Acrylonitrile-styrene resin with 10 parts by mass of plasticizer added (SP value: 9.9) |
| 2.6 | Liquid paraffin (SP value: 7.3) | × | × |
| 1.7 | Palm oil (SP value: 8.2) | △ | × |
| 0.9 | Epoxidized soybean oil (SP value: 9.0) | ○ | △ |
| 0.2 | Hydrogenated castor oil (SP value: 10.1) | ○ | ○ |

The experimental results in Tables 1 and 2 revealed that, when the difference in SP value was more than 2.5, the influence of the amount of the plasticizer added was low, and the plasticizer yielded a white turbidity (i.e. was cloudy) in the styrene-based resin such as the polystyrene resin or the acrylonitrile-styrene resin. This indicates that the difference in SP value between the plasticizer and the styrene-based resin needs to be 2.5 or more in order for the plasticizer to be insoluble at least in the styrene-based resin. The experimental results in Tables 1 and 2 also revealed that, when the difference in SP value between the plasticizer and the styrene-based resin such as the polystyrene resin or the acrylonitrile-styrene resin was less than about 1, the influence of the amount of the plasticizer added was low, and the plasticizer was relatively stably dissolved in the styrene-based resin.

In view of the above, in this specification, a plasticizer whose SP value differs from that of the styrene-based resin by 2.5 or more is regarded as being completely insoluble in the styrene-based resin, on the ground that the plasticizer whose SP value differs from that of the styrene-based resin by 2.5 or more yielded a white turbidity regardless of the amount of the plasticizer added.

Meanwhile, in a system using a plasticizer whose SP value differs from that of the styrene-based resin by 1.3 or more and less than 2.5, some insoluble matter existed in the resin given that the state was not transparent. Accordingly, in this specification, a plasticizer whose SP value differs from that of the styrene-based resin by 1.3 or more and less than 2.5 is regarded as being partially insoluble in the styrene-based resin.

We thus provide the following.

(1) The present disclosure provides a styrene-based resin composition comprising: 82.5 mass% to 99.9 mass% of a styrene-based resin (A) containing a styrene-based monomer unit; and 0.1 mass% to 15 mass% of a biomass plasticizer (B) having a biomass carbon ratio (pMC%) of 10 % or more.

(2) In this embodiment, preferably, the styrene-based resin composition comprises: 90 mass% to 99.9 mass% of the styrene-based resin (A) containing the styrene-based monomer unit; and 0.1 mass% to 10 mass% of the biomass plasticizer (B) having the biomass carbon ratio (pMC%) of 10 % or more.

(3) In this embodiment, preferably, the styrene-based resin (A) is a styrene-based polymer (a-3) containing the styrene-based monomer unit, or a rubber-modified styrene-based resin containing: a polymer matrix phase having, as a constituent component, a styrene-based polymer (a-1) containing the styrene-based monomer unit; and rubbery polymer particles (a-2), and an absolute difference between an SP value of the styrene-based polymer (a-1) or the styrene-based polymer (a-3) and an SP value of the biomass plasticizer (B) is less than 2.5 $(\text{cal/cm}^3)^{1/2}$.

(4) In this embodiment, preferably, an SP value of the biomass plasticizer (B) is 7.4 $(\text{cal/cm}^3)^{1/2}$ to 10.5 $(\text{cal/cm}^3)^{1/2}$.

(5) In this embodiment, preferably, the styrene-based resin (A) is a rubber-modified styrene-based resin containing: a polymer matrix phase having a styrene-based polymer (a-1) as a constituent component; and rubbery polymer particles (a-2), and a content of the rubbery polymer particles (a-2) is 3 mass% to 36 mass% with respect to a total content of 100 mass% of the styrene-based resin (A), and an average particle diameter of the rubbery polymer particles (a-2) is 0.3 $\mu$m to 7.0 $\mu$m.

(6) In this embodiment, preferably, the styrene-based resin (A) is a rubber-modified styrene-based resin containing: a styrene-based polymer (a-1) containing the styrene-based monomer unit; and rubbery polymer particles (a-2) having an average particle diameter of 0.9 $\mu$m to 7.0 $\mu$m, the styrene-based resin composition further comprises a higher fatty acid compound (C), and a content of the rubbery polymer particles (a-2) is 10 mass% to 30 mass%, a content of the biomass plasticizer (B) is 0.1 mass% to 15 mass%, and a content of the higher fatty acid compound is 0.02 mass% to 2.5 mass%, with respect to 100 mass% of the entire styrene-based resin composition.

(7) In this embodiment, preferably, a content of the styrene-based monomer unit in the styrene-based resin (A) is 50 mass% or more with respect to a total content of 100 mass% of the styrene-based resin (A).

(8) In this embodiment, preferably, the styrene-based resin (A) is a styrene-based polymer (a-3), and a total light transmittance of a 2 mm thick plate of the styrene-based resin composition is 70 % or more.

(9) In this embodiment, preferably, a content of the biomass plasticizer (B) is 0.1 mass% or more and less than 3.0 mass%, and a Vicat softening temperature is 90 °C or more.

(10) In this embodiment, preferably, the styrene-based resin composition further contains 0.1 parts to 0.5 parts by mass of a higher fatty acid compound with respect to 100 parts by mass of the styrene-based resin composition.

(11) The present disclosure provides an injection blow molded article obtainable by injection blow molding the above-described styrene-based resin composition.

(12) The present disclosure provides an injection molded article obtainable by injection molding the above-described styrene-based resin composition.

(13) The present disclosure provides a sheet comprising the above-described styrene-based resin composition.

(Advantageous Effect)

It is thus possible to provide a styrene-based resin composition using a biomass raw material that reduces environmental load by use of the biomass raw material and maintains high mechanical strength, and a molded article thereof.

It is also possible to provide a styrene-based resin composition that reduces environmental load by use of a biomass raw material, reduces mold staining during injection molding, has high mechanical strength, and has an excellent molding cycle, and a molded article thereof.

It is also possible to provide a styrene-based resin composition that reduces environmental load by use of a biomass raw material, reduces mold staining during injection molding, has high fluidity and high mechanical strength, and has high transparency, and a molded article thereof.

It is also possible to provide a styrene-based resin composition that reduces environmental load by use of a biomass raw material, maintains high mechanical strength, has excellent moldability into a biaxially stretched sheet and excellent sheet appearance, and has high transparency, and a molded article thereof.

It is also possible to provide a styrene-based resin composition that reduces environmental load by use of a biomass raw material, has excellent injection blow moldability, has high opening portion impact strength and buckling strength during injection blow molding, reduces mold staining during molding, and is suitable for injection blow molding.

DETAILED DESCRIPTION

An embodiment of the present disclosure (hereafter referred to as "this embodiment") will be described in detail below. The present disclosure is not limited to the following description, and various modifications are possible within the scope of the present disclosure.

[Styrene-based resin composition]

A styrene-based resin composition in this embodiment contains: 82.5 mass% to 99.9 mass% of a styrene-based resin (A) containing a styrene-based monomer unit; and 0.1 mass% to 15 mass% of a biomass plasticizer (B) having a biomass carbon ratio (pMC%) of 10 % or more.

Such a styrene-based resin composition reduces environmental load and has high mechanical strength during molding.

Further properties may be imparted to the styrene-based resin composition depending on the intended use. For example, in the case where high mechanical strength is given importance, one preferred aspect of the styrene-based resin composition in this embodiment is that the styrene-based resin composition may contain rubbery polymer particles (hereafter referred to as "rubbery polymer particles (a-2)").

In the case where transparency is given importance, another preferred aspect of the styrene-based resin composition in this embodiment is that the total light transmittance of a 2 mm thick plate of the styrene-based resin composition may be 70 % or more.

A mode in which the rubbery polymer particles (a-2) are contained and a mode in which the total light transmittance of the 2 mm thick plate is 70 % or more will be described separately below.

"Mode in which rubbery polymer particles (a-2) are contained"

A preferred styrene-based resin composition according to the present disclosure may be a styrene-based resin composition that contains: 82.5 mass% to 99.9 mass% of a styrene-based resin (A) containing a styrene-based monomer unit; and 0.1 mass% to 15 mass% of a biomass plasticizer (B) having a biomass carbon ratio (pMC%) of 10 % or more, wherein the styrene-based resin (A) is a rubber-modified styrene-based resin containing: a polymer matrix phase having, as a constituent component, a styrene-based polymer (a-1) containing the styrene-based monomer unit; and rubbery polymer particles (a-2).

In other words, the styrene-based resin composition in this embodiment may contain 82.5 mass% to 99.9 mass% of a rubber-modified styrene-based resin(A) and 0.1 mass% to 15 mass% of a biomass plasticizer (B) with respect to the entire styrene-based resin composition (100 mass%), and the rubber-modified styrene-based resin may contain a polymer matrix phase having, as a constituent component, a styrene-based polymer (a-1) containing a styrene-based monomer unit, and rubbery polymer particles (a-2).

Such a styrene-based resin composition reduces environmental load and has higher mechanical strength.

<Rubber modified styrene resin>

The styrene-based resin composition in this embodiment may contain a rubber-modified styrene-based resin. In this embodiment, the content of the rubber-modified styrene-based resin is 82.5 mass% to 99.9 mass%, preferably 82.5 mass% to 99.88 mass%, more preferably 83 mass% to 99 mass%, further preferably 84 mass% to 98 mass%, even more preferably 85 mass% to 97 mass%, even more preferably 86 mass% to 97 mass%, even more preferably 88 mass% to 97 mass%, and even more preferably 90 mass% to 97 mass%, with respect to the entire styrene-based resin composition (100 mass%). In another form, the content of the rubber-modified styrene-based resin is 85.0 mass% to 99.9 mass%, preferably 90.0 mass% to 99.0 mass%, more preferably 91.0 mass% to 98.3 mass%, and more preferably 92.0 mass% to 97.3 mass%, with respect to the entire styrene-based resin composition (100 mass%). As a result of the content being 82.5 mass% or more, the impact resistance can be improved. As a result of the content being 99.9 mass% or less, the rigidity and the like can be improved.

In this embodiment, the rubber-modified styrene-based resin has a structure in which rubbery polymer particles (a-2) are dispersed in, as a polymer matrix phase, a styrene-based polymer (a-1) containing a styrene-based monomer unit, and can be produced by polymerizing the styrene-based monomer in the presence of the rubbery polymer.

- Polymer matrix phase -

The polymer matrix phase in the rubber-modified styrene-based resin in this embodiment is preferably composed of a styrene-based polymer (a-1) containing a styrene-based monomer unit. The monomer units constituting the styrene-based polymer (a-1) in this embodiment are preferably a styrene-based monomer unit and/or a vinyl-based monomer unit (i) copolymerizable with the styrene-based monomer. Accordingly, the styrene-based polymer (a-1) is preferably one or more selected from the group consisting of polystyrene and a styrene-based copolymer resin. An example of the styrene-based copolymer resin is a styrene-(meth)acrylic acid ester copolymer, as described later.

The term "composed of" means that 50 mass% or more, preferably 70 mass% or more, and more preferably 90 mass% or more of the total amount of the polymer matrix phase is occupied by the styrene-based polymer (a-1).

Of the monomer units constituting the styrene-based polymer (a-1) in this embodiment, the content of the styrene-based monomer unit is preferably 50 mass% to 100 mass%, more preferably 60 mass% to 100 mass%, further preferably 70 mass% to 100 mass%, even more preferably 80 mass% to 100 mass%, and even more preferably 90 mass% to 100 mass%, with respect to the entire styrene-based polymer (a-1). The content of each of the styrene-based monomer unit and the vinyl-based monomer unit (i) copolymerizable with the styrene-based monomer other than the styrene-based monomer unit in the styrene-based polymer (a-1) can be determined from the integration ratio of a spectrum measured by a proton nuclear magnetic resonance ($^1$H-NMR) spectrometer.

Examples of the styrene-based monomer in this embodiment include styrene, $\alpha$-methylstyrene, $\alpha$-methyl-p-methylstyrene, o-methylstyrene, m-methylstyrene, p-methylstyrene, vinyltoluene, ethylstyrene, isobutylstyrene, t-butylstyrene or bromostyrene, and styrene derivatives such as indene. Styrene is particularly preferable. One or more of these styrene-based monomers may be used.

In this embodiment, the vinyl-based monomer (i) is preferably one or more selected from the group consisting of unsaturated carboxylic acid monomers and unsaturated carboxylic acid ester monomer units. Non-limiting examples thereof include (meth)acrylic acid, methyl (meth)acrylate, ethyl (meth)acrylate, propyl (meth)acrylate, butyl (meth)acrylate, and cyclohexyl (meth)acrylate. These monomers may be used singly or in combination of two or more.

The term "(meth)acrylic acid" includes both acrylic acid and methacrylic acid.

-- Polystyrene --

In this embodiment, polystyrene refers to a homopolymer obtained through polymerization of a styrene-based monomer, and generally available polystyrenes can be appropriately selected and used. Examples of the styrene monomer constituting polystyrene include styrene, $\alpha$-methylstyrene, $\alpha$-methyl-p-methylstyrene, o-methylstyrene, m-methylstyrene, p-methylstyrene, vinyltoluene, ethylstyrene, isobutylstyrene, t-butylstyrene or bromostyrene, and styrene derivatives such indene, as with the foregoing styrene-based monomer. Styrene is particularly preferable from an industrial viewpoint. One or more of these styrene-based monomers may be used. Although the polystyrene may further contain monomer units other than the styrene-based monomer unit as long as the effects according to the present disclosure are not impaired, the polystyrene typically consists of the styrene-based monomer unit.

-- Styrene-based copolymer resin -

In this embodiment, the styrene-based copolymer resin is preferably a resin containing a styrene-based monomer unit and a vinyl-based monomer unit (i), more preferably a resin containing a styrene-based monomer unit and one or more monomer units selected from the group consisting of unsaturated carboxylic acid monomers and unsaturated carboxylic acid ester monomer units, and further preferably a resin containing a styrene-based monomer unit and an unsaturated carboxylic acid ester monomer unit.

In the styrene-based copolymer resin in the present disclosure, the content of the styrene-based monomer unit is preferably 51 mass% to 98 mass%, more preferably 54 mass% to 96 mass%, further preferably 57 mass% to 93 mass%, and even more preferably 60 mass% to 90 mass%, where the total content of the styrene-based monomer unit and the unsaturated carboxylic acid ester monomer unit is 100 mass%. As a result of the content being 51 mass% or more, the refractive index of the styrene-based resin (A) can be improved. As a result of the content being 98 mass% or less, the desired amount of the unsaturated carboxylic acid ester monomer unit can be present easily.

In another form, a preferable range of the content of the styrene-based monomer unit may be 69 mass% to 98 mass%, 74 mass% to 96 mass%, or 77 mass% to 92 mass%, where the total content of the styrene-based monomer unit and the unsaturated carboxylic acid ester-based monomer unit is 100 mass%.

In the styrene-based copolymer resin in the present disclosure, the content of the unsaturated carboxylic acid ester monomer unit is preferably 2 mass% to 49 mass%, more preferably 4 mass% to 46 mass%, further preferably 7 mass% to 43 mass%, and even more preferably 10 mass% to 40 mass%, where the total content of the styrene-based monomer unit and the unsaturated carboxylic acid ester-based monomer unit is 100 mass%. In another form, a preferable range of the content of the unsaturated carboxylic acid ester monomer unit may be 2 mass% to 31 mass%, 4 mass% to 26 mass%, or 8 mass% to 23 mass%, where the total content of the styrene-based monomer unit and the unsaturated carboxylic acid ester-based monomer unit is 100 mass%.

In this embodiment, the content of each of the styrene monomer unit (for example, styrene monomer unit) and the unsaturated carboxylic acid ester monomer unit (for example, methyl methacrylate monomer unit) in the styrene-based copolymer resin can be determined from the integration ratio of a spectrum measured by a proton nuclear magnetic resonance ($^1$H-NMR) spectrometer.

Specific examples of the styrene-based monomer constituting the styrene-based copolymer resin in this embodiment are the same as those of the foregoing styrene-based monomer, and accordingly their description is omitted.

Non-limiting examples of the unsaturated carboxylic acid ester monomer constituting the styrene-based copolymer resin in this embodiment include methyl (meth)acrylate, ethyl (meth)acrylate, propyl (meth)acrylate, butyl (meth)acrylate, and cyclohexyl (meth)acrylate. As the (meth)acrylic acid ester-based monomer, methyl (meth)acrylate is preferable because it has little influence on heat resistance decrease. These unsaturated carboxylic acid ester monomers may be used singly or in combination of two or more.

As the styrene-based copolymer resin in this embodiment, a styrene-methyl (meth)acrylate copolymer, a styrene-ethyl (meth)acrylate copolymer, a styrene-propane (meth)acrylate copolymer, a styrene-butyl (meth)acrylate copolymer, or a styrene-methyl (meth)acrylate-butyl (meth)acrylate copolymer is preferable .

In this embodiment, the weight average molecular weight (Mw) of the styrene-based copolymer resin is preferably 100,000 to 400,000, more preferably 120,000 to 390,000, and further preferably 140,000 to 380,000. In the case where the weight average molecular weight (Mw) is 100,000 to 400,000, the resin has a better balance of mechanical strength and fluidity with little gel contamination. In another mode in this embodiment, in the case where the opening portion impact strength and the buckling strength are given importance, the weight average molecular weight (Mw) of the styrene-based copolymer resin is preferably 100,000 to 300,000, more preferably 120,000 to 260,000, further preferably 140,000 to 240,000, and even more preferably 150,000 to 230,000. The weight average molecular weight (Mw) is a value in terms of standard polystyrene obtained using gel permeation chromatography.

The styrene-based resin (A) in this embodiment may be a mixture obtained by blending one or more of the rubber-modified styrene-based resins and one or more of the styrene-based copolymer resins. In that case, the mixing ratio of the rubber-modified styrene-based resin and the styrene-based copolymer resin may be changed as appropriate depending on the intended use. For example, in a system in which the rubber-modified styrene-based resin is less than the styrene-based copolymer resin, the content of the styrene-based copolymer resin is preferably 0.1 mass% to 30 mass% with respect to the total content (100 mass%) of the styrene-based resin (A). In a system in which the rubber-modified styrene-based resin is more than the styrene-based copolymer resin, the content of the styrene-based copolymer resin is preferably 70 mass% to 99.9 mass% with respect to the total content (100 mass%) of the styrene-based resin (A).

In this embodiment, the weight average molecular weight (Mw) of the styrene-based polymer (a-1) constituting the polymer matrix phase is preferably 100,000 to 300,000, more preferably 110,000 to 270,000, and further preferably 120,000 to 250,000. In the case where the weight average molecular weight (Mw) is 100,000 to 300,000, the resin has a better balance of mechanical strength and fluidity with little gel contamination. The weight average molecular weight (Mw) is a value in terms of standard polystyrene obtained using gel permeation chromatography.

In this embodiment, the styrene-based polymer (a-1) or the styrene-based resin composition in this embodiment preferably does not substantially contain vinyl cyanide-based monomers such as acrylonitrile monomer units and methacrylonitrile monomer units. Specifically, the content of the vinyl cyanide-based monomer is preferably 10 mass% or less, more preferably 5 mass% or less, and further preferably 2 mass% or less, with respect to the total content of the styrene-based polymer (a-1) or the polymer matrix.

The content of the styrene-based polymer (a-1) in this embodiment is preferably 65 mass% to 99.88 mass%, more preferably 70 mass% to 99 mass%, further preferably 72 mass% to 98 mass%, even more preferably 74 mass% to 97 mass%, and even more preferably 75 mass% to 95 mass%, with respect to the entire styrene-based resin composition (100 mass%). In another form, a preferable range of the content of the styrene-based polymer (a-1) in this embodiment may be 85 mass% to 99.88 mass%, 87 mass% to 99.5 mass%, 88 mass% to 98 mass%, 89 mass% to 97 mass%, or 90 mass% to 96.5 mass%, with respect to the entire styrene-based resin composition (100 mass%).

- Rubbery polymer -

The styrene-based resin composition in this embodiment may contain rubbery polymer particles (a-2) as part of the rubber-modified styrene-based resin, or contain rubbery polymer particles (a-2) by further blending, in the styrene-based polymer (a-1), rubbery polymer particles (a-2) different from rubbery polymer particles (a-2) contained in the rubber-modified styrene-based resin.

For example, the rubbery polymer particles (a-2) contained in the rubber-modified styrene-based resin in this embodiment may encapsulate the styrene-based polymer (a-1) inside, and/or have the styrene-based polymer (a-1) grafted on the outside. The rubbery polymer particles (a-2) in this embodiment include not only a core-shell structure composed of the styrene-based polymer (a-1) as a core and the rubbery polymer as a shell that encloses the core, but also a salami structure composed of the styrene-based polymer (a-1) as a plurality of cores and the rubbery polymer as a shell that encloses the styrene-based polymer (a-1) as the plurality of cores.

As the material of the rubbery polymer or the rubbery polymer particles (a-2) in this embodiment, for example, polybutadiene, polybutadiene encapsulating polystyrene, polyisoprene, natural rubber, polychloroprene, a styrene-butadiene copolymer, an acrylonitrile-butadiene copolymer, or the like may be used. Polybutadiene or a styrene-butadiene copolymer is preferable. Both high cis polybutadiene having a high cis content and low cis polybutadiene having a low cis content can be used as the polybutadiene. In addition, as the structure of the styrene-butadiene copolymer, both a random structure and a block structure can be used. One or more of these rubbery polymers may be used. A saturated rubber obtained by hydrogenating a butadiene-based rubber may be used.

Examples of such a rubber-modified styrene-based resin include a high impact polystyrene (HIPS), an acrylonitrile-butadiene-styrene copolymer (ABS resin), and an acrylonitrile-ethylene propylene rubber-styrene copolymer (AES resin).

In this embodiment, the content of the rubbery polymer in the rubber-modified styrene-based resin (the content of the rubbery polymer itself (for example, conjugated diene-based polymer such as polybutadiene), not including the styrene-based polymer (a-1) encapsulated in the rubbery polymer particles (a-2)) is preferably 1.0 mass% to 15 mass%, more preferably 1.2 mass% to 12 mass%, further preferably 1.5 mass% to 10 mass%, even more preferably 2.0 mass% to 10 mass%, and even more preferably 3 mass% to 8 mass%, with respect to the total content (100 mass%) of the rubber-modified styrene-based resin. In the case where the content of the rubbery polymer is less than 1.0 mass%, the impact resistance of the entire styrene-based resin composition may decrease. In the case where the content of the rubbery polymer is more than 15 mass%, the fluidity of the entire styrene-based resin composition may decrease.

In the present disclosure, the content of the rubbery polymer in the rubber-modified styrene-based resin is a value calculated using the method described in the EXAMPLES section.

In this embodiment, the content of the rubbery polymer particles (a-2) in the rubber-modified styrene-based resin (including the content of the rubbery polymer itself (for example, conjugated diene-based polymer such as polybutadiene) and the content of the styrene-based polymer (a-1) encapsulated in the rubbery polymer particles (a-2)) is preferably 3 mass% to 36 mass%, more preferably 4 mass% to 30 mass%, further preferably 5 mass% to 28 mass%, even more preferably 6 mass% to 25 mass%, even more preferably 6 mass% to 20 mass%, and even more preferably 8 mass% to 18 mass%, with respect to the entire styrene-based resin composition (100 mass%).

In the case where the injection blow moldability is given importance, the content of the rubbery polymer particles (a-2) (including the content of the rubbery polymer itself (for example, conjugated diene-based polymer such as polybutadiene) and the content of the styrene-based polymer (a-1) encapsulated in the rubbery polymer particles (a-2)) is preferably 10 mass% to 30 mass%, more preferably 11 mass% to 28 mass%, further preferably 12 mass% to 27 mass%, even more preferably 12 mass% to 26 mass%, and even more preferably 13 mass% to 25 mass%, with respect to the entire styrene-based resin composition (100 mass%).

In this embodiment, the content of the rubbery polymer in the rubber-modified styrene-based resin (the content of the rubbery polymer itself (for example, conjugated diene-based polymer such as polybutadiene), not including the styrene-based polymer (a-1) encapsulated in the rubbery polymer particles (a-2)) is preferably 1.0 mass% to 15 mass%, more preferably 1.2 mass% to 12 mass%, further preferably 1.5 mass% to 10 mass%, even more preferably 2 mass% to 10 mass%, and even more preferably 3 mass% to 8 mass%, with respect to 100 mass% of the rubber-modified styrene-based resin. In the case where the content of the rubbery polymer is less than 1.0 mass%, the impact resistance of the entire styrene-based resin composition may decrease. In the case where the content of the rubbery polymer is more than 15 mass%, the fluidity of the entire styrene-based resin composition may decrease.

In the case where the injection blow moldability is given importance, the content of the rubbery polymer in the rubber-modified styrene-based resin (the content of the rubbery polymer itself (for example, conjugated diene-based polymer such as polybutadiene), not including the styrene-based polymer (a-1) encapsulated in the rubbery polymer particles (a-2)) is preferably 2.2 mass% to 9.5 mass%, more preferably 2.4 mass% to 9.0 mass%, further preferably 2.5 mass% to 8.5 mass%, even more preferably 2.6 mass% to 8.0 mass%, even preferably 2.7 mass% to 7.5 mass%, even more preferably 2.8 mass% to 7.0 mass%, and even more preferably 3.1 mass% to 6.5 mass%, with respect to the total content (100 mass%) of the rubber-modified styrene-based resin. In the case where the content of the rubbery polymer is less than 2.2 mass%, the opening portion impact strength of the injection blow molded container may decrease. In the case where the content of the rubbery polymer is more than 9.5 mass%, the buckling strength of the container may decrease.

In the present disclosure, the content of the rubbery polymer in the rubber-modified styrene-based resin is a value calculated using the method described in the EXAMPLES section.

In the present disclosure, the content of the rubbery polymer particles (a-2) in the rubber-modified styrene-based resin is a value calculated using the method described in the EXAMPLES section.

In this embodiment, the average particle diameter of the rubbery polymer particles (a-2) contained in the rubber-modified styrene-based resin is preferably 0.3 $\mu$m to 7.0 $\mu$m, more preferably 0.4 $\mu$m to 5.0 $\mu$m, and further preferably 0.5 $\mu$m to 3.5 $\mu$m. The average particle diameter is preferably 0.8 $\mu$m to 3.5 $\mu$m, and more preferably 0.8 $\mu$m to 3.0 $\mu$m, from the viewpoint of the impact resistance. In the case where the balance of the opening portion impact strength and the buckling strength is given importance, in this embodiment, the lower limit of the average particle diameter of the rubbery polymer particles (a-2) contained in the rubber-modified styrene-based resin is preferably 0.9 $\mu$m, more preferably 1.0 $\mu$m, further preferably 1.1 $\mu$m, even more preferably 1.2 $\mu$m, even more preferably 1.3 $\mu$m, even more preferably 1.4 $\mu$m, and even more preferably 1.5 $\mu$m. The upper limit of the average particle diameter of the rubbery polymer particles (a-2) is preferably 7.0 $\mu$m, more preferably 6.5 $\mu$m, further preferably 6.0 $\mu$m, even more preferably 5.5 $\mu$m, even more preferably 5.0 $\mu$m, and even more preferably 4.5 $\mu$m. A preferable range of the average particle diameter of the rubbery polymer particles (a-2) may be any combination of the upper and lower limits of the average particle diameter.

In the present disclosure, the average particle diameter of the rubbery polymer particles (a-2) contained in the rubber-modified styrene-based resin is a value calculated by the method described in the EXAMPLES section or the following method.

Using a Coulter Multisizer III (trade name) produced by Beckman Coulter Inc. equipped with an aperture tube with a diameter of 30 $\mu$m, 0.05 g of rubber-modified styrene-based resin pellets were placed in about 5 ml of dimethylformamide and allowed to stand for about 2 min to 5 min. Next, the dimethylformamide dissolved content was measured as a moderate particle concentration, and the volume-based median diameter was taken to be the average particle diameter. The method of measuring the average particle diameter of the rubbery polymer particles (a-2) can be used as the method of measuring the average particle diameter of the rubbery polymer particles (a-2) contained in the entire styrene-based resin composition.

In this embodiment, the reduced viscosity of the styrene-based polymer (a-1) contained in the rubber-modified styrene-based resin (which serves as an indicator of the molecular weight of the styrene-based polymer (a-1)) is preferably in the range of 0.50 to 0.85 dL/g, and more preferably in the range of 0.55 to 0.80 dL/g. In the case where the reduced viscosity of the styrene-based polymer (a-1) is less than 0.50 dL/g, the impact strength decreases. In the case where the reduced viscosity is more than 0.85 dL/g, the fluidity decreases.

In the present disclosure, the reduced viscosity of the styrene-based polymer (a-1) is a value measured in a toluene solution at 30 °C with a concentration of 0.5 g/dL.

In this embodiment, in the case where the styrene-based resin (A) is a rubber-modified styrene-based resin (HIPS-based resin), polybutadiene and styrene-butadiene rubber are particularly preferable rubbery polymers. Among these, polybutadiene is most preferable.

- Method of producing rubber-modified styrene-based resin -

In this embodiment, the method of producing the rubber-modified styrene-based resin is not limited. The rubber-modified styrene-based resin can be produced by bulk polymerization (or solution polymerization) in which a styrene-based monomer, an optionally added vinyl-based monomer (i), and an optionally added solvent are polymerized in the presence of a rubbery polymer, or bulk-suspension polymerization in which transition to suspension polymerization is carried out during the reaction, or emulsion graft polymerization in which a styrene-based monomer and an optionally added vinyl-based monomer (i) are polymerized in the presence of a rubbery polymer latex. In the bulk polymerization, a mixed solution in which a rubbery polymer, a styrene-based monomer, an optionally added vinyl-based monomer (i), an optional organic solvent, an organic peroxide, and/or a chain transfer agent are added is continuously fed to a polymerization apparatus in which a complete mixing type reactor or a tank type reactor and a plurality of tank type reactors are connected in series.

In this embodiment, the polymerization method for the styrene-based polymer (a-1), which is the polymer matrix phase of the rubber-modified styrene-based resin, is not limited. For example, a bulk polymerization method or a solution polymerization method can be suitably employed as a radical polymerization method. The polymerization method primarily includes a polymerization step of polymerizing polymerization raw materials (monomer components) and a devolatilization step of removing volatile components such as unreacted monomers and polymerization solvents from the polymerization product.

- Method of producing styrene-based copolymer resin -

In this embodiment, the polymerization method for the styrene-based copolymer resin is not limited, and for example, a bulk polymerization method or a solution polymerization method can be suitably employed as a radical polymerization method. The polymerization method primarily includes a polymerization step of polymerizing polymerization raw materials (monomer components) and a devolatilization step of removing volatile components such as unreacted monomers and polymerization solvents from the polymerization product.

An example of the polymerization method for the styrene-based copolymer resin which can be used in this embodiment will be described below.

When the polymerization raw materials are polymerized to obtain the styrene-based copolymer resin, a polymerization initiator and a chain transfer agent are typically added to a composition of the polymerization raw materials.

Examples of the polymerization initiator used for the polymerization of the styrene-based copolymer resin include organic peroxides, including peroxy ketals such as 2,2-bis(t-butylperoxy)butane, 1,1-bis(t-butylperoxy)cyclohexane (Perhexa C), and n-butyl-4,4-bis(t-butylperoxy)valerate, dialkyl peroxides such as di-t-butyl peroxide (Perbutyl D), t-butylcumyl peroxide, and dicumyl peroxide, diacyl peroxides such as acetyl peroxide and isobutyryl peroxide, peroxydicarbonates such as diisopropyl peroxydicarbonate, peroxy esters such as t-butyl peroxyacetate, ketone peroxides such as acetylacetone peroxide, and hydroperoxides such as t-butyl hydroperoxide. Among these, 1,1-bis(t-butylperoxy)cyclohexane is preferred from the viewpoint of the decomposition rate and the polymerization rate. The polymerization initiator is preferably added in an amount of 0.005 mass% to 0.08 mass% with respect to the total amount of the monomers.

Examples of the chain transfer agent used for the polymerization of the styrene-based copolymer resin include mercaptans such as n-dodecylmercaptan, t-dodecylmercaptan, and n-octylmercaptan, $\alpha$-methylstyrene linear dimer, 1-phenyl-2-fluorene, dipentene, chloroform, terpenes, halogen compounds, and turpentines such as terpinolene. The amount of the chain transfer agent used is not limited, but it is typically preferable to add about 0.005 wt% to 0.3 wt% of the chain transfer agent with respect to the monomers.

The polymerization initiator and the chain transfer agent can be used not only for the production of the styrene-based copolymer resin but also for the production of the rubber-modified styrene-based resin.

An example of the polymerization method for the styrene-based copolymer resin is solution polymerization in which a polymerization solvent is used if necessary. Examples of the polymerization solvent used include aromatic hydrocarbons, e.g. ethylbenzene, and dialkyl ketones, e.g. methyl ethyl ketone, and the like, and one of these may be used alone or two or more of these may be used in combination. Other polymerization solvents, such as an aliphatic hydrocarbon, may be further mixed into the aromatic hydrocarbon to the extent that the solubility of the polymerization product is not reduced. These polymerization solvents are preferably used in an amount not exceeding 25 parts by mass per 100 parts by mass of the sum of the monomers. If the amount of the polymerization solvent is more than 25 parts by mass per 100 parts by mass of the sum of the monomers, the polymerization rate is remarkably lowered and reduction in mechanical strength of the obtained resin tends to be increased. The polymerization solvent is preferably added at a ratio of 5 to 20 parts by mass per 100 parts by mass of the sum of the monomers prior to polymerization for uniformizing the quality and from the viewpoint of controlling the polymerization temperature.

In the present embodiment, an apparatus used in the polymerization step to obtain the styrene-based copolymer resin is not limited, and may be appropriately selected according to a typical styrene-based resin polymerization method. For example, in the case where bulk polymerization is employed, a polymerization apparatus having one completely mixed reactor or a plurality of completely mixed reactors connected to one another may be used. There is no particular limitation on the devolatilization step. In the case where bulk polymerization is employed, polymerization is allowed to take place until the amount of unreacted monomers finally becomes preferably 50 mass% or less, more preferably 40 mass% or less, and devolatilization is performed by a well-known method to remove volatile components including such unreacted monomers. More particularly, conventional devolatilizers, such as flash drums, twin axis devolatilizers, thin film evaporators, and extruders, can be used, but devolatilizers in which the materials reside in fewer portions are preferred. Note that the temperature for the devolatilization is typically about 190 to 280 °C, and more preferably 190 to 260 °C. The pressure for the devolatilization is typically about 0.13 to 4.0 kPa, preferably 0_ 13 to 3.0 kPa, and more preferably 0.13 to 2.0 kPa. Preferred devolatilization methods include a method of removing volatile components through heating under a reduced pressure, and a method of removing through an extruder or the like designed for the purpose of removing volatile components, for example.

"Mode in which the total light transmittance of a 2 mm thick plate is 70 % or more"

A preferred styrene-based resin composition according to the present disclosure contains: a styrene-based resin (A) containing a styrene-based monomer unit; and 0.1 mass% to 15 mass% of a biomass plasticizer (B) having a biomass carbon ratio (pMC%) of 10 % or more, wherein total light transmittance of a 2 mm thick plate is 70 % or more.

In other words, in the case where the total light transmittance of a 2 mm-thick plate of the preferred styrene-based resin composition according to the present disclosure is 70 % or more, the content of rubbery polymer particles (a-2) in the styrene-based resin composition may be less than 3 mass% with respect to the total content (100 mass%) of the styrene-based resin (A).

Thus, diffused reflection by the rubbery polymer particles (a-2) can be suppressed, with it being possible to provide transparency.

Hence, the styrene-based resin (A) in this embodiment is a styrene-based polymer (a-3) containing a styrene-based monomer unit.

<Styrene-based polymer (a-3)>

The styrene-based resin composition in this embodiment contains the styrene-based polymer (a-3) as the styrene-based resin (A). In this embodiment, the content of the styrene-based polymer (a-3) is preferably 85.0 mass% to 99.9 mass%, more preferably 85.0 mass% to 97.0 mass%, and further preferably 90.0 mass% to 97.0 mass%, with respect to the entire styrene-based resin composition (100 mass%). From another viewpoint, the content of the styrene-based polymer (a-3) is preferably 97.0 mass% to 99.9 mass%, and more preferably 97.5 mass% to 99.5 mass%.

The monomer units constituting the styrene-based polymer (a-3) in this embodiment essentially include a styrene-based monomer unit, and may optionally include a vinyl-based monomer unit (ii) copolymerizable with a styrene-based monomer.

Of the monomer units constituting the styrene-based polymer (a-3), the content of the styrene-based monomer unit is preferably 50 mass% to 100 mass%, more preferably 60 mass% to 100 mass%, further preferably 70 mass% to 100 mass%, even more preferably 80 mass% to 100 mass%, and even more preferably 90 mass% to 100 mass%. The content of the styrene-based monomer, i.e. the content of the styrene-based monomer unit, can be determined from the integration ratio of a spectrum measured by a proton nuclear magnetic resonance ($^1$H-NMR) spectrometer. In the case where quantification by $^1$H-NMR measurement is difficult, quantification is performed by infrared spectroscopy (FTIR) measurement.

Examples of the styrene-based monomer include styrene, $\alpha$-methylstyrene, $\alpha$-methyl-p-methylstyrene, o-methylstyrene, m-methylstyrene, p-methylstyrene, vinyltoluene, ethylstyrene, isobutylstyrene, t-butylstyrene or bromostyrene, and styrene derivatives such as indene. Styrene is particularly preferable. One or more of these styrene-based monomers may be used.

In this embodiment, non-limiting examples of the vinyl-based monomer (ii) include methyl (meth)acrylate, ethyl (meth)acrylate, propyl (meth)acrylate, butyl (meth)acrylate, and cyclohexyl (meth)acrylate. These unsaturated carboxylic acid ester monomers may be used singly or in combination of two or more.

In this embodiment, polystyrene refers to a homopolymer obtained through polymerization of a styrene-based monomer, and generally available polystyrenes can be appropriately selected and used. Examples of the styrene monomer constituting polystyrene include styrene, $\alpha$-methylstyrene, $\alpha$-methyl-p-methylstyrene, o-methylstyrene, m-methylstyrene, p-methylstyrene, vinyltoluene, ethylstyrene, isobutylstyrene, t-butylstyrene or bromostyrene, and styrene derivatives such indene. Styrene is particularly preferable from an industrial viewpoint. One or more of these styrene-based monomers may be used. Although the polystyrene may further contain monomer units other than the styrene-based monomer unit as long as the effects according to the present disclosure are not impaired, the polystyrene typically consists of the styrene-based monomer unit.

In this embodiment, it is preferable to control the SP value difference between of the styrene-based polymer (a-3) and the biomass plasticizer (B) having a biomass carbon ratio (pMC%) of 10 % or more to a predetermined range. Hence, for example, the type of the monomer unit constituting the styrene-based polymer (a-3), the content of the styrene-based monomer, or the content of the vinyl-based monomer (ii) may be adjusted according to the SP value of the biomass plasticizer (a-3) used.

This facilitates uniform dispersion of the biomass plasticizer (B) in the composition, with it being possible to further improve the transparency and the mechanical strength.

In this embodiment, the weight average molecular weight (Mw) of the styrene-based polymer (a-3) is preferably 100,000 to 450,000, more preferably 120,000 to 420,000, and further preferably 150,000 to 400,000. In the case where the weight average molecular weight (Mw) is 100,000 to 450,000, the resin has a better balance of mechanical strength and fluidity with little gel contamination. The weight average molecular weight (Mw) is a value in terms of standard polystyrene obtained using gel permeation chromatography.

In the styrene-based polymer (a-3) in this embodiment, the content of a rubbery polymer (for example, polybutadiene, polybutadiene encapsulating polystyrene, polyisoprene, natural rubber, polychloroprene, styrene-butadiene copolymer, acrylonitrile-butadiene copolymer) or a structural unit having a conjugated diene structure is preferably less than 1.0 mass% with respect to the total content (100 mass%) of the styrene-based polymer.

In the mode in which the total light transmittance of a 2 mm thick plate of the styrene-based resin composition in this embodiment is 70 % or more (in the case where the transparency is given importance), the content of toluene insoluble matter (= rubbery polymer particles (a-2)) in the styrene-based resin composition is preferably less than 3 mass%, and more preferably less than 1 mass%. The content of toluene insoluble matter is measured by the method described in the EXAMPLES section below.

In this embodiment, the styrene-based polymer (a-3) or the styrene-based resin composition in this embodiment preferably does not substantially contain vinyl cyanide-based monomers such as acrylonitrile monomer units and methacrylonitrile monomer units. Specifically, the content of the vinyl cyanide-based monomer is preferably 10 mass% or less, more preferably 5 mass% or less, and further preferably 2 mass% or less, with respect to the total content of the styrene-based polymer (a-3).

In this embodiment, the polymerization method for the styrene-based polymer (a-3) is not limited, and may be, for example, the same as the method used for the styrene-based polymer (a-1). For example, a bulk polymerization method or a solution polymerization method can be suitably employed as a radical polymerization method. The polymerization method primarily includes a polymerization step of polymerizing polymerization raw materials (monomer components) and a devolatilization step of removing volatile components such as unreacted monomers and polymerization solvents from the polymerization product.

An example of the polymerization method for the styrene-based polymer (a-3) which can be used in this embodiment will be described below.

When the polymerization raw materials are polymerized to obtain the styrene-based polymer (a-3), a polymerization initiator and a chain transfer agent are typically added to a composition of the polymerization raw materials.

Examples of the polymerization initiator used for the polymerization of the styrene-based polymer (a-3) include organic peroxides, including peroxy ketals such as 1,1-bis(t-butylperoxy)cyclohexane (Perhexa C), 2,2-bis(t-butylperoxy)butane, 2,2-bis(4,4-di-t-butylperoxycyclohexyl)propane (Pertetra A), and n-butyl-4,4-bis(t-butylperoxy)valerate, dialkyl peroxides such as di-t-butyl peroxide, t-butylcumyl peroxide, and dicumyl peroxide, diacyl peroxides such as acetyl peroxide and isobutyryl peroxide, peroxydicarbonates such as diisopropyl peroxydicarbonate, peroxy esters such as t-butyl peroxyacetate, ketone peroxides such as acetylacetone peroxide, and hydroperoxides such as t-butyl hydroperoxide. Among these, 1,1-bis(t-butylperoxy)cyclohexane is preferred from the viewpoint of the decomposition rate and the polymerization rate. The polymerization initiator is preferably added in an amount of 0.005 mass% to 0.08 mass% with respect to the total amount of the monomers.

Examples of the chain transfer agent used for the polymerization of the styrene-based polymer (a-3) include mercaptans such as $\alpha$-methylstyrene linear dimer, n-dodecylmercaptan, t-dodecylmercaptan, 1-phenyl-2-fluorene, dipentene, and chloroform, terpenes, halogen compounds, and turpentines such as terpinolene. The amount of the chain transfer agent used is not limited, but it is typically preferable to add about 0.005 wt% to 0.3 wt% of the chain transfer agent with respect to the monomers.

An example of the polymerization method for the styrene-based polymer (a-3) is solution polymerization in which a polymerization solvent is used if necessary. Examples of the polymerization solvent used include aromatic hydrocarbons, e.g. ethylbenzene, and dialkyl ketones, e.g. methyl ethyl ketone, and the like, and one of these may be used alone or two or more of these may be used in combination. Other polymerization solvents, such as an aliphatic hydrocarbon, may be further mixed into the aromatic hydrocarbon to the extent that the solubility of the polymerization product is not reduced. These polymerization solvents are preferably used in an amount not exceeding 25 parts by mass per 100 parts by mass of the sum of the monomers. If the amount of the polymerization solvent is more than 25 parts by mass per 100 parts by mass of the sum of the monomers, the polymerization rate is remarkably lowered and reduction in mechanical strength of the obtained resin tends to be increased. The polymerization solvent is preferably added at a ratio of 5 to 20 parts by mass per 100 parts by mass of the sum of the monomers prior to polymerization for uniformizing the quality and from the viewpoint of controlling the polymerization temperature.

In the present embodiment, an apparatus used in the polymerization step to obtain the styrene-based polymer (a-3) is not limited, and may be appropriately selected according to a styrene-based resin polymerization method. For example, in the case where bulk polymerization is employed, a polymerization apparatus having one completely mixed reactor or a plurality of completely mixed reactors connected to one another may be used. There is no particular limitation on the devolatilization step. In the case where bulk polymerization is employed, polymerization is allowed to take place until the amount of unreacted monomers finally becomes preferably 50 mass% or less, more preferably 40 mass% or less, and devolatilization is performed by a well-known method to remove volatile components including such unreacted monomers. More particularly, conventional devolatilizers, such as flash drums, twin axis devolatilizers, thin film evaporators, and extruders, can be used, but devolatilizers in which the materials reside in fewer portions are preferred. Note that the temperature for the devolatilization is typically about 190 to 280 °C, and more preferably 190 to 260 °C. The pressure for the devolatilization is typically about 0.13 to 4.0 kPa, preferably 0.13 to 3.0 kPa, and more preferably 0.13 to 2.0 kPa. Preferred devolatilization methods include a method of removing volatile components through heating under a reduced pressure, and a method of removing through an extruder or the like designed for the purpose of removing volatile components, for example.

<Biomass plasticizer (B) (hereafter also referred to as "(B) component")>

The styrene-based resin composition in this embodiment contains a biomass plasticizer (B). The biomass plasticizer (B) has a biomass carbon ratio (pMC%) of 10 % or more. As a result of the biomass carbon ratio (pMC%) being within this range, the amount of fossil fuel used can be reduced, with it being possible to provide a styrene-based resin composition that can reduce environmental load.

In one aspect in this embodiment, the lower limit of the biomass carbon ratio (pMC%) is preferably 10 % or more, more preferably 25 % or more, further preferably 50 % or more, and even more preferably 75 % or more.

In this embodiment, the content of the biomass plasticizer (B) is 0.1 mass% to 15 mass% with respect to the total content (100 mass%) of the styrene-based resin composition. The lower limit of the content of the biomass plasticizer (B) is preferably 0.1 mass% or more, more preferably 1 mass% or more, further preferably 1.5 mass% or more, and even more preferably 2 mass% or more. The upper limit of the content of the biomass plasticizer (B) is preferably 15 mass% or less, more preferably 14 mass% or less, further preferably 13 mass% or less, even more preferably 12 mass% or less, even more 11 mass%, even more preferably 10 mass% or less, even more preferably 9 mass% or less, even more preferably 8 mass% or less, even more preferably 7 mass% or less, and particularly preferably 6 mass% or less. In another form, regarding the lower limit of the content of the biomass plasticizer (B), the content is preferably 0.3 mass% or more, 0.7 mass% or more, 0.9 mass% or more, 1.1 mass% or more, 1.2 mass% or more, 1.3 mass% or more, 1.4 mass% or more, 1.5 mass% or more, 1.7 mass% or more, 1.9 mass% or more, 2.3 mass% or more, 2.4 mass% or more, 2.5 mass% or more, 2.7 mass% or more, 2.9 mass% or more, 3.3 mass% or more, 3.4 mass% or more, or 3.5 mass% or more.

If the content of the biomass plasticizer (B) is excessively high, volatile components increase, so that mold staining increases. If the content of the biomass plasticizer (B) is more than 15 %, bleed-out tends to occur. If the content of the biomass plasticizer (B) is excessively low, the fluidity decreases, so that the molding temperature rises. Consequently, longer cooling time is required, and the productivity tends to decrease.

Especially in the case where the styrene-based resin composition is used as a transparent styrene-based resin composition for sheets (for example, the total light transmittance of a 2 mm thick plate of the styrene-based resin composition is 70 % or more in order to ensure transparency), from the viewpoint of the sheet appearance, the content of the biomass plasticizer (B) is 0.1 mass% or more and less than 3.0 mass%, preferably 0.1 mass% to 2.5 mass%, more preferably 0.2 mass% to 2.2 mass%, further preferably 0.3 mass% to 2.0 mass%, and even more preferably 0.3 mass% to 1.7 mass%, with respect to the entire styrene-based resin composition. If the content of the biomass plasticizer (B) is 3 mass% or more, the Vicat softening temperature is less than 90 °C, which is not suitable for stretched sheet applications and food packaging applications. If the content of the biomass plasticizer is less than 0.1 mass%, the fluidity decreases, and thus the thickness unevenness during molding may worsen. A decrease in fluidity can also lead to lower productivity. Hence, in the case where it is important that the styrene-based resin composition in this embodiment maintains high mechanical strength and also exhibits moldability to biaxially stretched sheets and excellent sheet appearance and excellent transparency, a preferred example of the styrene-based resin composition in this embodiment may be a styrene-based resin composition containing: the styrene-based polymer (a-3); and 0.1 mass% or more and less than 3.0 mass% of the biomass plasticizer (B) having a biomass carbon ratio (pMC%) of 10 % or more, wherein the Vicat softening temperature is 90 °C or more, and the total light transmittance of a 2 mm thick plate is 70 % or more.

On the other hand, in the case where the styrene-based resin composition is used as a transparent styrene-based resin composition for injection molding (for example, the total light transmittance of a 2 mm thick plate of the styrene-based resin composition is 70 % or more in order to ensure transparency), from the viewpoint of preventing mold staining, the content of the biomass plasticizer (B) is preferably 3.0 mass% to 15 mass% with respect to the total content (100 mass%) of the styrene-based resin composition. Regarding the upper limit of the content of the biomass plasticizer (B), the content is preferably 15 mass% or less, more preferably 14 mass% or less, further preferably 13 mass% or less, even more preferably 12 mass% or less, even more preferably 11 mass% or less, even more preferably 10 mass% or less, even more preferably 9 mass% or less, and even more preferably 7 mass% or less. If the content of the biomass plasticizer (B) is excessively high, volatile components increase, so that mold staining increases. If the content of the biomass plasticizer (B) is more than 15 %, bleed-out tends to occur. If the content of the biomass plasticizer (B) is excessively low, the fluidity decreases, so that short shots are likely to occur during injection molding, causing a decrease in injection moldability. Hence, in the case where it is important that the styrene-based resin composition in this embodiment causes little mold staining during molding and exhibits high fluidity, high mechanical strength, and excellent transparency, a preferred example of the styrene-based resin composition in this embodiment may be a styrene-based resin composition containing: the styrene-based polymer (a-3); and 3.0 mass% to 15 mass% of the biomass plasticizer (B) having a biomass carbon ratio (pMC%) of 10 % or more, wherein the total light transmittance of a 2 mm thick plate is 70 % or more.

The biomass plasticizer (B) is preferably uniformly dispersed in the styrene-based resin composition. More specifically, for example, the biomass plasticizer (B) is preferably not an external lubricant (for example, a lubricant insoluble in polymer melts) that forms a single layer of the biomass plasticizer (B) on the surface of the styrene-based resin composition. Examples of the method for uniformly dispersing the biomass plasticizer (B) in the styrene-based resin composition include a method that kneads the rubber-modified styrene-based resin and the biomass plasticizer (B) with an extruder, and a method that polymerizes the polymerization raw materials in a state in which the biomass plasticizer (B) is contained in the polymerization raw material composition.

The biomass carbon ratio (pMC%) in this specification indicates the carbon concentration (mass ratio) of the biomass-derived component, and more specifically is the value of $^{14}C$ content obtained by the radiocarbon ($^{14}C$) measurement method in accordance with ASTM-D6866. The radiocarbon ($^{14}C$) measurement method is a method that estimates the biomass carbon ratio (pMC%) from the $^{14}C$ ratio in the carbon contained in biomass materials (or organisms) utilizing the fact that fossil fuels do not contain $^{14}C$ and biomass (or organism)-derived carbon absorbs $^{14}C$ in the atmosphere during the growth period.

Thus, by measuring the ratio of $^{14}C$ contained in the total carbon atoms in the plasticizer in this embodiment, the ratio of biomass-derived carbon can be calculated. In the present disclosure, the biomass carbon ratio (pMC%) is calculated by the following Formula (1) using the method described in the EXAMPLES section below.

$$\text{Formula (1): biomass carbon ratio (pMC\%)} = (^{14}C \text{ plasticizer}/^{12}C \text{ plasticizer})/(^{14}C \text{ standard substance}/^{12}C \text{ standard substance}) \times 100.$$

Oxalic acid (SRM4990) is used as the standard substance, and ($^{14}C$ plasticizer/$^{12}C$ plasticizer)/($^{14}C$ standard substance/$^{12}C$ standard substance) is calculated by the AMS method.

The weight average molecular weight (Mw) of the biomass plasticizer (B) in this embodiment is preferably 200 to 7500, more preferably 300 to 5000, and further preferably 400 to 3000. In the case where the weight average molecular weight (Mw) of the biomass plasticizer (B) is 200 to 7500, the styrene-based resin composition has a better balance of mechanical strength and fluidity with little gel contamination. The weight average molecular weight (Mw) is a value in terms of standard polystyrene obtained using gel permeation chromatography, as described in the EXAMPLES section below.

The biomass plasticizer (B) in this embodiment refers to a plasticizer that uses a biomass material as part or all of the raw material and that has a biomass carbon ratio (pMC%) of 10 % or more. The biomass plasticizer (B) in this embodiment is a plasticizer that uses a plant-derived biomass material as at least part of the raw material and has a biomass carbon ratio (pMC%) of 10 % or more. The biomass plasticizer (B) is preferably vegetable oil, a mixture of vegetable oil and mineral oil, or a polyester-based plasticizer, and more preferably natural vegetable oil, modified vegetable oil, a mixture of natural vegetable oil and mineral oil, a mixture of modified vegetable oil and mineral oil, a mixture of natural vegetable oil, modified vegetable oil, and mineral oil, or a polyester-based plasticizer.

The term "vegetable oil" in this specification is a general term for plant-derived fats and oils, and includes natural vegetable oils and modified vegetable oils.

In this embodiment, modified vegetable oil may be used as the biomass plasticizer (B). The modified vegetable oil refers to a compound made from vegetable oil. More specifically, the modified vegetable oil is obtained as a result of part of plant-derived hydrocarbon oil being modified with a functional group. It is preferable that vegetable oil is modified with an epoxy group, an amino group, or an ester bond. Examples of the vegetable oil include triesters of glycerin and fatty acids, fatty acid monoesters obtained by addition of monoalcohol to vegetable oil and transesterification, fatty acid monoesters obtained by esterification of fatty acids and monoalcohols, and ethers derived from fatty acids.

It is preferable that the modifying group (functional group of epoxy group, amino group, or ester bond) of the modified vegetable oil in this embodiment does not substantially polymerize with other components (including styrene-based resin (A)) or modified vegetable oils in the styrene-based resin composition. In this embodiment, it is preferable that the modified vegetable oil has a modification rate of 1 mmol % to 50 mmol % per 1 g of the modified vegetable oil.

The modification rate of the modified vegetable oil is calculated by the $^1H$-NMR measurement method as described in the EXAMPLES section below.

Specific examples of the natural vegetable oil include cottonseed oil, paulownia oil, shea oil, alfalfa oil, poppy oil, pumpkin oil, winter squash oil, millet oil, barley oil, quinoa oil, rye oil, kukui oil, passionflower oil, shea butter, aloe vera oil, sweet almond oil, peach kernel oil, soybean oil, cashew oil, peanut oil, avocado oil, baobab oil, borage oil, broccoli oil, calendula oil, camellia oil, canola oil, carrot oil, safflower oil, flax oil, rapeseed oil, cottonseed oil, coconut oil, pumpkin seed oil, wheat germ oil, jojoba oil, lily oil, macadamia oil, corn oil, meadowfoam oil, monoi oil, hazelnut oil, apricot kernel oil, walnut oil, olive oil, evening primrose oil, palm oil, blackcurrant seed oil, kiwi seed oil, grape seed oil, pistachio oil, musk rose oil, sesame oil, soybean oil, sunflower oil, castor oil, watermelon oil, and mixtures of these oils.

Examples of the modified vegetable oil in this embodiment include oils obtained by hydrogenating the foregoing natural vegetable oils (for example, hydrogenated castor oil), oils obtained by epoxidizing the foregoing natural vegetable oils (for example, modified epoxidized oil), and oils obtained by aminating the foregoing natural vegetable oils (for example, modified aminated oil). Examples of the modified epoxidized oil include oils with ring-opened epoxy functional groups typified by hydroxylated soybean oil, oils that have been directly hydroxylated in advance, and cashew oil-based polyols.

Specific examples of the biomass plasticizer (B) in this embodiment include palm oil, epoxidized soybean oil, epoxidized linseed oil, hydrogenated castor oil, polyoxyethylenated castor oil, polyoxyethylenated hydrogenated castor oil, oleate, and laurate. Examples include "Polycizer W-1810-BIO" and "Epocizer" produced by DIC Corporation, "Newcizer 510R" and "Newcizer 512" produced by NOF Corporation, "Pionin D series" produced by Takemoto Oil & Fat Co., Ltd., "Multi Ace 20(S)" and "Refined Palm Oil (S)" produced by Nisshin OilliO Group, Ltd., and "Hardened Castor Oil" produced by Itoh Oil Chemicals Co., Ltd.

In this embodiment, the viscosity of the vegetable oil (including natural vegetable oil and modified vegetable oil) is preferably 1000 mPa-s or less, more preferably 20 to 1000 mPa-s, further preferably 50 to 1000 mPa-s, and even more preferably 100 to 800 mPa-s at 25 °C.

The biomass plasticizer (B) in this embodiment may be a modified vegetable oil modified with an epoxy group, an amino group, or an ester bond. In this case, it is preferable that the modifying group (functional group of epoxy group, amino group, or ester bond) in the biomass plasticizer (B) in this embodiment does not substantially polymerize with other components (including styrene-based resin (A)) or modified vegetable oils in the styrene-based resin composition.

The melting point of the biomass plasticizer (B) in this embodiment is preferably -30 °C to 80 °C, more preferably 25 °C to 77 °C, further preferably 22 °C to 74 °C, even more preferably 18 °C to 70 °C, even more preferably 15 °C to 67 °C, even more preferably 10 °C to 64 °C, even more preferably 8 °C to 61 °C, even more preferably 5 °C to 58 °C, even more preferably 3 °C to 55 °C, and particularly preferably 1 °C to 52 °C. If the melting point of the biomass plasticizer (B) is more than 80 °C, the biomass plasticizer (B) is hard to melt in the styrene-based resin (A), making the addition or mixing operation difficult. If the melting point of the biomass plasticizer (B) is less than -30 °C, it is necessary to use a compound containing many unsaturated bonds, as the type of biomass plasticizer (B) that can be used. Such a material is prone to oxidative degradation and degradation in physical properties. Typically, all double bonds in natural vegetable oils are cis-type. Accordingly, when there are more double bonds, it is more likely that the intermolecular force decreases and the melting point decreases.

In this embodiment, the difference between the SP value of the styrene-based polymer (a-1) and the SP value of the biomass plasticizer (B) ($(cal/cm^3)^{1/2}$) is preferably less than $\pm2.5$, more preferably less than 2.4, further preferably less than $\pm2.3$, even more preferably less than 2.2, even more preferably less than 2.1, even more preferably less than 2.0, even more preferably less than 1.9, even more preferably less than 1.8, even more preferably less than 1.7, even more preferably less than 1.6, even more preferably less than 1.5, even more preferably less than 1.4, even more preferably less than 1.3, even more preferably less than 1.2, even more preferably less than $\pm1.1$, even more preferably less than $\pm1.0$, even more preferably less than $\pm0.9$, and even more preferably less than $\pm0.8$.

If the difference between the SP value of the styrene-based polymer (a-1) and the SP value of the biomass plasticizer (B) is $\pm2.5$ or more, they are incompatible. Consequently, the biomass plasticizer (B) cannot be uniformly dispersed in the styrene-based resin composition, and the mechanical strength of the entire styrene-based resin composition tends to decrease.

Likewise, in this embodiment, the difference between the SP value of the styrene-based polymer (a-3) and the SP value of the biomass plasticizer (B) ($(cal/cm^3)^{1/2}$) is less than $\pm2.5$, preferably less than 2.4, more preferably less than $\pm2.3$, further preferably less than 2.2, even more preferably less than 2.1, even more preferably less than 2.0, even more preferably less than 1.9, even more preferably less than 1.8, even more preferably less than 1.7, even more preferably less than 1.6, even more preferably less than 1.5, even more preferably less than 1.4, even more preferably less than 1.3, even more preferably less than 1.2, even more preferably less than $\pm1.1$, even more preferably less than $\pm1.0$, even more preferably less than $\pm0.9$, and even more preferably less than $\pm0.8$.

If the difference between the SP value of the styrene-based polymer (a-3) and the SP value of the biomass plasticizer (B) is $\pm2.5$ or more, they are incompatible. Consequently, the biomass plasticizer (B) cannot be uniformly dispersed in the styrene-based resin composition, and the mechanical strength of the entire styrene-based resin composition and the total light transmittance of the molded article tend to decrease.

The SP value of the styrene-based polymer (a-1) in this embodiment is preferably 7 to 11 ($(cal/cm^3)^{1/2}$), more preferably 7.5 to 10.5 ($(cal/cm^3)^{1/2}$), further preferably 7.8 to 10.2 ($(cal/cm^3)^{1/2}$), even more preferably 8.0 to 10.0 ($(cal/cm^3)^{1/2}$), even more preferably 8.0 to 9.8 ($(cal/cm^3)^{1/2}$), even more preferably 8.0 to 9.6 ($(cal/cm^3)^{1/2}$), even more preferably 8.0 to 9.4 ($(cal/cm^3)^{1/2}$), even more preferably 8.0 to 9.2 ($(cal/cm^3)^{1/2}$), and even more preferably 8.0 to 9.0 ($(cal/cm^3)^{1/2}$).

The SP value of the styrene-based polymer (a-3) in this embodiment is preferably 7 to 11 ($(cal/cm^3)^{1/2}$), more preferably 7.5 to 10.5 ($(cal/cm^3)^{1/2}$), further preferably 7.8 to 10.2 ($(cal/cm^3)^{1/2}$), even more preferably 8.0 to 10.0 ($(cal/cm^3)^{1/2}$), even more preferably 8.0 to 9.8 ($(cal/cm^3)^{1/2}$), even more preferably 8.0 to 9.6 ($(cal/cm^3)^{1/2}$), even more preferably 8.0 to 9.4 ($(cal/cm^3)^{1/2}$), even more preferably 8.0 to 9.2 ($(cal/cm^3)^{1/2}$), and even more preferably 8.0 to 9.0

$((cal/cm^3)^{1/2})$.

Regarding the lower limit of the SP value of the biomass plasticizer (B) in this embodiment, the SP value is preferably 7.4 $((cal/cm^3)^{1/2})$ or more, more preferably 7.5 $((cal/cm^3)^{1/2})$ or more, further preferably 7.6 $((cal/cm^3)^{1/2})$, even more preferably 7.7 $((cal/cm^3)^{1/2})$ or more, and even more preferably 7.8 $((cal/cm^3)^{1/2})$ or more. Regarding the upper limit of the SP value of the biomass plasticizer (B) in this embodiment, the SP value is preferably 10.5 $((cal/cm^3)$ or less, more preferably 10.4 $((cal/cm^3)$ or less, further preferably 10.3 $((cal/cm^3)$ or less, even more preferably 10.2 $((cal/cm^3)^{1/2})$ or less, even more preferably 10.1 $((cal/cm^3)^{1/2})$ or less, even more preferably 10.0 $((cal/cm^3)^{1/2})$ or less, even more preferably 9.8 $((cal/cm^3)^{1/2})$ or less, even more preferably 9.6 $((cal/cm^3)^{1/2})$ or less, even more preferably 9.4 $((cal/cm^3)^{1/2})$ or less, even more preferably 9.2 $((cal/cm^3)$ or less, even more preferably 9.0 $((cal/cm^3)$ or less, and even more preferably 8.8 $((cal/cm^3)^{1/2})$ or less. A preferable range of the SP value of each of the styrene-based polymer (a-1), the styrene-based polymer (a-3), and the biomass plasticizer (B) may be any combination of the upper and lower limits of the SP value.

The solubility parameter (SP value) defined in this embodiment is calculated using the function of cohesive energy density expressed by the following formula:

$$ \text{SP value } ((cal/cm^3)^{1/2}) = (\Delta E/V)^{1/2} \qquad \text{... Formula (2)} $$

(where $\Delta E$ denotes the intermolecular cohesive energy (evaporation heat), V denotes the total volume of the liquid mixture, and $\Delta E/V$ denotes the cohesive energy density.)

The heat quantity change $\Delta Hm$ due to mixing is expressed by the following formula using SP values:

$$ \Delta Hm = V(\delta_1 - \delta_2) \cdot \Phi 1 \cdot \Phi 2 \qquad \text{... Formula (3)} $$

(where $\delta 1$ denotes the SP value of the solvent, $\delta 2$ denotes the SP value of the solute, $\Phi 1$ denotes the volume fraction of the solvent, and $\Phi 2$ denotes the volume fraction of the solute.)

From Formulas (2) and (3), when $\delta 1$ and $\delta 2$ are closer, $\Delta Hm$ is smaller, and the Gimms free energy is smaller. Thus, the affinity is higher when the difference in SP value is smaller.

As the method of obtaining the SP value in this specification, by comparing the solubility of the resin with various solvents with known SP values, the SP value of the resin whose SP value is unknown is calculated from the SP value of the solvent with which the resin is most compatible. Specifically, the SP value is calculated using the turbidity titration method described in the EXAMPLES section. In this embodiment, the value calculated from the monomer composition is mainly used.

If the biomass plasticizer (B) in this embodiment has a high boiling point, the amount of gas generated during molding decreases, which is advantageous in mold staining reduction. Accordingly, the biomass plasticizer (B) preferably has a relatively high boiling point (for example, more than or equal to 260 °C which is injection blow molding temperature). In the case where the SP value of the biomass plasticizer (B) is within the foregoing range, the intermolecular cohesive energy, i.e. the evaporation heat, can be controlled within a predetermined range, so that the boiling point tends to be high enough to reduce the amount of gas generated during molding.

In this embodiment, examples of the mineral oil include atmospheric residues obtained by atmospheric distillation of paraffinic crude oil (including liquid paraffin), intermediate crude oil, naphthenic crude oil, etc.; distillates obtained by vacuum distillation of these atmospheric residues; mineral oils obtained by subjecting the distillates to one or more refining treatments such as solvent deasphalting, solvent extraction, hydrocracking, solvent dewaxing, catalytic dewaxing, and hydrorefining; and mineral oils obtained by isomerizing wax (GTL wax) produced by the Fischer-Tropsch process. These mineral oils may be used singly or in combination of two or more.

In this embodiment, in the case where a mixture of vegetable oil and mineral oil is used as the biomass plasticizer (B), the mixing ratio is not limited as long as the biomass carbon ratio (pMC%) of the entire biomass plasticizer (B) is 10 % or more. For example, it is preferable to mix 10 to 100 parts by mass of mineral oil and more preferable to mix 10 to 50 parts by mass of mineral oil with respect to 100 parts by mass of vegetable oil.

In this embodiment, in the case where a mixture of vegetable oil and mineral oil is used as the biomass plasticizer (B), the mixing ratio is not limited as long as the biomass carbon ratio (pMC%) of the entire biomass plasticizer (B) is 10 % or more.

<Higher fatty acid compound (C) (hereafter also referred to as "(C) component")>

The styrene-based resin composition in this embodiment may optionally contain 0.02 mass% to 2.5 mass% of a higher fatty acid compound (C) with respect to the entire styrene-based resin composition. The higher fatty acid compound (C) acts as a release agent, and may be one or more selected from the group consisting of higher fatty acids and metal salts of higher fatty acids. The content of the higher fatty acid compound (C) is preferably 0.04 mass% to 2 mass%, more preferably 0.06 mass% to 1.7 mass%, further preferably 0.08 mass% to 1.4 mass%, and even more preferably 0.1 mass% to 1.0 mass%, with respect to the entire styrene-based resin composition.

If the content of the higher fatty acid compound (C) is 0.02 mass% or less, the releasability is poor and the productivity decreases, which is undesirable. If the content of the higher fatty acid compound (C) is more than 2.5 mass%, the releasability is not improved any more, and problems such as discoloration of the resin, burning or charring of the molded article, and worsening of mold staining due to decomposition and degradation of the higher fatty acid may arise.

In the case where the injection blow moldability is given importance, the styrene-based resin composition in this embodiment preferably contains a rubber-modified styrene-based resin as the styrene-based resin (A), the biomass plasticizer (B) having a biomass carbon ratio (pMC%) of 10 % or more, and the higher fatty acid compound (C). In this case, the rubber-modified styrene-based resin may contain the styrene-based polymer (a-1) and the rubbery polymer particles (a-2) with an average particle diameter of 0.9 $\mu$m to 7.0 $\mu$m. The content of the rubbery polymer particles (a-2) may be 10 mass% to 30 mass%, the content of the biomass plasticizer (B) may be 0.1 mass% to 15 mass%, and the content of the higher fatty acid compound (C) may be 0.02 mass% to 2.5 mass%, with respect to the entire styrene-based resin composition (100 mass%).

The "higher fatty acid" is a saturated linear carboxylic acid having 12 to 22 carbon atoms, and examples thereof include stearic acid, lauric acid, myristic acid, palmitic acid, and behenic acid. The "metal salt of a higher fatty acid" is a metal salt of a saturated linear carboxylic acid having 12 to 22 carbon atoms. Examples of the metal include zinc, calcium, magnesium, aluminum, barium, lead, lithium, potassium, and sodium. In the case where a higher fatty acid and a higher fatty acid salt are used together as the higher fatty acid compound (C), the total content of the higher fatty acid and the higher fatty acid salt is in the range of 0.02 mass% to 2.5 mass%. These higher fatty acids or higher fatty acid salts may be used singly or as a mixture of two or more.

The higher fatty acid compound (C) can also be used as a release agent together with polyethylene glycol, fatty acid alcohol, and silicone-based additives.

<Optional additive components >

The styrene-based resin composition in this embodiment may optionally contain, in addition to the foregoing components (A) and (B) and optional (C) component, optional additive components such as known additives and processing aids within the range that does not impair the effects of the present disclosure. Examples of the optional additive components include release agents, flame retardants, dispersants, antioxidants, weathering agents, antistatic agents, fillers, anti-blocking agents, coloring agents, anti-blooming agents, surface treatment agents, antimicrobial agents, and die-drool prevention agents (a die-drool prevention agent such as a monoester compound produced by reacting a silicone oil, a monoamide compound of a higher aliphatic carboxylic acid, and a higher aliphatic carboxylic acid with a univalent to trivalent alcoholic compound described in JP 2009-120717 A).

In this embodiment, the styrene-based resin composition may contain known flame retardants (halogen-based flame retardants such as bromine-based flame retardants and phosphorus-based flame retardants). Given the risk of generation of gas such as hydrogen bromide due to reaction with the biomass plasticizer (B) contained in the styrene-based resin composition, the content of the halogen-based flame retardant is preferably less than 3 mass% and more preferably less than 1 mass%, with respect to the total content (100 mass%) of the styrene-based resin composition.

The styrene-based resin composition in this embodiment preferably does not contain metal elements except for inevitable impurities. More specifically, the content of metal elements is preferably less than 3 mass%, more preferably less than 1 mass%, and further preferably less than 0.5 mass%, with respect to the total content (100 mass%) of the styrene-based resin composition. If the styrene-based resin composition contains metal elements, particularly metal particles, not only the mold used during molding is damaged, but also a metal powder of the mold is likely to be mixed into the styrene-based resin composition.

The metal elements herein are elements of groups 2 to 12 of the periodic table, group 1 other than hydrogen atoms, group 13 other than boron atoms, and Ge, As, Sn, Pb, As, Sb, Bi, Se, Te, Po and At elements. These metal elements may be used singly or in the form of an alloy or mixture of two or more.

In this embodiment, examples of the dispersants that can be used include fatty acid ester compounds, polyethylene glycol compounds, terpene compounds, rosin compounds, fatty acid amides, fatty acid compounds, and fatty acid metal salts.

Examples of the release agents that can be used include a fatty acid compounds and fatty acid metal salts.

Examples of the antioxidants include phenolic compounds, phosphorous compounds, and thioether compounds.

The total content of the optional additive components may be 0.05 mass% to 5 mass% with respect to the entire styrene-based resin composition.

The styrene-based resin composition in this embodiment may consist substantially only of the (A) component, the (B) component, and the optional additive components. The styrene-based resin composition in this embodiment may consist only of the (A) component and the (B) component, or consist only of the (A) component, the (B) component, and the optional additive components. The styrene-based resin composition in this embodiment may consist substantially only of the (A) component, the (B) component, the (C) component, and the optional additive components. The styrene-based resin composition in this embodiment may consist only of the (A) component, the (B) component, and the (C) component, or consist only of the (A) component, the (B) component, the (C) component, and the optional additive components. The expression "consisting substantially only of the (A) component, the (B) component, and the optional additive components" means that preferably 85 mass% to 100 mass%, more preferably 90 mass% to 100 mass%, further preferably 95 mass% to 100 mass%, and even more preferably 98 mass% to 100 mass% with respect to the total content of the styrene-based resin composition are the (A) component and the (B) component, or the (A) component, the (B) component, and the optional additive components.

The expression "consisting substantially only of the (A) component, the (B) component, the (C) component, and the optional additive components" means that preferably 85 mass% to 100 mass%, more preferably 90 mass% to 100 mass%, further preferably 95 mass% to 100 mass%, and even more preferably 98 mass% to 100 mass% with respect to the total content of the styrene-based resin composition are the (A) component, the (B) component, and the (C) component, or the (A) component, the (B) component, the (C) component, and the optional additive components.

The styrene-based resin composition in this embodiment may contain inevitable impurities other than the (A) component, the (B) component, the (C) component, and the optional additive components within the range that does not impair the effects of the present disclosure.

In the case where modified vegetable oil is used as the biomass plasticizer (B) contained in the styrene-based resin composition in this embodiment, the content of hydroxyl group-containing compounds is preferably less than 3 mass% and more preferably less than 1 mass% with respect to the total amount (100 mass%) of the styrene-based resin composition. The hydroxyl group-containing compounds in this embodiment are compounds having hydroxyl groups in polymers, such as (meth)acrylic acid, maleic acid, and phthalic acid. If the content of hydroxyl group-containing compounds is 3 mass% or more, they react with the modified vegetable oil to cause gelation. This has adverse effects such as a decrease in moldability and worsening of the appearance of the injection molded article. In the case where natural vegetable oil is used as the biomass plasticizer contained in the styrene-based resin composition, the content of hydroxyl group-containing compounds is not limited.

Physical properties of styrene-based resin composition

Preferred physical properties of each preferred form of the styrene-based resin composition in this embodiment will be described below.

<Total light transmittance (%)>

In the case where the transparency of the styrene-based resin composition in this embodiment is given importance, that is, in the case where the content of the rubbery polymer particles (a-2) in the styrene-based resin composition is less than 3 mass%, the total light transmittance (%) of the styrene-based resin composition is preferably 70 % or more, more preferably 75 % or more, further preferably 80 % or more, and even more preferably 85 % or more. If the total light transmittance (%) of the styrene-based resin composition is 80 % or more, for example, the content of the rubbery polymer particles (for example, the rubbery polymer particles (a-2)) in the styrene-based resin composition can be less than 3 mass% with respect to the entire styrene-based resin composition, or the styrene-based resin composition is usable for transparent food containers, packaging materials, or OA equipment applications where transparency is required.

Moreover, for example by using specific vegetable oil such as palm oil, epoxidized soybean oil, epoxidized linseed oil, polyoxyethylenated castor oil, oleate, or laurate as the biomass plasticizer (B) in this embodiment or by setting the SP value of the biomass plasticizer (B) in this embodiment to less than 10, the blend state in the composition changes, so that the total light transmittance (%) of the styrene-based resin composition can be adjusted to a desired value (for example, 70 % or more).

A specific method of preparing a test piece used for measuring the total light transmittance (%) of the styrene-based resin composition conforms to K7361-1, and it has been confirmed that the test piece is free of defects such as scratches, bubbles, and bumps, adhesion of dust and grease, and adhesion of adhesive from protective material. The surface of the test piece is supposed to be free of voids and particles visible to the naked eye. When preparing the test piece by injection molding, mirror polishing may optionally be performed using abrasive paper, stick whetstone, free abrasive grains, etc. as appropriate depending on the condition of the surface of the mold to be used.

The method of measuring the total light transmittance (%) and the method of preparing a test piece used for the method of measuring the total light transmittance (%) in the present disclosure are as described in the EXAMPLES section below.

<Melt flow rate (MFR)>

The melt flow rate (measured under the conditions of 200 °C and 49 N load) of the styrene-based resin composition in this embodiment is preferably 1.5 g/10 min or more, and more preferably 2.0 g/10 min or more. If the melt flow rate is less than 1.5 g/10 min, the fluidity is low, and the working temperature needs to be increased.

Particularly in the case where not only environmental load reduction and excellent mechanical strength but also excellent molding cycle and mold staining reduction during injection molding are given importance, the melt mass flow rate (measured under the conditions of 200 °C and 49 N load) of the styrene-based resin composition in this embodiment is preferably 10 to 80 (g/10 min), more preferably 13 to 60 (g/10 min), further preferably 15 to 50 (g/10 min), and even more preferably 15 to 35 (g/10 min). A styrene-based resin composition that reduces environmental load, has high mechanical strength and excellent molding cycle in a well-balanced manner, and causes little mold staining during injection molding can thus be provided. If the MFR of the styrene-based resin composition is less than 10, the fluidity decreases and the appropriate molding temperature is higher, so that the cooling time tends to be longer. To set the MFR of the styrene-based resin composition to more than 80, a large amount of plasticizer is needed, causing a decrease in heat resistance. When the heat resistance decreases, the solidification temperature decreases, so that the cooling time tends to be longer. If the molding temperature can be lowered, it is possible to shorten the cooling time and improve the molding cycle. As a result of the melt mass flow rate of the styrene-based resin composition in this embodiment being within the foregoing range, the fluidity of the composition as a whole can be maintained at a high level, and thus mold staining during molding can be reduced.

In the case where the total light transmittance of a 2 mm thick plate of the styrene-based resin composition in this embodiment is 70 % or more and the styrene-based resin composition is used mainly for sheets such as biaxially stretched sheets, from the viewpoint of the sheet moldability or the sheet appearance, the melt mass flow rate (measured under the conditions of 200 °C and 49 N load) of the styrene-based resin composition in this embodiment is preferably 1.0 to 7.0 g/10 min, more preferably 1.5 to 6.0 g/10 min, further preferably 1.8 to 5.0 g/10 min, and even more preferably 2.0 to 4.5 g/10 min. If the MFR is less than 1.0, the sheet productivity decreases. Moreover, the sheet thickness is likely to be uneven. To set the MFR to more than 7.0, the molecular weight of the resin needs to be lowered, or the amount of plasticizer needs to be increased. If the molecular weight of the resin decreases, the mechanical strength may decrease. If the amount of plasticizer increases, the Vicat softening temperature decreases, which may make it difficult to ensure the required heat resistance.

In the case where the total light transmittance of a 2 mm thick plate of the styrene-based resin composition in this embodiment is 70 % or more and the styrene-based resin composition is used mainly for injection molded articles, from the viewpoint of mold staining reduction, the melt mass flow rate (measured under the conditions of 200 °C and 49 N load) of the styrene-based resin composition in this embodiment is 3.0 to 60 (g/10 min), preferably 3.5 to 50 (g/10 min), more preferably 4.0 to 40 (g/10 min), and further preferably 4.5 to 35 (g/10 min). If the MFR of the styrene-based resin composition is less than 3.0, the fluidity decreases, so that short shots are likely to occur during injection molding, causing a decrease in injection moldability. To set the MFR of the styrene-based resin composition to more than 60, a large amount of plasticizer is needed, so that volatile components during injection molding increase. This is likely to worsen mold staining.

In the case where injection blow molding is taken into consideration, the melt mass flow rate (measured under the conditions of 200 °C and 49 N load) of the styrene-based resin composition in this embodiment is 3.0 to 13.0, preferably 3.3 to 11.5, more preferably 3.5 to 10.0, and further preferably 4.0 to 9.5. If the melt mass flow rate is less than 3.0, the fluidity is poor, and insufficient filling tends to occur during molding. Increasing the molding temperature and the core temperature enables molding, but the release balance is lost, and the thickness tends to be uneven, making it impossible to obtain a good product. If the melt mass flow rate is more than 13.0, a defective phenomenon called stringing tends to occur between the injection mold and the parison, hindering continuous molding.

The melt mass flow rate in the present disclosure is a value measured under the conditions of a temperature of 200 °C and a load of 49 N in accordance with ISO 1133.

<Vicat softening temperature>

The Vicat softening temperature of the styrene-based resin composition in this embodiment is preferably 50 °C to 100 °C, more preferably 55 °C to 98 °C, further preferably 60 °C to 97 °C, even more preferably 63 °C to 96 °C, and even more preferably 65 °C to 95 °C.

Particularly in the case where not only environmental load reduction and excellent mechanical strength but also excellent molding cycle and mold staining reduction during injection molding are given importance, the Vicat softening temperature of the styrene-based resin composition in this embodiment is preferably 50 °C to 105 °C, more preferably 65 °C to 95 °C, and further preferably 75 °C to 90 °C. If the Vicat softening temperature of the styrene-based resin composition is more than 105 °C, the fluidity decreases and the appropriate molding temperature is higher, so that the cooling time tends to be longer. If the Vicat softening temperature of the styrene-based resin composition is lower, the solidification temperature decreases, so that the cooling time tends to be longer.

In the case where the total light transmittance of a 2 mm thick plate of the styrene-based resin composition in this embodiment is 70 % or more and the styrene-based resin composition is used mainly for sheets such as biaxially stretched sheets, from the viewpoint of the sheet moldability or the sheet appearance, the Vicat softening temperature of the styrene-based resin composition in this embodiment is preferably 90 °C or more, more preferably 90 °C to 105 °C, further preferably 93 °C to 103 °C, and even more preferably 95 °C to 101 °C. If the Vicat softening temperature is less than 90 °C, it is difficult to ensure the heat resistance required for biaxially stretched sheets and food packaging applications. If the Vicat softening temperature is more than 105 °C, the fluidity of the resin decreases, so that the sheet productivity decreases. Moreover, the sheet thickness is likely to be uneven.

In the case where the total light transmittance of a 2 mm thick plate of the styrene-based resin composition in this embodiment is 70 % or more and the styrene-based resin composition is used mainly for injection molded articles, from the viewpoint of mold staining reduction, the Vicat softening temperature of the styrene-based resin composition in this embodiment is preferably 50 °C to 105 °C, more preferably 60 °C to 95 °C, and further preferably 65 °C to 90 °C. If the Vicat softening temperature of the styrene-based resin composition is high, the fluidity decreases, so that short shots are likely to occur during injection molding, causing a decrease in injection moldability decreases. If the Vicat softening temperature of the styrene-based resin composition is low, the amount of plasticizer increases, and therefore mold staining may worsen.

In the case where injection blow molding is taken into consideration, the Vicat softening temperature of the styrene-based resin composition in this embodiment is preferably 75 °C to 100 °C, more preferably 78 °C to 98 °C, and further preferably 80 °C to 96 °C.

The Vicat softening temperature (°C) in the present disclosure is measured with a load of 49 N in accordance with ISO 306.

<Swelling index>

In this embodiment, the swelling index of the styrene-based resin composition containing the rubbery polymer particles (a-2) is preferably 8.5 to 14 and more preferably 9.0 to 13, from the viewpoint of impact strength. In another form, the swelling index of the rubbery polymer particles (a-2) according to the present disclosure is preferably 7.0 to 14, more preferably 7.5 to 13.5, and further preferably 8.0 to 13, from the viewpoint of impact strength. As a result of the swelling index being within the foregoing range, the styrene-based resin composition according to the present disclosure has excellent impact properties. In the present disclosure, the swelling index of the styrene-based resin composition is a value calculated by method described in the EXAMPLES section.

[Best mode]

A particularly preferred form of the styrene-based resin composition in this embodiment is a styrene-based resin composition containing: 90 mass% to 99.9 mass% of a rubber-modified styrene-based resin containing a polymer matrix phase containing a styrene-based resin (A) and a rubbery polymer dispersed in the polymer matrix phase; and 0.1 mass% to 10 mass% of a biomass plasticizer (B) having a biomass carbon ratio (pMC%) of 10 % or more, wherein content of a (meth)acrylonitrile monomer unit is 10 mass% or less with respect to the entire polymer matrix phase and an SP value of the polymer matrix phase is 8.0 to 9.0, an SP value of the biomass plasticizer (B) is 7.5 to 8.8, and an absolute difference between the SP value of the polymer matrix phase and the SP value of the biomass plasticizer (B) is 0.8 or less, and content of a halogen-based flame retardant is less than 1 mass%.

It is thus possible to provide a styrene-based resin composition that reduces environmental load by use of a biomass raw material, has high mechanical strength (for example, opening portion impact strength and buckling strength) during molding, has excellent injection moldability or injection blow moldability, reduces mold staining during molding, and is suitable for injection molding, particularly injection blow molding.

The SP value of the polymer matrix phase may be the SP value of the styrene-based polymer (a-1) constituting the polymer matrix phase. The rubbery polymer may be rubbery polymer particles.

[Production method for styrene-based resin composition]

The styrene-based resin composition in this embodiment can be produced by adding each component directly to a polymerization process or a devolatilization process as polymerization raw materials, or by melting and kneading each component by any method. For example, a high-speed stirrer such as a Henschel mixer, a batch type kneader such as a Banbury mixer, a uniaxial or biaxial continuous kneader, a roll mixer, or the like may be used singly or in combination. The heating temperature during kneading is usually selected in the range of 180 °C to 250 °C.

[Molded article]

A molded article according to the present disclosure contains the foregoing styrene-based resin composition.

The styrene-based resin composition in this embodiment can be made into a molded article by the foregoing melt-kneading molding machine, or using obtained pellets of the styrene-based resin composition as a raw material, by injection molding, injection compression molding, extrusion molding, blow molding, press molding, vacuum molding, foam molding, or the like.

A molded article in this embodiment can be obtained by molding the styrene-based resin composition in the foregoing embodiment. The molded article in this embodiment is not limited as long as it is obtained by molding the styrene-based resin composition according to the present disclosure, but the molded article preferably has a part with a thickness of 1 mm or less. The foregoing styrene-based resin composition can be suitably used in a molded article having a part with a thickness of 1 mm or less.

The molded article in this embodiment is preferably, but is not limited to, a container or a sheet. A container in this embodiment may be directly produced (molded) from the styrene-based resin composition, or produced by further molding a sheet obtained by molding the styrene-based resin composition. A sheet in this embodiment can be used for producing (molding) not only containers but also other molded articles.

The sheet in this embodiment is a non-foamed extruded sheet, The thickness of the sheet is not limited, and may be, for example, 1.0 mm or less, and preferably 0.2 mm to 0.8 mm.

The sheet in this embodiment may be laminated with a typical styrene-based resin such as a polystyrene resin or the like, or may be laminated with a resin other than the styrene-based resin in addition to or in place of a layer of the styrene-based resin or the like. Examples of the resin other than the styrene-based resin include PP resins, PP/PS resins, PET resins, and nylon resins.

The container in this embodiment is preferably a container obtained by injection blow molding using the foregoing styrene-based resin composition or a container obtained by molding the foregoing sheet.

Specifically, examples of the container obtained by injection blow molding in this embodiment include, but are not particularly limited to, a container for keeping or storing a beverage such as a lactic acid bacteria beverage or a food such as fermented milk, and the container may be in a cylindrical vertical type having a flange surface at an opening which is provided on the top. The container may have a height of 50 mm to 120 mm, a diameter of 30 mm to 60 mm, and a thickness of 0.2 mm to 0.8 mm.

In addition, examples of the container obtained by molding the sheet according to the present embodiment include, but are not particularly limited to, lids for boxed lunch or containers for containing prepared foods formed from a sheet or a laminate including the same.

[Biaxially stretched sheet]

The present disclosure provides a biaxially stretched sheet containing the styrene-based resin composition. As the method of producing a biaxially stretched sheet using the styrene-based resin composition in this embodiment as a raw material, a commonly known method may be used. The molding temperature of the stretch molding machine is preferably 180 °C to 280 °C, more preferably 200 °C to 260 °C, and further preferably 210 °C to 250 °C.

The biaxially stretched sheet may be secondary formed by a thermoforming method such as a vacuum forming method or a pressure forming method. The molded article of the biaxially stretched sheet according to the present disclosure can be used for various containers, and is mainly used for food packaging containers and the like.

A styrene resin composition suitable for the biaxially stretched sheet in this embodiment contains 94 mass% to 99.9 mass% and preferably 97 mass% to 99.9 mass% of the styrene-based polymer (a-3), 0.1 to 3 mass% of the biomass plasticizer (B) having a biomass carbon ratio (pMC%) of 10 % or more, and less than 3 mass % of the rubbery polymer particles (a-2), with respect to the entire styrene resin composition, wherein the total light transmittance of a 2 mm thick plate is 70 % or more, the Vicat softening temperature is 90 °C or more, and the SP value of the biomass plasticizer (B) is 7.4 to 10.5. The content of the styrene-based polymer (a-3) is preferably 97.0 mass% to 99.9 mass% with respect to the entire styrene resin composition.

[Injection molded article]

The present disclosure provides an injection molded article containing the styrene-based resin composition. As the method of producing an injection molded article using the styrene-based resin composition in this embodiment as a raw material, a commonly known method may be used. The temperature of the molding machine is preferably 150 °C to 300 °C, more preferably 160 °C to 260 °C, and further preferably 180 °C to 240 °C.

If the temperature of the molding machine is more than 300 °C, the styrene-based resin composition is thermally decomposed, which is not desirable. If the temperature of the molding machine is less than 150 °C, molding cannot be performed due to high viscosity, which is not desirable.

A styrene-based resin composition suitable for the injection molded article in this embodiment is preferably a styrene-based resin composition containing 85 mass% to 97 mass% of the styrene-based polymer (a-3) and 3.0 mass% to 15 mass% of the biomass plasticizer (B) having a biomass carbon ratio (pMC%) of 10 % or more, with respect to the entire styrene resin composition, wherein the content of rubbery polymer particles is less than 3 mass% of the entire styrene resin composition, the total light transmittance of a 2 mm thick plate is 70 % or more, and the SP value of the biomass plasticizer (B) is 7.4 to 10.5.

[Injection blow molded article]

The present disclosure provides an injection blow molded article containing the styrene-based resin composition. The method of producing the injection blow molded article using the styrene-based resin composition as raw material is not limited, and molding can be performed by a well-known method. Specifically, in injection blow molding, first, an intermediate (for example, a bottomed parison) is molded from the styrene-based resin composition by injection molding, and the intermediate is then transferred into a blow molding die while being attached to a core (male mold for injection molding) in a softened state, and compressed air is fed from the core to inflate the intermediate so that the intermediate contacts the inner wall surface of the blow molding die, to thereby mold a hollow molded article (for example, a container).

In the molding method, the mold temperature at the stage of blow molding of the intermediate is preferably 35 to 75 °C, more preferably 40 to 60 °C, and even more preferably 45 to 55 °C. The temperature of the styrene-based composition is preferably 210 °C to 260 °C, and more preferably 220 °C to 250 °C. Preferably, the ratio of the volume of the container to the volume of the intermediate (the draw ratio of the volume) is 1.5 times to 7 times, and more preferably 2 times to 5 times.

A styrene-based resin composition suitable for the injection blow molded article in this embodiment is preferably a styrene-based resin composition containing the styrene-based polymer (a-1), the biomass plasticizer (B) having a biomass carbon ratio (pMC%) of 10 % or more, the higher fatty acid compound (C), and the rubbery polymer particles (a-2) with an average particle diameter of 0.9 $\mu$m to 7.0 $\mu$m, wherein, with respect to the entire styrene-based resin composition (100 mass%), the content of the rubbery polymer particles (a-2) is 10 mass% to 30 mass%, the content of the biomass plasticizer (B) is 0.1 mass% to 15 mass%, the content of the higher fatty acid compound is 0.02 mass% to 2.5 mass%, the weight average molecular weight of the styrene-based polymer (a-1) is 140,000 to 240,000.

Molded articles containing the styrene-based resin composition in this embodiment, in particular injection molded articles (including injection compression), sheet articles, and injection blow molded articles are suitably used in food packaging containers, OA equipment such as copiers, fax machines, personal computers, printers, information terminals, refrigerators, vacuum cleaners, microwave ovens, household appliances, housings and various parts of electric and electronic equipment, interior and exterior parts of automobiles, construction materials, foam insulation materials, insulating films, etc.

EXAMPLES

Hereinafter, embodiments of the present disclosure will be described in more detail by way of Examples and Comparative Examples, although the present disclosure is not limited by these examples.

[1. Measurement and evaluation method]

The physical properties of the styrene-based resin compositions, extruded sheets, biaxially stretched sheets, injection molded articles, and injection blow molded articles obtained in Examples and Comparative Examples were measured and evaluated based on the following methods.

(1) Measurement of weight average molecular weight of each of styrene-based resin (A) (including rubber-modified styrene-based resin, styrene-based polymer (a-1), and styrene-based polymer (a-3); hereafter the same), biomass plasticizer (B), and styrene-based resin composition

The weight average molecular weight of each of the styrene-based resin (A) and the biomass plasticizer (B) was measured based on the following conditions and procedures.

- Preparation of sample: 5 mg of the measurement sample was dissolved in 10 mL of tetrahydrofuran and filtered through a 0.45 $\mu$m filter.
- Measurement conditions

Apparatus: TOSOH HLC-8220GPC (gel permeation chromatography)
Column: connect two SHODEX GPC KF-606M in series
Guard column: SHODEX GPC KF-G 4A
Temperature: 40 °C
Carrier: THF 0.50 mL/min
Detector: RI, UV: 254 nm
Calibration curve: 11 types of TSK standard polystyrene (F-850, F-450, F-128, F-80, F-40, F-20, F-10, F-4, F-2, F-1, A-5000) produced by Tosoh Corporation were used for calibration curve creation. A calibration curve was created using a cubic linear approximation.

(2) Melt mass flow rate (MFR)

The melt mass flow rate (g/10 min) of the styrene-based resin (A) and the styrene-based resin composition used in Examples and Comparative Examples was measured in accordance with ISO 1133 (200 °C, load of 49 N).

(3) Measurement of Vicat softening temperature (°C)

The Vicat softening temperature (°C) of the styrene-based resin (A) and the styrene-based resin composition used in Examples and Comparative Examples was measured under a load of 49 N in accordance with ISO 306.

(4) Measurement of content and swelling index of rubbery polymer particles (a-2)

The content (mass%) and swelling index of the rubbery polymer particles (a-2) in the rubber-modified styrene-based resin or styrene-based resin composition were measured as follows. 1.00 g of the rubber-modified styrene-based resin or styrene-based resin composition was precisely weighed in a sedimentation tube (the mass is denoted by W1), 20 ml of toluene was added, and the mixture was shaken at 23 °C for 1 hr or 2 hr. After this, centrifugation was performed in a centrifuge (SS-2050A rotor: 6B-N6L, produced by Sakuma Seisakusho Co., Ltd.) at a temperature of 4 °C, a rotation speed of 20000 rpm, and a centrifugal acceleration of 45100 $\times$ G for 60 min. The sedimentation tube was slowly tilted to about 45 degrees, and supernatant liquid was removed by decantation. The mass (denoted by W2) of insoluble matter containing toluene was precisely measured. Thereafter, the insoluble matter containing toluene was dried under a vacuum under the condition of 160 °C and 3 kPa or less for 1 hr, cooled in a desiccator to room temperature, and the toluene insoluble matter was precisely weighed (the mass is denoted by W3).
In Example 1, Examples 2a to 2d, Examples 3 to 5, and Comparative Examples 1 to 4, the samples were shaken at 23 °C for 2 hr. In the other examples, the samples were shaken for 1 hr.
The content and swelling index of the rubbery polymer particles (a-2) in the styrene-based resin (A) or styrene-based resin composition, i.e. the content and swelling index of the rubbery polymer particles (a-2) in the styrene-based resin (A) or styrene-based resin composition, were determined according to the following formulas:

$$\text{Content of the rubbery polymer particles (a-2)} = W3/W1 \times 100$$

$$\text{Swelling index of rubbery polymer particles (a-2)} = W2/W3.$$

In Example 11 described later, in the case where toluene was used as a solvent, the gel component flowed out during decantation, and the accurate value could not be measured. Therefore, in Example 11, a solution of methyl ethyl ketone/methanol = 9/1 was used and the same treatment was performed to determine the content and swelling index of the rubbery polymer particles (a-2).

(5) Measurement of average particle diameter

The average particle diameter ($\mu$m) of the rubbery polymer particles (a-2) in the styrene-based resin (A) or styrene-based resin composition used in Examples and Comparative Examples was measured by the following method.
Using a Coulter Multisizer III (trade name) produced by Beckman Coulter Inc. equipped with an aperture tube with a diameter of 30 $\mu$m, 0.05 g of pellets of the styrene-based resin (A) or styrene-based resin composition were placed in about 5 ml of dimethylformamide and allowed to stand for about 2 min to 5 min. Next, the dimethylformamide dissolved content was measured as a moderate particle concentration, and the volume-based median diameter was determined.

In Example 11, in the case where Coulter Multisizer III was used, the average particle diameter of the rubbery polymer particles (a-2) was below the lower limit of the measurement range, and accordingly proper measurement could not be performed. Therefore, in Example 11, after performing the same treatment, the volume-based median diameter was determined using a laser analysis particle diameter distribution analyzer produced by Beckman Coulter Inc.

(6) Measurement of content of rubbery polymer

0.25 g of the styrene-based resin (A) or styrene-based resin composition used in Examples and Comparative Examples was dissolved in 50 mL of chloroform, and iodine monochloride was added to react the double bonds in the rubber component. After this, potassium iodide was added to convert the remaining iodine monochloride to iodine, followed by back titration with sodium thiosulfate (iodine monochloride method). By this method, the mass (denoted by W4) of the rubber contained in the styrene-based resin (A) or styrene-based resin composition is measured. From this value and the mass (denoted by W1) of the styrene-based resin (A) or styrene-based resin composition, the content (mass%) of the rubbery polymer in the styrene-based resin (A) or styrene-based resin composition was determined according to the following formula:

$$\text{Content (mass\%) of the rubbery polymer in styrene-based resin (A)}$$
$$\text{or styrene-based resin composition} = W4/W1 \times 100.$$

(7) Method of measuring biomass carbon ratio (pMC%)

For the biomass carbon ratio (pMC%) of the biomass plasticizer (B), ($^{14}$C plasticizer/$^{12}$C plasticizer)/($^{14}$C standard substance/$^{12}$C standard substance) was calculated by the AMS method using the following Formula (1) according to the radiocarbon ($^{14}$C) measurement method in accordance with ASTM-D6866:

$$\text{Formula (1): biomass carbon ratio (pMC\%)} = (^{14}\text{C plasticizer}/^{12}\text{C}$$
$$\text{plasticizer})/(^{14}\text{C standard substance}/^{12}\text{C standard substance}) \times 100.$$

Oxalic acid (SRM4990) was used as a standard substance.

The biomass carbon ratio in the styrene-based resin composition was calculated in the same way as above.

(8) Determination of content of biomass plasticizer (B)

The determination of the content of the biomass plasticizer (B) in the styrene-based resin composition used in Examples and Comparative Examples was performed using either procedure (8-1) or (8-2) below. Equivalent numerical values were obtained when comparing the values obtained in the procedure (8-1) and the values obtained in the procedure (8-2).

(8-1) Analysis using NMR

A vegetable oil (glycerin fatty acid ester) was dissolved in deuterated chloroform (containing 1 % TMS) containing 2-dimethoxyethane as an internal standard substance, and $^1$H-NMR measurement was performed. With 0 ppm as reference for TMS peaks, a peak derived from protons bonded to the carbon adjacent to the ester group of the vegetable oil was detected in $\delta$4.0 to 4.4 ppm, and a peak derived from 1,2-dimethoxymethane was detected in 3.4 ppm to 3.6 ppm. The peak area derived from vegetable oil was calculated, where the peak area derived from 1,2-dimethoxymethane was set to 1. By performing this operation while changing the concentration of the vegetable oil, a calibration curve for the concentration of the vegetable oil was created.

The pelleted styrene-based resin composition obtained in Examples and Comparative Examples was dissolved in deuterated chloroform (containing 1 % TMS), and subjected to $^1$H-NMR measurement. Using the foregoing calibration curve, the vegetable oil content in the styrene-based resin composition was determined.

In the case where other peaks overlap with the peaks of the internal standard substance and quantification is difficult with the foregoing method, an appropriate substance may be used as the internal standard substance. The vegetable oil can be quantified by the triglyceride-derived peak detected in 5.0 ppm to 5.5 ppm.

(8-2) Calculation from methanol soluble matter

1.0 g of the pellet-shaped styrene-based resin composition (the weight of which is denoted by W11) obtained in Examples and Comparative Examples was placed in a 20 mL screw bottle, and 10 mL of methyl ethyl ketone was added. After completely dissolving the pellets with a shaker, 5 mL of methanol was added to precipitate the styrene-based polymer as insoluble matter, which was then centrifuged at 2000 G for 10 min using a centrifuge to sediment the insoluble matter. Next, the precipitated insoluble matter was pre-dried for 40 min in a dryer heated to 140 °C, and then vacuum-dried at the same temperature for 20 min to completely evaporate the solvent. The mass of the insoluble matter after drying was measured. The mass was denoted as W12. Using the measured masses W11 and W12, the methanol soluble matter (W13) was defined as follows:

$$\text{Methanol soluble matter (W13)} = \text{W11} - \text{W12}.$$

Moreover, in this operation, the supernatant liquid after centrifugal sedimentation with a centrifuge was measured by GC-MS, and the content of styrene-based oligomers, residual monomers, residual solvents, and other low-molecular-weight substances other than plasticizers soluble in methanol was quantified, and the mass (W14) contained in 1.0 g of the styrene-based resin composition was calculated. Using the calculated masses W13 and W14, the content of the biomass plasticizer (B) in the styrene-based resin composition was determined as follows:

$$\text{Content of biomass plasticizer (B)} = \text{W13} - \text{W14}.$$

(9) SP value calculation

The SP value of each material used in Examples and Comparative Examples is the SP value using the Hilderbrand method (including the Hansen method), and was calculated by the turbidity titration method with reference to literature values ("Fundamentals of Biomaterials", Kazuhiko Ishizuka, Takao Hanawa, Mizuo Maeda eds. Nihon Igakukan Publishing) or "J. Appl. Polym. Sci., 12, 2359 (1968)".
Since each component blended in the styrene-based resin composition in Examples and Comparative Examples is known, the SP value can be easily calculated by the foregoing method. In the case where the details of the styrene-based polymer or the plasticizer contained in an unknown styrene-based resin composition are unknown, the SP value can be calculated by the following procedures (i) to (iv): Procedure (i): A dissolution test is performed in which a target sample (styrene-based polymer or plasticizer) collected or separated from a styrene-based resin composition is added to a solvent with a known SP value and whether the sample is dissolved in the solvent with a known SP value. Procedure (ii): Next, the SP value of the solvent used in the dissolution test of procedure (i) is three-dimensionally plotted. Procedure (iii): The operations of procedures (i) and (ii) are performed with 15 to 20 solvents. Procedure (iv): By calculating a sphere containing the coordinates of each solvent in which the sample was dissolved and not containing the coordinates of each solvent in which the sample was not dissolved, the solubility parameter using the Hildebrand method (including the Hansen method) is calculated where the center coordinates of the sphere represent Hansen's SP value and the distance from the origin represents the Hildebrand's SP value.
The SP values calculated by the procedures (i) to (iv) are roughly consistent with the above literature values or the SP values calculated by the turbidity titration method.
Regarding the SP value, whether the sample dissolves or is insoluble in the solvent with a known SP value is visually checked. Specifically, in the case where the sample is insoluble, when melting the sample in the solvent, the sample becomes cloudy (white turbid) or becomes droplets, and the sample and the solvent are separated. In the case where the sample dissolves, when melting the sample in the solvent, the sample uniformly mixes in the solvent while remaining transparent.
If the biomass plasticizer (B) is low-molecular, it may be impossible to calculate the SP value by the turbidity titration method. In such a case, instead of the turbidity measurement method, Fedors' estimation method or Hoy's calculation method is employed (see, for example, "Paint Research (Consideration on Solubility Parameters of Additives) No. 152, Oct. 2010").

(10) Calculation of modification rate

For each styrene-based resin containing modified vegetable oil, the modification rate of the modified vegetable oil was calculated by $^1$H-NMR using either of the following procedures (10-1) and (10-2):

Procedure (10-1)

The pelleted styrene-based resin composition obtained in Examples and Comparative Examples is dissolved in deuterated chloroform (containing 1 % TMS) and subjected to $^1$H-NMR measurement. With 0 ppm as reference for TMS, a peak derived from an epoxy group is detected in $\delta$2.8 to 3.2 ppm, and a peak derived from protons bonded to the carbon adjacent to the ester group of the vegetable oil is detected in $\delta$4.0 to 4.4 ppm. Thus, the epoxy modification rate was calculated from the area ratio of the two peaks. While a peak derived from an epoxy group is detected in $\delta$2.8 to 3.2 ppm and a peak derived from protons bonded to the carbon adjacent to the ester group of the vegetable oil is detected in $\delta$4.0 to 4.4 ppm, if these peaks overlap with other peaks, quantification is difficult. In such a case, the following procedure (10-2) was used for quantification.

Procedure (10-2)

1 g of the pellet-shaped styrene-based resin composition obtained in Examples and Comparative Examples was placed in a 20 mL screw bottle, and 10 mL of methyl ethyl ketone was added. After completely dissolving the pellets with a shaker, 5 mL of methanol was added to precipitate the styrene-based resin composition in the solution as insoluble matter. Next, the insoluble matter was removed, the solution portion was taken in an eggplant flask, and the flask was vacuumed for 2 hr using an evaporator to volatilize methyl ethyl ketone and methanol. Thereafter, the liquid (vegetable oil) remaining in the eggplant flask was added to deuterated chloroform (containing 1 % TMS), and $^1$H-NMR measurement was performed. With 0 ppm as reference for TMS, a peak derived from an epoxy group is detected in $\delta$2.8 to 3.2 ppm, and a peak derived from protons bonded to the carbon adjacent to the ester group of the vegetable oil is detected in $\delta$4.0 to 4.4 ppm. Thus, the epoxy modification rate was calculated from the area ratio of the two peaks. The epoxy modification rate was defined as the number of moles of epoxy groups per 1 g of modified vegetable oil.

(11) Sheet nominal tensile strain at break

The sheet nominal tensile strain at break of each of the extruded sheets produced in Examples 1 to 5 and Comparative Examples 1 to 4 was measured. Specifically, a JIS K6251-3 dumbbell was punched from the extrusion (MD) direction of the extruded sheet and its orthogonal (TD) direction, and a tensile test was conducted under the conditions of a test rate of 50 mm/min and a distance between grippers of 60 mm to measure the sheet nominal tensile strain at break.

(12) Evaluation of sheet appearance (number of stains) (1)

When each of the extruded sheets obtained in Example 1, Examples 2a to 2d, Examples 3 to 5, and Comparative Examples 1 to 4 was produced, the surface of the sheet was visually checked, and the number of stains having a major diameter of 1.0 mm or more per 10 m was measured.

(13) Charpy impact test

Each of the styrene-based resin compositions obtained in Examples and Comparative Examples was injection-molded at 220 °C in accordance with JIS K 7152, and the Charpy impact strength was measured in accordance with JIS K 7111-1.

(14) Opening portion impact strength

The injection blow molded container was laid on its side so that the parting line would be up and down, and set so that a falling weight would hit the opening portion. The falling weight impact strength (DuPont impact strength) was measured using a DuPont impact tester (No. 451) produced by Toyo Seiki Seisaku-Sho, Ltd. The test was conducted at n = 30 with a mass of the falling weight of 200 g and a radius at the impact center tip of 9.4 mm, and the falling weight impact strength was determined from the 50 % fracture height. Each sample with 3.0 kg cm or more was determined as pass.

(15) Opening portion compressive strength

The injection blow molded container was laid on its side so that the parting line would be up and down and the flange of the opening portion would contacted vertically, and was compressed at a speed of 200 mm/min. The load until 10 mm deformation was taken to be the compressive strength of the opening portion. In the measurement, containers of two shots were used, and the measured values were averaged. A sample with a container opening portion compressive strength of 23 or more was determined as pass. A tabletop type precision universal testing machine produced by Shimadzu Corporation (Autograph AGS-5kNX) was used as a measurement apparatus.

(16) Buckling strength

An injection blow molded container was fixed to a compression test lower platen. A compression strength was measured when a load was applied at a pressing speed 200 mm/min by a compression load jig protruding to the movable portion of a compression test machine. A tabletop type precision universal testing machine produced by Shimadzu Corporation (Autograph AGS-5kNX) was used as a measurement apparatus. The measured results were evaluated based on the following criteria. If the buckling strength is less than 120 N, the rigidity becomes insufficient and failures such as buckling of a container may occur in practical use. Accordingly, each sample with a buckling strength of 120 N or more was determined as pass.

(17-1) Moldability (cooling time during molding)

In the method of evaluating the cooling time during molding in Examples and Comparative Examples, when injection molding ten 2 mm thick plates, the cooling time sufficient for the molded article to solidify without deformation after the molding was measured. In Examples and Comparative Examples, molding was performed at a mold temperature of 45 °C using injection molding machine EC60N produced by Toshiba Machine Co., Ltd. The injection pressure, the injection time, and the holding pressure were kept constant, and the cylinder temperature was set to a temperature at which the plate could be molded without short shots for each example.

(17-2) Moldability (injection moldability)

In the evaluation of the injection moldability of Examples and Comparative Examples, when molding a 2 mm plate using injection molding machine EC60N produced by Toshiba Machine Co., Ltd. at a cylinder temperature of 210°C, a mold temperature of 45 °C, and an injection pressure of 45 MPa, the injection moldability was evaluated based on the following criteria:

○: Moldable without problems
Short: Short shot occurred.

(18) Moldability (number of stringing occurrences)

The method of evaluating the number of times stringing occurred in Examples and Comparative Examples involved evaluating whether stringing could be visually recognized at the bottom of the molded article when molding a rigid cylindrical container by an injection blow molding machine. SG125NP produced by Sumitomo Heavy Industries, Ltd. was used as the injection blow molding machine. Molding was performed at a cylinder and hot runner temperature of 240 °C and a mold temperature of 50 °C. 140 molded containers corresponding to 10 shots were checked, and evaluation was made based on the number of samples for which stringing was found.

(19) Moldability (number of blow failures)

The method of evaluating the number of blow failures in Examples and Comparative Examples involved evaluating whether a parison molded by injection molding could be separated from the mold when molding a rigid cylindrical container by an injection blow molding machine. SG125NP produced by Sumitomo Heavy Industries, Ltd. was used as the injection blow molding machine. Molding was performed at a cylinder and hot runner temperature of 240°C and a mold temperature of 50 °C. The counter counted up when it was determined that the parison was stuck to the mold and could not be completely detached after molding. Evaluation was made based on the number of occurrences of mold release defects when molding was performed 100 times in total. Given the productivity drops when the number of blow failures is more than 10, each sample with 10 or less blow failures was determined as pass.

(20) Moldability (mold staining)

(20-1) Mold staining during injection molding

Mold staining was evaluated using, as an index, the number of shots until any deposit was observed on the mold after continuous molding when the styrene-based resin composition obtained in each of Examples and Comparative Examples was injection-molded at 220 °C in accordance with JIS K 7152. Given that the frequency of cleaning the mold increases and the productivity drops when the number of shots until any deposit is observed on the mold is less than 100, each sample with 100 or more shots was determined as pass.

(20-2) Mold staining during injection blow molding

The method of evaluating the number of blow failures in Examples and Comparative Examples involved evaluating the number of shots until any deposit was visually observed on the mold, when molding a rigid cylindrical container by an injection blow molding machine. SG125NP produced by Sumitomo Heavy Industries, Ltd. was used as the injection blow molding machine. Molding was performed at a cylinder and hot runner temperature of 240 °C and a mold temperature of 50 °C. Whether there was any deposit on the mold was checked after every 5 shots, and molding was performed up to 150 shots. Given that mold maintenance takes a long time and the productivity drops when any deposit on the mold is observed before 100 shots, each sample with 100 or more shots was determined as pass.

(21) Measurement of total light transmittance

(I) Test piece preparation conditions

Each of the styrene-based resin compositions in Examples and Comparative Examples was injection-molded using a mold for flat plate molded articles under the following conditions to prepare a flat plate with a thickness of 2 mm and thus prepare a sheet body.

Molding machine: EC60N produced by Toshiba Machine Co., Ltd.
Cylinder temperature: 220 °C
Injection pressure: 45 MPa, injection time: 10 sec
Cooling time: 15 sec, mold temperature: 45 °C.

(II) Total light transmittance Measurement conditions

Using the sheet body of the test piece prepared above, the total light transmittance (%) was measured in accordance with JIS K7361-1.

(22) Measurement of thickness of biaxially stretched sheet

From each of the styrene-based resin compositions in Examples and Comparative Examples, a sheet with a thickness of 0.95 mm to 1.05 mm was produced using a 25 mmφ single-screw sheet extruder produced by Soken Co., Ltd. A sheet having a size of 8 cm × 8 cm was cut out from the produced sheet. The cut sheet was subjected to simultaneous biaxial stretching under the following conditions using a biaxial stretching apparatus (EX6-S 1) produced by Toyo Seiki Seisaku-Sho, Ltd. to prepare a biaxially stretched sheet. The sheet thickness after stretching was measured using a microgauge.

Stretching temperature: Vicat softening temperature +20 °C
Stretching speed: 170 %
Stretching ratio: 2.0 times.

(23) Measurement of impact strength (kgf·cm) of biaxially stretched sheet

The impact strength of the sheet prepared by the method described in (22) above was measured using a film impact tester (A121807502) produced by Toyo Seiki Seisaku-Sho, Ltd.

(24) Evaluation of sheet appearance (2)

A sheet with a thickness of 0.3 mm was prepared using a 25 mmφ single-screw sheet extruder produced by Soken Co., Ltd. The number of foreign bodies, air bubbles, and transparent or untransparent deposits with an average diameter ((major axis + minor axis)/2) of 1 mm or more was counted within 5 m of the sheet.

(25) Thickness uniformity of biaxially stretched sheet

As one index of the moldability into a biaxially stretched sheet, the thickness uniformity of the biaxially stretched sheet was evaluated by the following method.
Thickness was measured with a microgauge at nine points of intersection when three straight lines were drawn at intervals of 5 cm in the vertical and horizontal directions in a grid pattern on the sheet prepared by the method described in (22) above. The same thickness measurement was performed on three sheets. The sheet thickness uniformity was evaluated based on the number of points, out of a total of 27 points, at which the thickness was outside the range of 0.23 mm to 0.27 mm.

[2. Raw materials]

The materials used in Examples and Comparative Examples are as follows.

[Styrene-based resin (A)]

(Rubber-modified polystyrene resin (HIPS))

- A rubber-modified styrene-based resin (1) (HIPS, HT478 produced by PS Japan Corporation) with an MFR of 3.0 was used. The styrene-based resin (a), which is the polymer matrix phase of the rubber-modified styrene-based resin (1), was polystyrene (Mw = 180,000), and the average particle diameter of the rubbery polymer (salami structure encapsulating polystyrene) was 1.7 μm.
- A rubber-modified styrene-based resin (2) (HIPS, 475D produced by PS Japan Corporation) with an MFR of 2.3 was used. The styrene-based resin (a), which is the polymer matrix phase of the rubber-modified styrene-based resin (2), was polystyrene (Mw = 220,000), and the average particle diameter of the rubbery polymer (salami structure encapsulating polystyrene) was 2.3 μm.

(Butadiene rubber)

- Polybutadiene rubber (Diene 55 produced by Asahi Kasei Chemicals Corporation), polybutadiene rubber UBEPOL BR (BR15HB produced by UBE Elastomer Co., Ltd.)

[Biomass plasticizer (B)]

(Modified vegetable oil)

- Epoxidized soybean oil (product name "Newcizer 510R" (produced by NOF Corporation), weight average molecular weight (Mw = 1500), biomass carbon ratio (pMC%) 100 %, melting point: 5 °C, SP value (value calculated by Hansen method, the distance from the origin in the three-component coordinates of the dispersion force term ($\delta D$), the polarity term ($\delta P$), and the hydrogen bond term ($\delta H$)): 9.0 ((cal/cm$^3$)$^{1/2}$), epoxy modification rate: 5 mmol per 1 g.
- Epoxidized linseed oil (1) (product name "Newcizer 512" (produced by NOF Corporation), weight average molecular weight (Mw = 1500), biomass carbon ratio (pMC%) 100 %, melting point: 5 °C), SP value (value calculated by Hansen method, the distance from the origin in the three-component coordinates of the dispersion force term ($\delta D$), the polarity term ($\delta P$), and the hydrogen bond term ($\delta H$)): 9.3 ((cal/cm$^3$)$^{1/2}$), epoxy modification rate: 8 mmol per 1 g.
- Epoxidized linseed oil (1) (product name "Newcizer 512" (produced by NOF Corporation), weight average molecular weight (Mw = 1500), biomass carbon ratio (pMC%) 100 %, melting point: 5 °C), SP value (value calculated by Hansen method, the distance from the origin in the three-component coordinates of the dispersion force term ($\delta$D), the polarity term ($\delta$P), and the hydrogen bond term ($\delta$H)): 9.3 ((cal/cm$^3$)$^{1/2}$), epoxy modification rate: 8 mmol per 1 g.

- Epoxidized linseed oil (2) (product name "O-180A" (produced by ADEKA Corporation), weight average molecular weight (Mw = 1500), biomass carbon ratio (pMC%) 100 %, melting point: -2 °C), SP value (value calculated by Hansen method, the distance from the origin in the three-component coordinates of the dispersion force term ($\delta$D), the polarity term ($\delta$P), and the hydrogen bond term ($\delta$H)): 9.3 ((cal/cm$^3$)$^{1/2}$), epoxy modification rate: 8 mmol per 1 g.

(Natural vegetable oil)

- Palm oil (product name "Multi Ace 20 (S)" (Nisshin OilliO Group Co., Ltd.), weight average molecular weight (Mw = 1000), biomass carbon ratio (pMC%) 100 %, melting point: 22 °C, SP value (value calculated by Hansen method, the distance from the origin in the three-component coordinates of the dispersion force term ($\delta$D), the polarity term ($\delta$P), and the hydrogen bond term ($\delta$H)): 8.2 ((cal/cm$^3$)$^{1/2}$).
- Soybean oil (product name "Soybean White Oil (S)" (Nissin Oillio Group Co., Ltd.) weight average molecular weight (Mw = 1000), biomass carbon ratio (pMC%) 100 %, melting point: -8 °C, SP value (Calculated by the Hansen method, the distance from the origin in the three-component coordinates of the dispersion force term ($\delta$D), the polar term ($\delta$P), and the hydrogen bond term ($\delta$H)): 8.2 (cal/cm$^3$)$^{1/2}$)).
- Castor hydrogenated oil (product name "Castor Hydrogenated Oil" (Itoh Oil Chemicals Co., Ltd.), weight average molecular weight (Mw = 1000), biomass carbon ratio (pMC%): 100 %, melting point 85 °C, SP value (value calculated by Hansen method represents the distance from the origin in the three-component coordinates of the dispersion force term ($\delta$D), the polar term ($\delta$P), and the hydrogen bond term ($\delta$H).): 10.1 ((cal/cm$^3$)$^{1/2}$)).

[Others]

(Liquid paraffin)

- Liquid paraffin, product name "PS350S" (produced by Sanko Chemical Industry Co., Ltd.), weight average molecular weight (Mw = 250), biomass carbon ratio (pMC%): 0 %, pour point: -12.5 °C, SP value (literature value): 7.3 (cal/cm$^3$)$^{1/2}$.

(Polylactic acid)

- Polylactic acid, product name "LX175" (produced by Total Corbinion PLA), biomass carbon ratio (pMC%): 100 %, melting point: 155 °C, SP value (literature value): 10.3 (cal/cm$^3$)$^{1/2}$.

[3. Examples and Comparative Examples]

[Example 1, Examples 2a to 2d, Examples 3 to 5, and Comparative Examples 1 to 4]

After dry blending the rubber-modified styrene-based resin ((A) component) and the biomass plasticizer (B) ((B) component) at the compounding ratios shown in Tables 3-1 and 3-2, the mixture was extruded using a twin screw kneading extruder (TEM-26SS-12 produced by Toshiba Machine Co., Ltd.) under the conditions of a resin temperature of 220 °C, thus preparing a styrene-based resin composition of each of Examples 1, 2a to 2d, and 3 to 5 and Comparative Examples 1 to 4.

For each obtained styrene-based resin composition, the physical properties of the styrene-based resin composition shown in Tables 3-1 and 3-2 were measured by the methods described in the "1. Measurement and evaluation methods" section above.

Moreover, each obtained styrene-based resin composition was supplied to a single screw extruder, and an extruded sheet with a thickness of 0.3 mm and a width of 125 mm was prepared under the conditions of a roller temperature of 90 °C. For each obtained extruded sheet, the sheet properties shown in Tables 3-1 and 3-2 were measured by the methods described in the "1. Measurement and evaluation method" section above. The sheet thickness (MD direction and TD direction) was measured at any five positions using a microgauge, and the average value was taken.

[Table 3-1]

| Table 3-1 | | | | Example 1 | Example 2a | Example 3 | Example 4 | Example 5 | Comparative Example 1 | Comparative Example 2 | Comparative Example 3 | Comparative Example 4 |
|---|---|---|---|---|---|---|---|---|---|---|---|---|
| Production example | (A) component | Rubber-modified styrene-based resin (1) | parts by mass | 100 | 100 | 100 | 100 | - | 100 | 100 | 100 | - |
| | | Rubber-modified styrene-based resin (2) | parts by mass | - | - | - | - | 100 | - | - | - | 100 |
| | Plasticizer ((B) component) | Polylactic acid | parts by mass | - | - | - | - | - | 1 | 3 | - | - |
| | | Epoxidized soybean oil | parts by mass | 0.4 | 1 | 4 | - | 2 | - | - | - | - |
| | | Epoxidized linseed oil (1) | parts by mass | - | - | - | 1 | - | - | - | - | - |
| | | Liquid paraffin | parts by mass | - | - | - | - | - | - | - | 1 | 2 |
| | | Biomass carbon ratio | % | 100 | 100 | 100 | 100 | 100 | 100 | 100 | 0 | 0 |

EP 4 253 475 A1

33

(continued)

| Table 3-1 | | | Example 1 | Example 2a | Example 3 | Example 4 | Example 5 | Comparative Example 1 | Comparative Example 2 | Comparative Example 3 | Comparative Example 4 |
|---|---|---|---|---|---|---|---|---|---|---|---|
| Physical properties of styrene-based resin composition | MFR | g/10min | 3.6 | 3.8 | 4.6 | 3.7 | 2.1 | 3.6 | 3.5 | 3.8 | 2.9 |
| | Vicat softening temperature | °C | 94 | 92 | 89 | 92 | 89 | 95 | 94 | 93 | 89 |
| | Toluene insoluble matter | % | 26 | 26 | 27 | 26 | 21 | 26 | 26 | 26 | 21 |
| | Swelling index | - | 11 | 11 | 11 | 11 | 10 | 11 | 11 | 11 | 10 |
| | Average particle diameter of rubbery polymer | $\mu$m | 1.7 | 1.7 | 1.8 | 1.7 | 2.3 | 1.7 | 1.7 | 1.7 | 2.3 |
| | Rubbery polymer content | % | 8.8 | 8.7 | 8.6 | 8.8 | 6.2 | 8.8 | 8.6 | 8.8 | 6.2 |
| | SP value of styrene-based polymer (A -1) in polymer matrix phase | (cal/cm3) 1/2 | 8.6 | 8.6 | 8.6 | 8.6 | 8.6 | 8.6 | 8.6 | 8.6 | 8.6 |
| | SP value of biomass plasticizer (B) | (cal/cm3) 1/2 | 9.0 | 9.0 | 9.0 | 9.1 | 9.0 | - | - | 7.3 | 7.3 |
| | SP value difference between (A-1) and (B) | (caVcm3) 112 | 0.4 | 0.4 | 0.4 | 0.7 | 0.4 | - | - | 1.3 | 1.3 |
| | Biomass carbon ratio | % | 0.5 | 1.2 | 4.5 | 1.0 | 2.2 | 1.0 | 3.0 | 0 | 0 |

| Table 3-1 | | | Example 1 | Example 2a | Example 3 | Example 4 | Example 5 | Comparative Example 1 | Comparative Example 2 | Comparative Example 3 | Comparative Example 4 |
|---|---|---|---|---|---|---|---|---|---|---|---|
| Sheet properties | Sheet thickness MD | mm | 0.3 | 0.3 | 0.3 | 0.3 | 0.3 | 0.3 | 0.3 | 0.3 | 0.3 |
| | Sheet thickness ID | mm | 0.3 | 0.3 | 0.3 | 0.3 | 0.3 | 0.3 | 0.3 | 0.1 | 0.3 |
| | Fracture point (strain)MD (%) | % | 77 | 73 | 80 | 70 | 100 | 59 | 46 | 87 | 87 |
| | Fracture point (strain)TD (%) | % | 71 | 80 | 90 | 75 | 90 | 60 | 61 | 69 | 75 |
| | Appearance evaluation (I)(numberofstains) | number/10m | 1 | 1 | 2 | 1 | 2 | 1 | 2 | 6 | 9 |

[Table 3-2]

| Table 3-2 | | | | Example 2b | Example 2c | Example 2d |
|---|---|---|---|---|---|---|
| Production example | (A) component | Rubber-modified styrene-based resin (1) | parts by mass | 100 | 100 | 100 |
| | | Rubber-modified styrene-based resin (2) | parts by mass | - | - | - |
| | Plasticizer ((B) component) | Polylactic acid | parts by mass | - | - | - |
| | | Epoxidized soybean oil | parts by mass | - | - | - |
| | | Epoxidized linseed oil (1) | parts by mass | - | - | - |
| | | Palm oil | parts by mass | 1 | - | - |
| | | Soybean oil | parts by mass | - | 1 | - |
| | | Hydrogenated castor oil | parts by mass | - | - | 1 |
| | | Liquid paraffin | parts by mass | - | - | - |
| | | Biomass carbon ratio | % | 100 | 100 | 100 |
| Physical properties of styrene-based resin composition | | MFR | g/10min | 3.8 | 3.8 | 3.7 |
| | | Vicat softening temperature | °C | 92 | 92 | 93 |
| | | Toluene insoluble matter | % | 26 | 26 | 27 |
| | | Swelling index | - | 11 | 11 | 11 |
| | | Average particle diameter of rubbery polymer | μm | 1.7 | 1.7 | 1.8 |
| | | Rubbery polymer content | % | 8.8 | 8.7 | 8.6 |
| | | SP value of styrene-based polymer (a-2) in polymer matrix phase | (cal/cm3) 1/2 | 8.6 | 8.6 | 8.6 |
| | | SP value of biomass plasticizer (B) | (cal/cm3) 1/2 | 8.2 | 8.2 | 10.1 |
| | | SP value difference between styrene-based polymer (a-2) and biomass plasticizer (B) | (cal/cm3) 1/2 | 0.4 | 0.4 | 1.5 |
| | | Biomass carbon ratio | % | 1.0 | 1.0 | 1.0 |
| Sheet properties | | Sheet thickness MD | mm | 0.3 | 0.3 | 0.3 |
| | | Sheet thickness TD | mm | 0.3 | 0.3 | 0.3 |
| | | Fracture point (strain)MD (%) | % | 82 | 77 | 61 |
| | | Fracture point (strain)TD (%) | % | 91 | 87 | 68 |
| | | Appearance evaluation (1) (number of stains) | number/10m | 0 | 1 | 2 |

[Example 6]

(Producing method for styrene-based resin composition (PS-1))

A polymerization liquid obtained by mixing and dissolving 3.4 mass% of styrene, 1.8 mass% of polybutadiene rubber (Diene 35 produced by Asahi Kasei Chemicals Corporation), 10 mass% of ethylbenzene, 4.8 mass% of Newcizer 510R (produced by NOF Corporation), 0.016 mass% of 1.1-bis(t-butylperoxy)cyclohexane, 0.10 mass% of $\alpha$-methylstyrene dimer, and 0.1 mass% of an antioxidant (Irganox 1076 (produced by BASF Japan Ltd.)) was continuously charged at 0.78 liters/hr into a 1.5 liter laminar flow reactor-1 including a stirrer and capable of temperature control in three zones, and the temperature was adjusted to 110 °C/118 °C/124 °C. The rotation speed of the stirrer was 200 rotations per minute. The reaction rate at the reactor outlet was 31 %.

The reaction liquid was then sent to a 1.5-liter laminar flow reactor-2 including a stirrer connected in series with the laminar flow reactor-1 and capable of temperature control in three zones. The stirring speed of the stirrer was set to 40 rotations per minute, and the temperature was set to 129 °C/137 °C/147 °C. Further, 0.04 mass% of $\alpha$-methyl styrene dimer was added from the upper stage of the laminar flow reactor-2. The reaction liquid was then sent to a 1.5-liter laminar flow reactor-3 including a stirrer and capable of temperature control in three zones. The rotation speed of the stirrer was 10 rotations per minute, and the temperature was set to 152 °C/156 °C/160 °C.

The polymer solution continuously discharged from the polymerization reactor (laminar flow reactor-3) was devolatilized at a reduced pressure of 0.8 kPa and then pelletized using an vacuum vent-equipped extruder, to produce a styrene-based resin composition (PS-1). The temperature of the extruder was set at 230 °C. The polymer matrix phase of the styrene-based resin composition (PS-1) contained polystyrene, and the SP value of the polystyrene was 8.6 $(\text{cal/cm}^3)^{1/2}$. For the obtained styrene-based resin composition (PS-1), the physical properties of the styrene-based resin composition shown in Table 4 were measured by the methods described in the "1. Measurement and evaluation methods" section above.

[Examples 7 to 21, 23, 24]

<Production of styrene-based resin compositions (PS-2) to (PS-19)>

Styrene-based resin compositions (PS-2) to (PS-16), (PS-18), and (PS-19) were produced in the same manner as the styrene-based resin composition (PS-1) except that the polymerization conditions were changed as shown in Tables 4 and 5. The physical properties of the styrene-based resin compositions shown in Tables 6 and 7 were measured by the methods described in the "Measurement and evaluation methods" section above.

[Example 22]

<Production of styrene-based resin composition (PS-17)>

A rubber-modified styrene-based resin (A-17) was produced in the same manner as the styrene-based resin composition (PS-1) except that the polymerization conditions were changed as shown in Tables 4 and 5. After this, the rubber-modified styrene-based resin ((A) component) and the biomass plasticizer (B) ((B) component) were dry blended at the compounding ratio shown in Table 7 (blending epoxidized soybean oil (product name: Newcizer 510R produced by NOF Corporation) with the rubber-modified styrene-based resin (A-17) so that the content of the epoxidized soybean oil would be 6 mass% with respect to the entire styrene-based resin composition (PS-17)). The mixture was then extruded using a twin screw kneading extruder (TEM-26SS-12 produced by Toshiba Machine Co., Ltd.) at a resin temperature of 220 °C, to produce a styrene-based resin composition (PS-17). The physical properties of the styrene-based resin composition shown in Table 7 were measured by the methods described in the "Measurement and Evaluation Methods" section above.

[Comparative Examples 5 to 6]

<Preparation of styrene-based resin compositions (PS-20) to (PS-21)>

Styrene-based resin compositions (PS-20) to (PS-21) were produced in the same manner as the styrene-based resin composition (PS-1) except that the polymerization conditions were changed as shown in Tables 4 and 5. The physical properties of the styrene-based resin compositions shown in Table 7 were measured by the methods described in the "Measurement and Evaluation Methods" section above.

[Comparative Example 7]

<Preparation of styrene-based resin composition (PS-22)>

A styrene-based resin composition (PS-22) was produced by dry blending polylactic acid (product name: LX175 produced by Total Corbinion, PLA) with the foregoing rubber-modified styrene-based resin (A-17) produced in a laminar flow reactor using the raw material composition shown in Table 5 so that the polylactic acid content would be 6 mass% with respect to the entire styrene-based resin composition (PS-22), and then extruding the mixture using a twin screw kneading extruder (TEM-26SS-12 produced by Toshiba Machine Co., Ltd.) at a resin temperature of 220 °C. The physical properties of the styrene-based resin composition shown in Table 7 were measured by the methods described in the "Measurement and Evaluation Methods" section above.

[Table 4]

| Table 4 | | Type of prepared composition or resin | PS-1 | PS-2 | PS-3 | PS-4 | PS-5 | PS-6 | PS-7 | PS-8 | PS-9 | PS-10 | PS-11 |
|---|---|---|---|---|---|---|---|---|---|---|---|---|---|
| Raw material supply flow rate | | L/hr | 0.78 | 0.78 | 0.78 | 0.78 | 0.78 | 0.78 | 0.78 | 0.78 | 0.78 | 0.78 | 0.78 |
| Raw material composition | Styrene (SM) | mass% | 83.4 | 83.4 | 78 | 74.8 | 84.3 | 83.1 | 83.2 | 83.7 | 87.4 | 87.4 | 85.8 |
| | Ethylbenzene (EB) | mass% | 10 | 10 | 10 | 10 | 10 | 10 | 10 | 10 | 10 | 10 | 10 |
| | Polybutadiene rubber (PBD) | mass% | 1.8 | 1.8 | 7.2 | 10.4 | 0.9 | 0 | 2 | 1.5 | 1.8 | 1.8 | 1.8 |
| | Styrene butadiene rubber (SBS) | mass% | 0 | 0 | 0 | 0 | 0 | 2.1 | 0 | 0 | 0 | 0 | 0 |
| | Liquid paraffin | mass% | 0 | 0 | 0 | 0 | 0 | 0 | 0 | 0 | 0 | 0 | 0 |
| | Palm oil | mass% | 0 | 0 | 0 | 0 | 0 | 0 | 0 | 0 | 0 | 0 | 0 |
| | Epoxidized soybean oil | mass% | 4.8 | 4.8 | 4.8 | 4.8 | 4.8 | 4.8 | 4.8 | 4.8 | 0.8 | 0.8 | 2.4 |
| Polymerization initiator | PHC | ppm | 160 | 160 | 160 | 160 | 160 | 100 | 260 | 30 | 160 | 160 | 160 |
| Chain transfer agent | In first reactor | ppm | 1000 | 1000 | 800 | 600 | 1000 | 1000 | 100 | 1000 | 1000 | 1000 | 1000 |
| | In second reactor | ppm | 400 | 2000 | 200 | 200 | 400 | 400 | 1400 | 400 | 400 | 400 | 400 |
| Reactor conditions | First reactor (upper stage) | °C | 110 | 110 | 114 | 115 | 110 | 110 | 107 | 110 | 110 | 110 | 110 |
| | First reactor (middle stage) | °C | 118 | 118 | 122 | 123 | 118 | 118 | 115 | 118 | 118 | 118 | 118 |
| | First reactor (lower stage) | °C | 124 | 124 | 128 | 129 | 124 | 124 | 120 | 124 | 124 | 124 | 124 |
| | First reactor stirring number | rpm | 200 | 200 | 200 | 200 | 200 | 200 | 200 | 60 | 200 | 200 | 200 |
| | Second reactor (upper stage) | °C | 129 | 129 | 131 | 131 | 129 | 129 | 128 | 129 | 129 | 129 | 129 |
| | Second reactor (middle stage) | °C | 137 | 137 | 137 | 137 | 137 | 137 | 136 | 137 | 137 | 137 | 137 |
| | Second reactor (lower stage) | °C | 147 | 147 | 147 | 147 | 147 | 147 | 145 | 147 | 147 | 147 | 147 |
| | Third reactor (upper stage) | °C | 152 | 152 | 150 | 150 | 152 | 152 | 150 | 152 | 152 | 152 | 152 |
| | Third reactor (middle stage) | °C | 156 | 156 | 154 | 154 | 156 | 156 | 154 | 156 | 156 | 156 | 156 |
| | Third reactor (lower stage) | °C | 160 | 160 | 158 | 158 | 160 | 160 | 158 | 160 | 160 | 160 | 160 |
| Volatile system | Resin temperature | °C | 230 | 230 | 230 | 230 | 230 | 230 | 230 | 230 | 230 | 230 | 230 |
| | Pressure | kPa | 0.8 | 0.8 | 0.8 | 0.8 | 0.8 | 0.8 | 0.8 | 0.8 | 0.8 | 0.8 | 0.8 |

[Table 5]

EP 4 253 475 A1

| Table 5 | | Type of prepared composition or resin | PS-12 | PS-13 | PS-14 | PS-15 | PS-16 | A-17 | PS-18 | PS-19 | PS-20 | PS-21 |
|---|---|---|---|---|---|---|---|---|---|---|---|---|
| Raw material supply flow rate | | L/hr | 0.78 | 0.78 | 0.78 | 0.78 | 0.78 | 0.78 | 0.78 | 0.78 | 0.78 | 0.78 |
| Raw material composition | Styrene (SM) | mass% | 81.8 | 80.2 | 77.8 | 83.4 | 85 | 88.2 | 85.8 | 83.4 | 88.2 | 88.1936 |
| | Ethylbenzene (EB) | mass% | 10 | 10 | 10 | 10 | 10 | 10 | 10 | 10 | 10 | 10 |
| | Polybutadiene rubber (PBD) | mass% | 1.8 | 1.8 | 1.8 | 1.8 | 1.8 | 1.8 | 1.8 | 1.8 | 1.8 | 1.8 |
| | Styrene butadiene rubber (SBS) | mass% | 0 | 0 | 0 | 0 | 0 | 0 | 0 | 0 | 0 | 0 |
| | Liquid paraffin | mass% | 0 | 0 | 0 | 0.8 | 1.6 | 0 | 0 | 0 | 4.8 | 0 |
| | Palm oil | mass% | 0 | 0 | 0 | 0.0 | 0 | 0 | 2.4 | 4.8 | 0 | 0 |
| | Epoxidized soybean oil | mass% | 6.4 | 8 | 10.4 | 4.0 | 3.2 | 0 | 0 | 0 | 0 | 0.0064 |
| Polymerization initiator | PHC | ppm | 160 | 160 | 160 | 160 | 160 | 160 | 160 | 160 | 160 | 160 |
| Chain transfer agent | In first reactor | ppm | 900 | 900 | 900 | 1000 | 1000 | 1200 | 1000 | 1000 | 1000 | 1200 |
| | In second reactor | ppm | 300 | 300 | 300 | 400 | 400 | 400 | 400 | 400 | 400 | 400 |
| Reactor conditions | First reactor (upper stage) | °C | 110 | 110 | 110 | 110 | 110 | 110 | 110 | 110 | 110 | 110 |
| | First reactor (middle stage) | °C | 118 | 118 | 118 | 118 | 118 | 118 | 118 | 118 | 118 | 118 |
| | First reactor (lower stage) | °C | 124 | 124 | 124 | 124 | 124 | 124 | 124 | 124 | 124 | 124 |
| | First reactor stirring number | rpm | 200 | 200 | 200 | 200 | 200 | 200 | 200 | 200 | 200 | 200 |
| | Second reactor (upper stage) | °C | 129 | 129 | 129 | 129 | 129 | 129 | 129 | 129 | 129 | 129 |
| | Second reactor (middle stage) | °C | 137 | 137 | 137 | 137 | 137 | 137 | 137 | 137 | 137 | 137 |
| | Second reactor (lower stage) | °C | 147 | 147 | 147 | 147 | 147 | 147 | 147 | 147 | 147 | 147 |
| | Third reactor (upper stage) | °C | 152 | 152 | 152 | 152 | 152 | 152 | 152 | 152 | 152 | 152 |
| | Third reactor (middle stage) | °C | 156 | 156 | 156 | 156 | 156 | 156 | 156 | 156 | 156 | 156 |
| | Third reactor (lower stage) | °C | 160 | 160 | 160 | 160 | 160 | 160 | 160 | 160 | 160 | 160 |
| Volatile system | Resin temperature | °C | 230 | 230 | 230 | 230 | 230 | 230 | 230 | 230 | 230 | 230 |
| | Pressure | kPa | 0.8 | 0.8 | 0.8 | 0.8 | 0.8 | 0.8 | 0.8 | 0.8 | 0.8 | 0.8 |

[Table 6]

| Table 6 | | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|
| Composition ratio (mass%) | Composition type | PS-1 | PS-2 | PS-3 | PS-4 | PS-5 | PS-6 | PS-7 | PS-8 | PS-9 | PS-10 | PS-11 |
| | Epoxidized soybean oil (mass%) | 6 | 6 | 6 | 6 | 6 | 6 | 6 | 6 | 2 | 1 | 3 |
| | Palm oil (mass%) | 0 | 0 | 0 | 0 | 0 | 0 | 0 | 0 | 0 | 0 | 0 |
| | Liquid paraffin (mass%) | 0 | 0 | 0 | 0 | 0 | 0 | 0 | 0 | 0 | 0 | 0 |
| | Polylactic acid (mass%) | 0 | 0 | 0 | 0 | 0 | 0 | 0 | 0 | 0 | 0 | 0 |
| | Melt mass flow rate (g/10min) | 27 | 45 | 13 | 11 | 28 | 26 | 25 | 29 | 13 | 11 | 17 |
| | Average particle diameter of rubbery polymer particles (a-2) (µm) | 2.2 | 2.2 | 1.9 | 2.1 | 2.3 | 0.4 *1 | 1.0 | 3.5 | 2.1 | 2.1 | 2.2 |
| | Vicat softening temperature (°C) | 80 | 80 | 79 | 78 | 81 | 81 | 80 | 80 | 92 | 95 | 88 |
| | Content of rubbery polymer particles (a-2) (%) | 8 | 8 | 22 | 27 | 4 | 8 | 8 | 8 | 8 | 8 | 8 |
| | Content of rubbery polymer (%) | 2.3 | 2.3 | 9.6 | 13 | 1.2 | 2.7 | 2.3 | 2.1 | 2.3 | 2.3 | 2.3 |
| | Swelling index | 10 | 10 | 10 | 10 | 10 | 5 *2 | 10 | 10 | 10 | 10 | 10 |
| Polymer properties | SP value of styrene-based polymer (a-1) in polymer matrix phase | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) |
| | SP value of biomass plasticizer (B) | 9.0 | 9.0 | 9.0 | 9.0 | 9.0 | 9.0 | 9.0 | 9.0 | 9.0 | 9.0 | 9.0 |
| | SP value difference between styrene-based polymer (a-1) and biomass plasticizer (B) | 0.4 | 0.4 | 0.4 | 0.4 | 0.4 | 0.4 | 0.4 | 0.4 | 0.4 | 0.4 | 0.4 |
| | Number average molecular weight of styrene-based polymer (a-1) (Mn) | 7 | 4.8 | 7 | 7 | 7 | 7 | 6 | 7 | 7 | 7 | 7 |
| | Weight average molecular weight of styrene-based polymer (a-1) (Mw) | 16 | 13 | 16 | 16 | 16 | 16 | 17 | 16 | 16 | 16 | 16 |
| Impact resistance | Charpy impact strength (kJ/m²) | 4.6 | 3.2 | 9 | 14 | 2.8 | 2.8 | 4.5 | 4.7 | 4.5 | 4.6 | 4.7 |
| Cooling time during molding*5 | Cooling time for 10 shots of injection molding (sec) | 90 | 90 | 95 | 100 | 90 | 90 | 90 | 90 | 95 | 100 | 90 |
| Mold staining during injection molding*6 | Number of shots upon mold staining (times) | >150 | >150 | >150 | >150 | >150 | >150 | >150 | >150 | >150 | >150 | >150 |
| | Biomass carbon ratio in biomass plasticizer (B) (%) | 100 | 100 | 100 | 100 | 100 | 100 | 100 | 100 | 100 | 100 | 100 |

*1 Particle diameter measurement by coulter laser.
*2 Swelling index in MEK/MeOH=9/1 solution
*3 PS-17 prepared by adding 6wt% of ESO to A-17 and kneading.
*4 PS-22 prepared by adding 6wt% of PLA to A-17 and kneading.
*5 Cooling time sufficient for molded article to solidify without deformation when injection molding ten 2mm plates.
 In this example, molding was performed at mold temperature of 45°C using injection molding machine EC60N by Toshiba Machine Co., Ltd.
*6 100 or more was evaluated as pass because mold cleaning frequency increases and productivity decreases when less than 100.

[Table 7]

EP 4 253 475 A1

42

| Table 7 | | Example 17 | Example 18 | Example 19 | Example 20 | Example 21 | Example 22 | Example 23 | Example 24 | Comparative Example 5 | Comparative Example 6 | Comparative Example 7 |
|---|---|---|---|---|---|---|---|---|---|---|---|---|
| Composition ratio (mass%) | Composition type | PS-12 | PS-13 | PS-14 | PS-15 | PS-16 | PS-17 | PS-18 | PS-19 | PS-20 | PS-21 | PS-22 |
| | Epoxidized soybean oil (mass%) | 8 | 10 | 13 | 5 | 4 | 6 | 0 | 0 | 0 | 0.008 | 0 |
| | Palm oil (mass%) | 0 | 0 | 0 | 0 | 0 | 0 | 3 | 6 | 0 | 0 | 0 |
| | Liquid paraffin (mass%) | 0 | 0 | 0 | 1 | 2 | 0 | 0 | 0 | 6 | 0 | 0 |
| | Polylactic acid (mass%) | 0 | 0 | 0 | 0 | 0 | 0 | 0 | 0 | 0 | 0 | 6 |
| Polymer properties | Melt mass flow rate (g/10min) | 35 | 47 | 68 | 25 | 26 | 27 | 18 | 28 | 29 | 8 | 7 |
| | Average particle diameter of rubbery polymer particles (a-2) ($\mu$m) | 2.2 | 2.3 | 2.2 | 2.1 | 2.2 | 2.2 | 2.2 | 2.2 | 2.2 | 2.2 | 2.2 |
| | Vicat softening temperature (°C) | 75 | 70 | 64 | 80 | 80 | 80 | 88 | 80 | 81 | 99 | 99 |
| | Content of rubbery polymer particles (a-2) (%) | 8 | 8 | 8 | 8 | 8 | 8 | 8 | 8 | 8 | 8 | 8 |
| | Content of rubbery polymer (%) | 2.3 | 2.3 | 2.3 | 2.2 | 2.3 | 2.3 | 2.3 | 2.3 | 2.3 | 2.3 | 2.3 |
| | Swelling index | 10 | 10 | 10 | 10 | 10 | 10.5 | 11 | 11 | 10 | 10.5 | 10 |
| | SP value of styrene-based polymer (a-1) in polymer matrix phase | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) | 8.6 (Polystyrene) |
| | SP value of biomass plasticizer (B) | 9.0 | 9.0 | 9.0 | 8.7 | 8.4 | 9 | 8.2 | 8.2 | 7.3 | 9.0 | - |
| | SP value difference between styrene-based polymer (a-1) and biomass plasticizer (B) | 0.4 | 0.4 | 0.4 | 0.1 | 0.2 | 0.4 | 0.4 | 0.4 | 1.3 | 0.4 | - |
| | Number average molecular weight of styrene-based polymer (a-1) (Mn) | 7 | 7 | 7 | 7 | 7 | 7 | 7 | 7 | 6.5 | 7 | 7 |
| | Weight average molecular weight of styrene-based polymer (a-1) (Mw) | 16 | 16 | 16 | 16 | 16 | 16 | 16 | 16 | 15.5 | 16 | 16 |
| Impact resistance | Charpy impact strength (kJ/m$^2$) | 4.6 | 4.3 | 4.6 | 4.6 | 4.8 | 4.9 | 4.8 | 4.8 | 4.5 | 4.2 | 3.3 |
| Cooling time during molding*5 | Cooling time for 10 shots of injection molding (sec) | 95 | 95 | 100 | 90 | 90 | 90 | 90 | 90 | 90 | 110 | 110 |
| Mold staining during injection molding*6 | Number of shots upon mold staining (times) | >150 | 135 | 124 | 144 | 111 | >150 | >150 | >150 | 68 | >150 | >150 |
| Biomass carbon ratio in biomass plasticizer (B) (%) | | 100 | 100 | 100 | 83 | 67 | 100 | 100 | 100 | 0 | 100 | 100 |

[Example 25]

(Producing method for styrene-based resin composition of Example 25 using resin composition (PS-23))

A polymerization liquid obtained by mixing and dissolving 92.1 mass% of styrene, 6.0 mass% of ethylbenzene, 3.2 mass% of polybutadiene rubber (Diene 55 produced by Asahi Kasei Chemicals Corp), 0.8 mass% of Multi Ace 20 (S) (produced by Nisshin Oillio Group Co., Ltd.) was continuously charged at 3.24 liters/hr into a 6.2-liter laminar flow reactor-1 including a stirrer and capable of temperature control in three zones, and the temperature was adjusted to 121 °C/125 °C/131 °C. The rotation speed of the stirrer was 70 rotations per minute. The reaction rate at the reactor outlet was 26 %.

The reaction liquid was then sent to a 6.2-liter laminar flow reactor-2 including a stirrer connected in series with the laminar flow reactor-1 and capable of temperature control in three zones. The stirring speed of the stirrer was set to 40 rotations per minute, and the temperature was set to 136 °C/140 °C/144 °C. The reaction liquid was then sent to a 6.2-liter laminar flow reactor-3 including a stirrer and capable of temperature control in three zones. The rotation speed of the stirrer was 10 rotations per minute, and the temperature was set to 146 °C/148 °C/150 °C.

The polymer solution continuously discharged from the polymerization reactor (laminar flow reactor-3) was devolatilized and then pelletized at a reduced pressure of 0.8 kPa using an vacuum vent-equipped extruder heated to 230 °C, to produce a composition (PS-23).

Next, a mixture of stearic acid/calcium stearate = 3:1 as a release agent (higher fatty acid compound) was added to the composition (PS-23) so as to be 0.25 mass% with respect to the entire styrene-based resin composition, and kneaded in an extruder to produce a styrene-based resin composition of Example 25. After this, the physical properties of the styrene-based resin compositions shown in Table 9-1 were measured by the methods described in the "1. Measurement and evaluation methods" section above.

The polymer matrix phase of the composition (PS-23) contained polystyrene as the styrene-based polymer (a-1), and the SP value of the polystyrene was 8.6 $(cal/cm^3)^{1/2}$.

[Examples 26 to 60]

(Production method for styrene-based resin compositions of Examples 26 to 60)

Compositions (PS-24) to (PS-57) were produced in the same manner as the composition (PS-23) except that the polymerization conditions were changed as shown in Tables 8-1 to 8-3. After this, a predetermined amount of a mixture of stearic acid/calcium stearate = 3:1 was added to produce styrene-based resin compositions of Examples 26 to 59. A styrene-based resin composition of Example 60 (composition (PS-66)) was produced by producing a composition (PS-58), then blending the composition with palm oil in an amount of 3 mass% and a mixture of stearic acid/calcium stearate = 3:1 as a release agent (higher fatty acid compound) in an amount of 0.25 mass% with respect to the entire styrene-based resin composition, and kneading the mixture with an extruder. After this, the physical properties of the styrene-based resin compositions shown in Tables 9-1 to 9-3 were measured by the methods described in the "1. Measurement and evaluation methods" section above.

[Comparative Examples 8 to 16]

<Production method for styrene-based resin compositions of Comparative Examples 8 to 16>

Compositions (PS-58) to (PS-65) were produced in the same manner as the composition (PS-23) except that the polymerization conditions were changed as shown in Table 8-3.

A styrene-based resin composition of Comparative Example 14 (= composition (PS-67)) was produced by adding, to the composition (PS-58), polylactic acid (PLA) in an amount of 3 mass% and a mixture of stearic acid/calcium stearate = 3:1 as a release agent in the amount shown in Table 9-4 with respect to the entire styrene-based resin composition, and kneading the mixture with a twin screw extruder.

After this, the physical properties of the styrene-based resin compositions shown in Table 9-4 were measured by the methods described in the "1. Measurement and evaluation methods" section above.

[Table 8-1]

EP 4 253 475 A1

| Table 8-1 | | Type of prepared composition or resin | PS-23 | PS-24 | PS-25 | PS-26 | PS-27 | PS-28 | PS-29 | PS-30 | PS-31 | PS-32 | PS-33 | PS-34 | PS-35 | PS-36 | PS-37 |
|---|---|---|---|---|---|---|---|---|---|---|---|---|---|---|---|---|---|
| Raw material supply flow rate | | L/hr | 3.24 | 3.24 | 3.24 | 3.24 | 3.24 | 3.24 | 3.24 | 3.24 | 3.24 | 3.24 | 3.24 | 3.24 | 3.24 | 3.24 | 3.24 |
| Raw material composition | Styrene (SM) | mass% | 90 | 89.2 | 88.9 | 88.1 | 87.8 | 87 | 88.9 | 88.9 | 88.9 | 88.6 | 88.6 | 88.9 | 88.6 | 87.8 | 88.9 |
| | Methyl methacrylate (MMA) | mass% | 0 | 0 | 0 | 0 | 0 | 0 | 0 | 0 | 0 | 0 | 0 | 0 | 0 | 0 | 0 |
| | Acrylonitrile (AN) | mass% | 0 | 0 | 0 | 0 | 0 | 0 | 0 | 0 | 0 | 0 | 0 | 0 | 0 | 0 | 0 |
| | Ethylbenzene (EB) | mass% | 6 | 6 | 5.5 | 5.5 | 5 | 5 | 5.5 | 5.5 | 5.5 | 5.5 | 5.5 | 5.5 | 5.5 | 6 | 5.5 |
| | Polybutadiene rubber (Diene 55) | mass% | 3.2 | 3.2 | 3.2 | 3.2 | 3.2 | 3.2 | 3.2 | 3.2 | 3.2 | 3.2 | 3.2 | 3.2 | 3.5 | 3.8 | 3.2 |
| | Polybutadiene rubber (15HB) | mass% | 0 | 0 | 0 | 0 | 0 | 0 | 0 | 0 | 0 | 0 | 0 | 0 | 0 | 0 | 0 |
| | Liquid paraffin | mass% | 0 | 0 | 0 | 0 | 0 | 0 | 0 | 0 | 0 | 1.5 | 1.5 | 0 | 0 | 0 | 0 |
| | Palm oil | mass% | 0.8 | 1.6 | 2.4 | 3.2 | 4 | 4.8 | 0 | 0 | 1.2 | 1.2 | 0 | 2.4 | 2.4 | 2.4 | 2.4 |
| | Soybean oil | mass% | 0 | 0 | 0 | 0 | 0 | 0 | 2.4 | 0 | 0 | 0 | 1.2 | 0 | 0 | 0 | 0 |
| | Epoxidized soybean oil | mass% | 0 | 0 | 0 | 0 | 0 | 0 | 0 | 2.4 | 1.2 | 0 | 0 | 0 | 0 | 0 | 0 |
| | Epoxidized linseed oil (2) | mass% | 0 | 0 | 0 | 0 | 0 | 0 | 0 | 0 | 0 | 0 | 0 | 0 | 0 | 0 | 0 |
| | Hydrogenated castor oil | mass% | 0 | 0 | 0 | 0 | 0 | 0 | 0 | 0 | 0 | 0 | 0 | 0 | 0 | 0 | 0 |
| Polymerization initiator | Perhexa C | ppm | 20 | 20 | 20 | 20 | 20 | 20 | 20 | 20 | 20 | 20 | 20 | 20 | 20 | 20 | 20 |
| | Perbutyl D | ppm | 100 | 100 | 100 | 100 | 100 | 100 | 100 | 100 | 100 | 100 | 100 | 100 | 100 | 100 | 100 |
| Chain transfer agent | a-MSD | ppm | 600 | 600 | 600 | 600 | 600 | 600 | 600 | 600 | 600 | 600 | 600 | 600 | 600 | 200 | 600 |
| Reactor conditions | First reactor (upper stage) | °C | 121 | 121 | 121 | 121 | 121 | 121 | 121 | 121 | 121 | 121 | 121 | 121 | 121 | 121 | 121 |
| | First reactor (middle stage) | °C | 125 | 125 | 125 | 125 | 124 | 124 | 125 | 125 | 125 | 125 | 125 | 125 | 125 | 125 | 125 |
| | First reactor (lower stage) | °C | 131 | 131 | 131 | 131 | 130 | 130 | 131 | 131 | 131 | 131 | 131 | 131 | 131 | 131 | 131 |
| | First reactor stirring number | rpm | 70 | 70 | 70 | 70 | 70 | 70 | 70 | 70 | 70 | 70 | 70 | 90 | 110 | 140 | 50 |
| | Second reactor (upper stage) | °C | 136 | 136 | 136 | 136 | 136 | 136 | 136 | 136 | 136 | 136 | 136 | 136 | 136 | 136 | 136 |
| | Second reactor (middle stage) | °C | 140 | 140 | 140 | 140 | 140 | 140 | 140 | 140 | 140 | 140 | 140 | 140 | 140 | 140 | 140 |
| | Second reactor (lower stage) | °C | 144 | 144 | 144 | 144 | 144 | 145 | 144 | 144 | 144 | 144 | 144 | 144 | 144 | 144 | 144 |
| | Third reactor (upper stage) | °C | 146 | 146 | 146 | 146 | 146 | 147 | 146 | 146 | 146 | 146 | 146 | 146 | 146 | 146 | 146 |
| | Third reactor (middle stage) | °C | 148 | 148 | 148 | 148 | 148 | 149 | 148 | 148 | 148 | 148 | 148 | 148 | 148 | 148 | 148 |
| | Third reactor (lower stage) | °C | 150 | 150 | 150 | 150 | 150 | 151 | 150 | 150 | 150 | 150 | 150 | 150 | 150 | 150 | 150 |
| Volatile system | Resin temperature | °C | 230 | 230 | 230 | 230 | 230 | 230 | 230 | 225 | 230 | 230 | 225 | 230 | 230 | 230 | 230 |
| | Pressure | kPa | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Post additive | Higher fatty acid compound (C) (mixture of stearic acid and calcium stearate) Stearic acid:calcium stearate=3:1 | mass% | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |

[Table 8-2]

| Table 8-2 | | Type of prepared composition or resin | PS-38 | PS-39 | PS-40 | PS-41 | PS-42 | PS-43 | PS-44 | PS-45 | PS-46 | PS-47 | PS-48 | PS-49 | PS-50 | PS-51 | PS-52 |
|---|---|---|---|---|---|---|---|---|---|---|---|---|---|---|---|---|---|
| Raw material supply flow rate | | L/hr | 3.24 | 3.24 | 3.24 | 3.24 | 3.24 | 3.24 | 3.24 | 3.24 | 3.24 | 3.24 | 3.24 | 3.24 | 3.24 | 3.24 | 3.24 |
| Raw material composition | Styrene (SM) | mass% | 88.4 | 88.9 | 88.9 | 88.9 | 87.4 | 89.2 | 88.3 | 88.9 | 88.9 | 88.6 | 71.8 | 44.3 | 71.6 | 62.8 | 88.9 |
| | Methyl methacrylate (MMA) | mass% | 0 | 0 | 0 | 0 | 0 | 0 | 0 | 0 | 0 | 0 | 16.8 | 44.3 | 0 | 0 | 0 |
| | Acrylonitrile (AN) | mass% | 0 | 0 | 0 | 0 | 0 | 0 | 0 | 0 | 0 | 0 | 0 | 0 | 17 | 25.8 | 0 |
| | Ethylbenzene (EB) | mass% | 5.5 | 6 | 5.5 | 5.5 | 7 | 6 | 4.5 | 5.5 | 5.5 | 5.5 | 6.5 | 6.5 | 6.5 | 6.5 | 5.5 |
| | Polybutadiene rubber (Diene 55) | mass% | 3.7 | 2.7 | 3.2 | 3.2 | 3.2 | 2.4 | 4.8 | 3.2 | 3.2 | 0 | 2.8 | 2.8 | 2.8 | 2.8 | 3.2 |
| | Polybutadiene rubber (15HB) | mass% | 0 | 0 | 0 | 0 | 0 | 0 | 0 | 0 | 0 | 3.5 | 0 | 0 | 0 | 0 | 0 |
| | Liquid paraffin | mass% | 0 | 0 | 0 | 0 | 0 | 0 | 0 | 0 | 0 | 0 | 0 | 0 | 0 | 0 | 0 |
| | Palm oil | mass% | 2.4 | 2.4 | 2.4 | 2.4 | 2.4 | 2.4 | 2.4 | 2.4 | 2.4 | 2.4 | 2.1 | 2.1 | 2.1 | 2.1 | 0 |
| | Soybean oil | mass% | 0 | 0 | 0 | 0 | 0 | 0 | 0 | 0 | 0 | 0 | 0 | 0 | 0 | 0 | 0 |
| | Epoxidized soybean oil | mass% | 0 | 0 | 0 | 0 | 0 | 0 | 0 | 0 | 0 | 0 | 0 | 0 | 0 | 0 | 0 |
| | Epoxidized linseed oil (2) | mass% | 0 | 0 | 0 | 0 | 0 | 0 | 0 | 0 | 0 | 0 | 0 | 0 | 0 | 0 | 0 |
| | Hydrogenated castor oil | mass% | 0 | 0 | 0 | 0 | 0 | 0 | 0 | 0 | 0 | 0 | 0 | 0 | 0 | 0 | 2.4 |
| Polymerization initiator | Perhexa C | ppm | 20 | 20 | 20 | 20 | 20 | 20 | 20 | 20 | 20 | 20 | 20 | 20 | 20 | 20 | 20 |
| | Perbutyl D | ppm | 100 | 100 | 100 | 100 | 100 | 100 | 100 | 100 | 100 | 100 | 120 | 135 | 120 | 135 | 100 |
| Chain transfer agent | a-MSD | ppm | 600 | 600 | 200 | 1000 | 1500 | 600 | 600 | 600 | 600 | 600 | 600 | 600 | 600 | 600 | 600 |
| Reactor conditions | First reactor (upper stage) | °C | 120 | 121 | 121 | 121 | 123 | 121 | 120 | 121 | 121 | 121 | 121 | 121 | 121 | 121 | 121 |
| | First reactor (middle stage) | °C | 124 | 125 | 125 | 125 | 127 | 125 | 124 | 125 | 125 | 125 | 125 | 125 | 125 | 125 | 125 |
| | First reactor (lower stage) | °C | 130 | 131 | 131 | 131 | 133 | 131 | 129 | 131 | 131 | 131 | 131 | 131 | 131 | 131 | 131 |
| | First reactor stirring number | rpm | 70 | 70 | 50 | 90 | 110 | 70 | 80 | 70 | 70 | 55 | 60 | 60 | 60 | 60 | 70 |
| | Second reactor (upper stage) | °C | 136 | 136 | 136 | 136 | 140 | 136 | 136 | 136 | 136 | 136 | 136 | 136 | 137 | 136 | 136 |
| | Second reactor (middle stage) | °C | 140 | 140 | 140 | 140 | 144 | 140 | 140 | 140 | 140 | 140 | 137 | 137 | 138 | 135 | 140 |
| | Second reactor (lower stage) | °C | 144 | 144 | 144 | 144 | 148 | 144 | 144 | 144 | 144 | 144 | 139 | 138 | 139 | 137 | 144 |
| | Third reactor (upper stage) | °C | 146 | 146 | 146 | 146 | 150 | 146 | 146 | 146 | 146 | 146 | 141 | 139 | 140 | 139 | 146 |
| | Third reactor (middle stage) | °C | 148 | 148 | 148 | 148 | 152 | 148 | 148 | 148 | 148 | 148 | 143 | 140 | 141 | 140 | 148 |
| | Third reactor (lower stage) | °C | 150 | 150 | 150 | 150 | 154 | 150 | 150 | 150 | 150 | 150 | 145 | 141 | 142 | 141 | 150 |
| Volatile system | Resin temperature | °C | 230 | 230 | 230 | 230 | 230 | 230 | 230 | 215 | 245 | 240 | 230 | 230 | 230 | 230 | 225 |
| | Pressure | kPa | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Post additive | Higher fatty acid compound (C) (mixture of stearic acid and calcium stearate) Stearic acid:calcium stearate=3:1 | mass% | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |

[Table 8-3]

EP 4 253 475 A1

| Table 8-3 | | Type of prepared composition or resin | PS-53 | PS-54 | PS-55 | PS-56 | PS-57 | PS-58 | PS-59 | PS-60 | PS-61 | PS-62 | PS-63 | PS-64 | PS-65 |
|---|---|---|---|---|---|---|---|---|---|---|---|---|---|---|---|
| Raw material supply flow rate | | L/hr | 3.24 | 3.24 | 3.24 | 3.24 | 3.24 | 3.24 | 3.24 | 3.24 | 3.24 | 3.24 | 3.24 | 3.24 | 3.24 |
| Raw material composition | Styrene (SM) | mass% | 88.4 | 88.9 | 87.9 | 88.9 | 88.9 | 90.3 | 88.9 | 89.9 | 84.1 | 85.9 | 90.22 | 88.9 | 88.9 |
| | Methyl methacrylate (MMA) | mass% | 0 | 0 | 0 | 0 | 0 | 0 | 0 | 0 | 0 | 0 | 0 | 0 | 0 |
| | Acrylonitrile (AN) | mass% | 0 | 0 | 0 | 0 | 0 | 0 | 0 | 0 | 0 | 0 | 0 | 0 | 0 |
| | Ethylbenzene (EB) | mass% | 5.5 | 5.5 | 6.5 | 5.5 | 5.5 | 6.5 | 5.5 | 6 | 4 | 8.5 | 6.5 | 5.5 | 5.5 |
| | Polybutadiene rubber (Diene 55) | mass% | 3.2 | 3.2 | 3.2 | 3.2 | 3.2 | 3.2 | 3.2 | 1.7 | 9.5 | 3.2 | 3.2 | 3.2 | 3.2 |
| | Polybutadiene rubber (15HB) | mass% | 0 | 0 | 0 | 0 | 0 | 0 | 0 | 0 | 0 | 0 | 0 | 0 | 0 |
| | Liquid paraffin | mass% | 2.6 | 0 | 0 | 0 | 0 | 0 | 2.4 | 0 | 0 | 0 | 0 | 0 | 0 |
| | Palm oil | mass% | 0.3 | 0 | 2.4 | 2.4 | 2.4 | 0 | 0 | 2.4 | 2.4 | 2.4 | 0.08 | 2.4 | 2.4 |
| | Soybean oil | mass% | 0 | 0 | 0 | 0 | 0 | 0 | 0 | 0 | 0 | 0 | 0 | 0 | 0 |
| | Epoxidized soybean oil | mass% | 0 | 0 | 0 | 0 | 0 | 0 | 0 | 0 | 0 | 0 | 0 | 0 | 0 |
| | Epoxidized linseed oil (2) | mass% | 0 | 2.4 | 0 | 0 | 0 | 0 | 0 | 0 | 0 | 0 | 0 | 0 | 0 |
| | Hydrogenated castor oil | mass% | 0 | 0 | 0 | 0 | 0 | 0 | 0 | 0 | 0 | 0 | 0 | 0 | 0 |
| Polymerization initiator | Perhexa C | ppm | 20 | 20 | 20 | 20 | 20 | 20 | 20 | 20 | 20 | 50 | 20 | 20 | 20 |
| | Perbutyl D | ppm | 100 | 100 | 100 | 100 | 100 | 100 | 100 | 100 | 100 | 100 | 100 | 100 | 100 |
| Chain transfer agent | a-MSD | ppm | 600 | 600 | 600 | 600 | 600 | 600 | 600 | 600 | 600 | 100 | 600 | 600 | 600 |
| Reactor conditions | First reactor (upper stage) | °C | 121 | 121 | 121 | 121 | 121 | 121 | 121 | 121 | 120 | 121 | 121 | 121 | 121 |
| | First reactor (middle stage) | °C | 125 | 125 | 125 | 125 | 125 | 125 | 125 | 125 | 124 | 125 | 125 | 125 | 125 |
| | First reactor (lower stage) | °C | 131 | 131 | 131 | 131 | 131 | 131 | 131 | 131 | 130 | 131 | 131 | 131 | 131 |
| | First reactor stirring number | rpm | 70 | 70 | 70 | 70 | 70 | 70 | 70 | 70 | 70 | 160 | 70 | 70 | 70 |
| | Second reactor (upper stage) | °C | 136 | 136 | 136 | 136 | 136 | 136 | 136 | 136 | 135 | 138 | 136 | 136 | 136 |
| | Second reactor (middle stage) | °C | 140 | 140 | 140 | 140 | 140 | 140 | 140 | 140 | 140 | 142 | 140 | 140 | 140 |
| | Second reactor (lower stage) | °C | 144 | 144 | 144 | 144 | 144 | 144 | 144 | 144 | 143 | 146 | 144 | 144 | 144 |
| | Third reactor (upper stage) | °C | 146 | 146 | 146 | 146 | 146 | 146 | 146 | 146 | 145 | 148 | 146 | 146 | 146 |
| | Third reactor (middle stage) | °C | 148 | 148 | 148 | 148 | 148 | 148 | 148 | 148 | 147 | 153 | 148 | 148 | 148 |
| | Third reactor (lower stage) | °C | 150 | 150 | 150 | 150 | 150 | 149 | 150 | 150 | 148 | 155 | 150 | 150 | 150 |
| Volatile system | Resin temperature | °C | 230 | 225 | 230 | 230 | 230 | 225 | 225 | 230 | 230 | 230 | 225 | 230 | 230 |
| | Pressure | kPa | 0.8 | 0.8 | 0.8 | 0.8 | 0.8 | 0.8 | 0.8 | 0.8 | 0.8 | 0.8 | 0.8 | 0.8 | 0.8 |
| Post additive | Higher fatty acid compound (C) (mixture of stearic acid and calcium stearate) Stearic acid:calcium stearate=3:1 | mass% | 0.25 | 0.25 | 0.1 | 1 | 2 | 0.25 | 0.25 | 0.25 | 0.25 | 0.25 | 0.25 | 3 | 0 |

[Table 9-1]

| Table 9-1 | | | Unit | Example 25 PS-23 | Example 26 PS-24 | Example 27 PS-25 | Example 28 PS-26 | Example 29 PS-27 | Example 30 PS-28 | Example 31 PS-29 | Example 32 PS-30 | Example 33 PS-31 | Example 34 PS-32 | Example 35 PS-33 |
|---|---|---|---|---|---|---|---|---|---|---|---|---|---|---|
| Composition ratio of styrene-based resin composition (mass%) | Styrene-based polymer (a-1) | Styrene monomer unit | mass% | 94.75 | 93.75 | 92.75 | 91.75 | 90.75 | 89.75 | 92.75 | 92.75 | 92.75 | 92.75 | 92.75 |
| | | (Meth)acrylic acid monomer | mass% | 0 | 0 | 0 | 0 | 0 | 0 | 0 | 0 | 0 | 0 | 0 |
| | | (Meth)acrylate monomer | mass% | 0 | 0 | 0 | 0 | 0 | 0 | 0 | 0 | 0 | 0 | 0 |
| | | (Meth)acrylonitrile monomer | mass% | 0 | 0 | 0 | 0 | 0 | 0 | 0 | 0 | 0 | 0 | 0 |
| | Biomass plasticizer (B) | Palm oil | mass% | 1 | 2 | 3 | 4 | 0 | 0 | 0 | 0 | 1.5 | 1.5 | 0 |
| | | Soybean oil | mass% | 0 | 0 | 0 | 0 | 5 | 6 | 0 | 0 | 0 | 0 | 0 |
| | | Epoxidized soybean oil | mass% | 0 | 0 | 0 | 0 | 0 | 0 | 3 | 3 | 0 | 0 | 0 |
| | | Epoxidized linseed oil (2) | mass% | 0 | 0 | 0 | 0 | 0 | 0 | 0 | 0 | 1.5 | 0 | 1.5 |
| | | Hydrogenated castor oil | mass% | 0 | 0 | 0 | 0 | 0 | 0 | 0 | 0 | 0 | 0 | 0 |
| | Polylactic acid | | mass% | 0 | 0 | 0 | 0 | 0 | 0 | 0 | 0 | 0 | 0 | 0 |
| | Liquid paraffin | | mass% | 0 | 0 | 0 | 0 | 0 | 0 | 0 | 0 | 0 | 1.5 | 1.5 |
| | Content of rubbery polymer | | mass% | 4 | 4 | 4 | 4 | 4 | 4 | 4 | 4 | 4 | 4 | 4 |
| | Higher fatty acid compound (C) | Higher fatty acid compound (C) (mixture of stearic acid and calcium stearate) Stearic acid:calcium stearate=3:1 | mass% | 0.25 | 0.25 | 0.25 | 0.25 | 0.25 | 0.25 | 0.25 | 0.25 | 0.25 | 0.25 | 0.25 |
| Polymer properties | Rubbery polymer particles (a-2) | Average particle diameter | μm | 2.8 | 2.9 | 2.8 | 2.8 | 2.8 | 2.9 | 2.9 | 2.9 | 2.7 | 2.9 | 2.9 |
| | | Content of rubbery polymer particles (a-2) | mass% | 19 | 19 | 19 | 19 | 19 | 19 | 19 | 19 | 19 | 19 | 19 |
| | | Melt flow rate | g/10min | 3.8 | 4.8 | 6.1 | 7.5 | 8.9 | 10.2 | 6 | 5.8 | 6.1 | 6.1 | 5 |
| | | Vicat softening temperature | °C | 96 | 93 | 90 | 86 | 83 | 80 | 90 | 90 | 90 | 90 | 90 |
| | | Swelling rate of rubbery polymer particles | | 10 | 10 | 10 | 10 | 10 | 10 | 10 | 10 | 10 | 10 | 10 |
| | SP value of styrene-based polymer (a-1) in polymer matrix phase | | (cal/cm3)1/2 | 8.6 | 8.6 | 8.6 | 8.6 | 8.6 | 8.6 | 8.6 | 8.6 | 8.6 | 8.6 | 8.6 |
| | SP value of biomass plasticizer (B) | | (cal/cm3)1/2 | 8.2 | 8.2 | 8.2 | 8.2 | 8.2 | 8.2 | 8.2 | 9 | 8.6 | 7.8 | 8.2 |
| | SP value difference between styrene-based polymer (a-1) and biomass plasticizer (B) | | (cal/cm3)1/2 | 0.4 | 0.4 | 0.4 | 0.4 | 0.4 | 0.4 | 0.4 | 0.4 | 0 | 0.8 | 0.4 |
| | Number average molecular weight of styrene-based polymer (a-1) | | ×10^4 | 8 | 8 | 8 | 8 | 8 | 8 | 8 | 8 | 8 | 8 | 8 |
| | Weight average molecular weight of styrene-based polymer (a-1) | | ×10^4 | 19 | 19 | 19 | 19 | 19 | 19 | 19 | 19 | 19 | 19 | 19 |
| | Opening portion impact strength | | kg·cm | 4.6 | 5.7 | 6.5 | 6.5 | 6.1 | 5.7 | 6.4 | 4.7 | 5.5 | 6.4 | 5.6 |
| Injection blow container properties | Opening portion compressive strength (10mm displacement) | | N | 35 | 33 | 30 | 28 | 26 | 25 | 31 | 34 | 32 | 31 | 32 |
| | Buckling strength | | N | 168 | 163 | 151 | 146 | 134 | 130 | 152 | 158 | 153 | 154 | 155 |
| Injection blow moldability | Number of stringing occurrences | | number | 1 | 0 | 0 | 0 | 4 | 5 | 0 | 0 | 0 | 0 | 0 |
| | Moldability (number of blow failures/150 shots) | | number | 0 | 0 | 0 | 0 | 2 | 4 | 0 | 0 | 0 | 0 | 0 |
| | Number of shots upon mold staining | | | >150 | >150 | >150 | >150 | >150 | >150 | >150 | >150 | >150 | 140 | 135 |
| Biomass degree of biomass plasticizer (B) | | | % | 100 | 100 | 100 | 100 | 100 | 100 | 100 | 100 | 100 | 50 | 50 |
| Biomass degree in styrene-based resin composition | | | % | 1 | 2 | 3 | 4 | 5 | 6 | 3 | 3 | 3 | 1.5 | 1.5 |

47

[Table 9-2]

| Table 9-2 | | Composition type | Unit | Example 36 PS-34 | Example 37 PS-35 | Example 38 PS-36 | Example 39 PS-37 | Example 40 PS-38 | Example 41 PS-39 | Example 42 PS-40 | Example 43 PS-41 | Example 44 PS-42 | Example 45 PS-43 | Example 46 PS-44 |
|---|---|---|---|---|---|---|---|---|---|---|---|---|---|---|
| Composition ratio of styrene-based resin composition (mass%) | Styrene-based polymer (a-1) | Styrene monomer unit | mass% | 92.75 | 92.45 | 92.05 | 92.75 | 92.25 | 93.35 | 92.75 | 92.75 | 92.75 | 93.75 | 90.85 |
| | | (Meth)acrylic acid monomer | mass% | 0 | 0 | 0 | 0 | 0 | 0 | 0 | 0 | 0 | 0 | 0 |
| | | (Meth)acrylate monomer | mass% | 0 | 0 | 0 | 0 | 0 | 0 | 0 | 0 | 0 | 0 | 0 |
| | | (Meth)acrylonitrile monomer | mass% | 0 | 0 | 0 | 0 | 0 | 0 | 0 | 0 | 0 | 0 | 0 |
| | | Palm oil | mass% | 3 | 3 | 3 | 3 | 3 | 3 | 3 | 3 | 3 | 3 | 3 |
| | Biomass plasticizer (B) | Soybean oil | mass% | 0 | 0 | 0 | 0 | 0 | 0 | 0 | 0 | 0 | 0 | 0 |
| | | Epoxidized soybean oil | mass% | 0 | 0 | 0 | 0 | 0 | 0 | 0 | 0 | 0 | 0 | 0 |
| | | Epoxidized linseed oil (2) | mass% | 0 | 0 | 0 | 0 | 0 | 0 | 0 | 0 | 0 | 0 | 0 |
| | | Hydrogenated castor oil | mass% | 0 | 0 | 0 | 0 | 0 | 0 | 0 | 0 | 0 | 0 | 0 |
| | | Polylactic acid | mass% | 0 | 0 | 0 | 0 | 0 | 0 | 0 | 0 | 0 | 0 | 0 |
| | | Liquid paraffin | mass% | 0 | 0 | 0 | 0 | 0 | 0 | 0 | 0 | 0 | 0 | 0 |
| | | Content of rubbery polymer | mass% | 4 | 4.3 | 4.7 | 4 | 4.5 | 3.4 | 4 | 4 | 4 | 3 | 5.9 |
| | Higher fatty acid compound (C) | Higher fatty acid compound (C) (mixture of stearic acid and calcium stearate) Stearic acid:calcium stearate=3:1 | mass% | 0.25 | 0.25 | 0.25 | 0.25 | 0.25 | 0.25 | 0.25 | 0.25 | 0.25 | 0.25 | 0.25 |
| Rubbery polymer particles (a-2) | | Average particle diameter | μm | 2.1 | 1.6 | 1.1 | 3.7 | 2.9 | 2.9 | 2.6 | 3 | 3.2 | 2.9 | 3.1 |
| | | Content of rubbery polymer particles (a-2) | mass% | 19 | 19 | 18 | 19.5 | 22 | 15 | 19 | 19 | 19 | 13 | 25 |
| | | Melt flow rate | g/10min | 6.2 | 6.1 | 6 | 5.8 | 5.6 | 6.5 | 4.2 | 9.4 | 14 | 7.4 | 4.5 |
| | | Vicat softening temperature | °C | 90 | 90 | 89 | 90 | 89 | 90 | 90 | 90 | 89 | 91 | 88 |
| | | Swelling rate of rubbery polymer particles | | 10 | 10 | 10 | 10 | 10 | 10 | 10 | 10 | 10 | 10 | 10 |
| Polymer properties | | SP value of styrene-based polymer (a-1) in polymer matrix phase | (cal/cm3)1/2 | 8.6 | 8.6 | 8.6 | 8.6 | 8.6 | 8.6 | 8.6 | 8.6 | 8.6 | 8.6 | 8.6 |
| | | SP value of biomass plasticizer (B) | (cal/cm3)1/2 | 8.2 | 8.2 | 8.2 | 8.2 | 8.2 | 8.2 | 8.2 | 8.2 | 8.2 | 8.2 | 8.2 |
| | | SP value difference between styrene-based polymer (a-1) and biomass plasticizer (B) | (cal/cm3)1/2 | 0.4 | 0.4 | 0.4 | 0.4 | 0.4 | 0.4 | 0.4 | 0.4 | 0.4 | 0.4 | 0.4 |
| | | Number average molecular weight of styrene-based polymer (a-1) | × 10⁴ | 8 | 8 | 8 | 8 | 8 | 8 | 10 | 7 | 6 | 8 | 7.5 |
| | | Weight average molecular weight of styrene-based polymer (a-1) | × 10⁴ | 19 | 19 | 19 | 19 | 19 | 19 | 22.5 | 17 | 15 | 19 | 18.5 |
| Injection blow container properties | | Opening portion impact strength | kg·cm | 5.1 | 4.1 | 3.5 | 5.9 | 7.1 | 4.7 | 5.2 | 6.1 | 4.5 | 3.8 | 7.5 |
| | | Opening portion compressive strength (10mm displacement) | N | 31 | 32 | 33 | 28 | 26 | 32 | 31 | 28 | 26 | 36 | 25 |
| | | Buckling strength | N | 152 | 153 | 155 | 143 | 135 | 157 | 158 | 143 | 139 | 159 | 128 |
| Injection blow moldability | | Number of stringing occurrences | number | 0 | 0 | 0 | 0 | 0 | 0 | 0 | 3 | 6 | 2 | 1 |
| | | Moldability (number of blow failures/150 shots) | number | 0 | 0 | 0 | 0 | 0 | 0 | 0 | 1 | 5 | 2 | 1 |
| | | Number of shots upon mold staining | | >150 | >150 | >150 | >150 | >150 | >150 | >150 | >150 | >150 | >150 | >150 |
| Biomass degree of biomass plasticizer (B) | | | % | 100 | 100 | 100 | 100 | 100 | 100 | 100 | 100 | 100 | 100 | 100 |
| Biomass degree in styrene-based resin composition | | | % | 3 | 3 | 3 | 3 | 3 | 3 | 3 | 3 | 3 | 3 | 3 |

[Table 9-3]

| Table 9-3 | | Composition type | Unit | Example 47 PS-45 | Example 48 PS-44 | Example 49 PS-47 | Example 50 PS-48 | Example 51 PS-49 | Example 52 PS-50 | Example 53 PS-51 | Example 54 PS-52 | Example 55 PS-53 | Example 56 PS-54 | Example 57 PS-55 | Example 58 PS-56 | Example 59 PS-57 | Example 60 PS-66 |
|---|---|---|---|---|---|---|---|---|---|---|---|---|---|---|---|---|---|
| Composition ratio of styrene-based resin composition (mass%) | Styrene-based polymer (a-1) | Styrene monomer unit | mass% | 92.75 | 92.75 | 92.45 | 74.2 | 46.375 | 74.2 | 64.925 | 92.75 | 92.75 | 92.75 | 92.9 | 92 | 91 | 92.75 |
| | | (Meth)acrylic acid monomer | mass% | 0 | 0 | 0 | 0 | 0 | 0 | 0 | 0 | 0.4 | 0 | 0 | 0 | 0 | 0 |
| | | (Meth)acrylate monomer | mass% | 0 | 0 | 0 | 18.55 | 46.375 | 18.55 | 0 | 0 | 0 | 0 | 0 | 0 | 0 | 0 |
| | | (Meth)acrylonitrile monomer | mass% | 0 | 0 | 0 | 0 | 0 | 0 | 27.825 | 0 | 0 | 0 | 0 | 0 | 0 | 0 |
| | | Palm oil | mass% | 3 | 3 | 3 | 3 | 3 | 3 | 3 | 0 | 0 | 0 | 3 | 3 | 3 | 3 |
| | Biomass plasticizer (B) | Soybean oil | mass% | 0 | 0 | 0 | 0 | 0 | 0 | 0 | 0 | 0 | 0 | 0 | 0 | 0 | 0 |
| | | Epoxidized soybean oil | mass% | 0 | 0 | 0 | 0 | 0 | 0 | 0 | 0 | 0 | 3 | 0 | 0 | 0 | 0 |
| | | Epoxidized linseed oil (2) | mass% | 0 | 0 | 0 | 0 | 0 | 0 | 0 | 0 | 0 | 0 | 0 | 0 | 0 | 0 |
| | | Hydrogenated castor oil | mass% | 0 | 0 | 0 | 0 | 0 | 0 | 0 | 3 | 0 | 0 | 0 | 0 | 0 | 0 |
| | | Polylactic acid | mass% | 0 | 0 | 0 | 0 | 0 | 0 | 0 | 0 | 0 | 0 | 0 | 0 | 0 | 0 |
| | | Liquid paraffin | mass% | 0 | 0 | 0 | 0 | 0 | 0 | 0 | 0 | 2.6 | 0 | 0 | 0 | 0 | 0 |
| | | Content of rubbery polymer | mass% | 4 | 4 | 4.3 | 4 | 4 | 4 | 4 | 4 | 4 | 4 | 4 | 4 | 4 | 4 |
| | Higher fatty acid compound (C) | Higher fatty acid compound (C) (mixture of stearic acid and calcium stearate) Stearic acid:calcium stearate=3:1 | mass% | 0.25 | 0.25 | 0.25 | 0.25 | 0.25 | 0.25 | 0.25 | 0.25 | 0.25 | 0.25 | 0.1 | 1 | 2 | 0.25 |
| | Rubbery polymer particles (a-2) | Average particle diameter | μm | 2.7 | 2.9 | 2.8 | 2.6 | 2.7 | 2.6 | 2.6 | 2.9 | 2.9 | 2.8 | 2.8 | 2.8 | 2.8 | 2.9 |
| | | Content of rubbery polymer particles (a-2) | mass% | 18 | 20 | 18 | 19 | 19 | 18 | 18 | 19 | 19 | 19 | 19 | 19 | 19 | 19 |
| | | Melt flow rate | g/10min | 6.2 | 6.1 | 5.8 | 4.7 | 3.9 | 4.2 | 3.7 | 5.7 | 6.2 | 5.8 | 6 | 6.5 | 7 | 6.3 |
| | | Vicat softening temperature | °C | 90 | 90 | 90 | 91 | 92 | 93 | 95 | 91 | 90 | 90 | 90 | 88 | 86 | 90 |
| | | Swelling rate of rubbery polymer particles | | 12 | 8 | 10 | 10 | 9.5 | 9.5 | 9.5 | 10 | 10 | 9.5 | 10 | 10 | 10 | 9.5 |
| Polymer properties | | SP value of styrene-based polymer (a-1) in polymer matrix phase | (cal/cm3)1/2 | 8.6 | 8.6 | 8.6 | 8.8 | 9 | 9.4 | 9.9 | 8.6 | 8.6 | 8.6 | 8.6 | 8.6 | 8.6 | 8.6 |
| | | SP value of biomass plasticizer (B) | (cal/cm3)1/2 | 8.2 | 8.2 | 8.2 | 8.2 | 8.2 | 8.2 | 8.2 | 10.1 | 7.4 | 9.3 | 8.2 | 8.2 | 8.2 | 8.2 |
| | | SP value difference between styrene-based polymer (a-1) and biomass plasticizer (B) | (cal/cm3)1/2 | 0.4 | 0.4 | 0.4 | 0.6 | 0.8 | 1.2 | 1.7 | 1.5 | 1.2 | 0.7 | 0.4 | 0.4 | 0.4 | 0.4 |
| | | Number average molecular weight of styrene-based polymer (a-1) | ×10^4 | 8 | 8 | 8 | 7.5 | 7 | 8 | 8 | 8 | 8 | 8 | 8 | 8 | 8 | 8 |
| | | Weight average molecular weight of styrene-based polymer (a-1) | ×10^4 | 19 | 19 | 19 | 18.5 | 18 | 19 | 19 | 19 | 19 | 19 | 19 | 19 | 19 | 19 |
| Injection blow container properties | | Opening portion impact strength | kg·cm | 6.4 | 5.9 | 6.1 | 5.4 | 5 | 4.6 | 4.4 | 3.5 | 6.2 | 3.9 | 6.3 | 6.1 | 5.7 | 6.2 |
| | | Opening portion compressive strength (10mm displacement) | N | 29 | 33 | 29 | 33 | 34 | 35 | 37 | 34 | 30 | 33 | 31 | 29 | 26 | 30 |
| | | Buckling strength | N | 147 | 155 | 149 | 158 | 164 | 161 | 165 | 162 | 151 | 160 | 152 | 146 | 141 | 152 |
| | | Number of stringing occurrences | number | 0 | 0 | 0 | 0 | 0 | 0 | 0 | 0 | 0 | 0 | 0 | 1 | 3 | 0 |
| Injection blow Moldability | | Moldability (number of blow failures/150 shots) | number | 0 | 0 | 0 | 4 | 6 | 8 | 9 | 4 | 0 | 0 | 6 | 2 | 5 | 0 |
| | | Number of shots upon mold staining | | >150 | >150 | >150 | >150 | >150 | 110 | 105 | >150 | 100 | >150 | >150 | 135 | 105 | >150 |
| | | Biomass degree of biomass plasticizer (B) | % | 100 | 100 | 100 | 100 | 100 | 100 | 100 | 100 | 13 | 100 | 100 | 100 | 100 | 100 |
| | | Biomass degree in styrene-based resin composition | % | 3 | 3 | 3 | 3 | 3 | 3 | 3 | 3 | 0.4 | 3 | 3 | 3 | 3 | 3 |

[Table 9-4]

EP 4 253 475 A1

| Table 9-4 | | Composition type | Unit | Comparative Example 8 PS-58 | Comparative Example 9 PS-59 | Comparative Example 10 PS-60 | Comparative Example 11 PS-61 | Comparative Example 12 PS-62 | Comparative Example 13 PS-63 | Comparative Example 14 PS-67 | Comparative Example 15 PS-64 | Comparative Example 16 PS-65 |
|---|---|---|---|---|---|---|---|---|---|---|---|---|
| Composition ratio of styrene-based resin composition (mass%) | Styrene-based polymer (a-1) | Styrene monomer unit | mass% | 95.75 | 92.75 | 97.75 | 85.15 | 91.75 | 95.67 | 92.75 | 93 | 96 |
| | | (Meth)acrylic acid monomer | mass% | 0 | 0 | 0 | 0 | 0 | 0 | 0 | 0 | 0 |
| | | (Meth)acrylate monomer | mass% | 0 | 0 | 0 | 0 | 0 | 0 | 0 | 0 | 0 |
| | | (Meth)acrylonitrile monomer | mass% | 0 | 0 | 0 | 0 | 0 | 0 | 0 | 0 | 0 |
| | Biomass plasticizer (B) | Palm oil | mass% | 0 | 0 | 3 | 3 | 3 | 0.08 | 0 | 3 | 3 |
| | | Soybean oil | mass% | 0 | 0 | 0 | 0 | 0 | 0 | 0 | 0 | 0 |
| | | Epoxidized soybean oil | mass% | 0 | 0 | 0 | 0 | 0 | 0 | 0 | 0 | 0 |
| | | Epoxidized linseed oil (2) | mass% | 0 | 0 | 0 | 0 | 0 | 0 | 0 | 0 | 0 |
| | | Hydrogenated castor oil | mass% | 0 | 0 | 0 | 0 | 0 | 0 | 0 | 0 | 0 |
| | | Polylactic acid | mass% | 0 | 0 | 0 | 0 | 0 | 0 | 3 | 0 | 0 |
| | | Liquid paraffin | mass% | 0 | 3 | 0 | 0 | 0 | 0 | 0 | 0 | 0 |
| | | Content of rubbery polymer | mass% | 4 | 4 | 2 | 11.6 | 5 | 4 | 4 | 4 | 4 |
| | Higher fatty acid compound (C) | Higher fatty acid compound (C) (mixture of stearic acid and calcium stearate) Stearic acid:calcium stearate=3:1 | mass% | 0.25 | 0.25 | 0.25 | 0.25 | 0.25 | 0.25 | 0.25 | 3 | 0 |
| | Rubbery polymer particles (a-2) | Average particle diameter | μm | 2.8 | 2.8 | 2.8 | 3.1 | 0.8 | 2.8 | 2.9 | 2.7 | 2.9 |
| | | Content of rubbery polymer particles (a-2) | mass% | 19 | 19 | 8 | 34 | 18.5 | 19 | 19 | 19 | 19 |
| Polymer properties | | Melt flow rate | g/10min | 3.1 | 6.2 | 7.7 | 3.2 | 6.6 | 3.2 | 3.4 | 6.5 | 7.1 |
| | | Vicat softening temperature | °C | 99 | 90 | 92 | 87 | 90 | 98 | 99 | 89 | 87 |
| | | Swelling rate of rubbery polymer particles | | 10 | 10 | 10 | 10 | 10 | 10 | 10 | 10 | 10 |
| | | SP value of styrene-based polymer (a-1) in polymer matrix phase | $(cal/cm3)1/2$ | 8.6 | 8.6 | 8.6 | 8.6 | 8.6 | 8.6 | 8.6 | 8.6 | 8.6 |
| | | SP value of biomass plasticizer (B) | $(cal/cm3)1/2$ | 8.2 | - | 8.2 | 8.2 | 8.2 | 8.2 | - | 8.2 | 8.2 |
| | | SP value difference between styrene-based polymer (a-1) and biomass plasticizer (B) | $(cal/cm3)1/2$ | 0.4 | - | 0.4 | 0.4 | 0.4 | 0.4 | - | 0.4 | 0.4 |
| | | Number average molecular weight of styrene-based polymer (a-1) | $\times 10^4$ | 8 | 8 | 8 | 8 | 8 | 8 | 8 | 8 | 8 |
| | | Weight average molecular weight of styrene-based polymer (a-1) | | 19 | 19 | 19 | 18.5 | 19 | 19 | 19 | 19 | 19 |
| Injection blow container properties | | Opening portion impact strength | kg·cm | 2.8 | 6.1 | 2.8 | 8.1 | 2.9 | 2.9 | 2.7 | 4.4 | 3.9 |
| | | Opening portion compressive strength (10mm displacement) | N | 36 | 32 | 36 | 20 | 33 | 36 | 33 | 32 | 28 |
| | | Buckling strength | N | 172 | 153 | 162 | 115 | 159 | 171 | 159 | 153 | 144 |
| Injection blow Moldability | | Number of stringing occurrences | number | 0 | 0 | 2 | 0 | 0 | 0 | 0 | 7 | 0 |
| | | Moldability (number of blow failures/150 shots) | number | 0 | 0 | 1 | 9 | 0 | 0 | 13 | 7 | 14 |
| | | Number of shots upon mold staining | | >150 | 75 | >150 | >150 | >150 | >150 | >150 | 80 | >150 |
| Biomass degree of biomass plasticizer (B) | | | % | 100 | 0 | 100 | 100 | 100 | 100 | - | 100 | 100 |
| Biomass degree in styrene-based resin composition | | | % | 0 | 0 | 3 | 3 | 3 | 0.08 | 3 | 3 | 3 |

[Example 61]

A polymerization liquid obtained by mixing and dissolving 92.1 mass% of styrene, 5.5 mass% of ethylbenzene,

(Producing method for styrene-based resin composition (PS-68))

0.4 mass% of Multi Ace 20 (S) (produced by Nisshin Oillio Group Co., Ltd.) was continuously charged at 0.78 liters/hr into a 1.5-liter laminar flow reactor-1 including a stirrer and capable of temperature control in three zones, and the temperature was adjusted to 120 °C/125 °C/129 °C. The rotation speed of the stirrer was 80 rotations per minute. The reaction rate at the reactor outlet was 30 %.

The reaction liquid was then sent to a 1.5-liter laminar flow reactor-2 including a stirrer connected in series with the laminar flow reactor-1 and capable of temperature control in three zones. The stirring speed of the stirrer was set to 40 rotations per minute, and the temperature was set to 131 °C/133 °C/135 °C. The reaction liquid was then sent to a 1.5-liter laminar flow reactor-3 including a stirrer and capable of temperature control in three zones. The rotation speed of the stirrer was 10 rotations per minute, and the temperature was set to 145 °C/148 °C/150 °C.

The polymer solution continuously discharged from the polymerization reactor (laminar flow reactor-3) was devolatilized and then pelletized at a reduced pressure of 0.8 kPa using an vacuum vent-equipped extruder, to produce a styrene-based resin composition (PS-68). The temperature of the extruder was set to 220 °C. The polymer matrix phase of the styrene-based resin composition (PS-68) contained polystyrene, and the SP value of the polystyrene was 8.6 $(cal/cm^3)^{1/2}$. For the obtained styrene-based resin composition (PS-68) of Example 61, the foregoing various evaluations were conducted. The evaluation results are shown in Table 11-1.

[Examples 62 to 77]

<Styrene-based resin compositions (PS-69) to (PS-82) and (PS-88) to (PS-89)>

Styrene-based resin compositions (PS-69) to (PS-82) were produced in the same way as the styrene-based resin composition (PS-68) except that the polymerization conditions were changed as shown in Tables 10-1 and 10-2. A styrene-based resin composition (PS-88) was produced by adding palm oil to a styrene-based resin composition (PS-83) (GPPS not containing a plasticizer) so that the palm oil content would be 1 mass% with respect to the entire styrene-based resin composition (PS-88) and kneading the mixture with a twin screw extruder. Likewise, a styrene-based resin composition (PS-89) was produced by adding palm oil to KIBISAN® PN-117C (CHI-MEI product) (KIBISAN is a registered trademark in Japan, other countries, or both) so that the palm oil content would be 1 mass% with respect to the entire styrene-based resin composition (PS-89) and kneading the mixture with a twin screw extruder. For the obtained styrene-based resin compositions of Examples 62 to 77, the foregoing various evaluations were conducted. The evaluation results are shown in Tables 11-1 to Table 11-2.

[Comparative Examples 17 to 22]

<Styrene-based resin compositions (PS-83) to (PS-87) and (PS-90)>

Styrene-based resin compositions (PS-83) to (PS-87) were produced in the same way as the styrene-based resin composition (PS-68) except that the polymerization conditions were changed as shown in Table 10-2.

A styrene-based resin composition (PS-90) was produced by adding polylactic acid (PLA) to the styrene-based resin composition (PS-83) so that the content of the polylactic acid (PLA) would be 2 mass% with respect to the entire styrene-based resin composition (PS-90) and kneading the mixture with a twin screw extruder. For the obtained styrene-based resin compositions of Comparative Examples 17 to 22, the foregoing various evaluations were conducted. The evaluation results are shown in Table 11-3.

[Table 10-1]

| Table 10-1 | | Llh | PS-68 | PS-69 | PS-70 | PS-71 | PS-72 | PS-73 | PS-74 | PS-75 | PS-76 | PS-77 |
|---|---|---|---|---|---|---|---|---|---|---|---|---|
| Raw material composition and raw material supply | Styrene (SM) | mass% | 94.1 | 93.7 | 93.7 | 93.7 | 93.3 | 92.9 | 93.0 | 67.8 | 41.2 | 94.1 |
| | Methyl methacrylate | mass% | 0 | 0 | 0 | 0 | 0 | 0 | 0.0 | 16.7 | 40.0 | 0 |
| | Ethylbenzene (EB) | mass% | 5.5 | 5.5 | 5.5 | 5.5 | 5.5 | 5.5 | 5 | 14.7 | 18 | 5.5 |
| | Palm oil (PO) | mass% | 0.4 | 0.8 | 0.8 | 0.8 | 1.2 | 1.6 | 2.0 | 0.8 | 0.8 | 0 |
| | Epoxidized soybean oil (ESO) | mass% | 0 | 0 | 0 | 0 | 0 | 0 | 0 | 0 | 0 | 0.4 |
| | Hydrogenated castor oil | mass% | 0 | 0 | 0 | 0 | 0 | 0 | 0 | 0 | 0 | 0 |
| | Liquid paraffin (MO) | mass% | 0 | 0 | 0 | 0 | 0 | 0 | 0 | 0 | 0 | 0 |
| Polymerization initiator | Pertetra A | ppm | 0 | 0 | 150 | 0 | 0 | 0 | 0 | 0 | 0 | 0 |
| | Perhexa C | ppm | 0 | 0 | 0 | 0 | 0 | 0 | 0 | 200 | 250 | 0 |
| Chain transfer agent | a-MSD | ppm | 0 | 0 | 0 | 600 | 0 | 0 | 0 | 300 | 600 | 0 |

| Table 10-1 | | Llh | PS-68 | PS-69 | PS-70 | PS-71 | PS-72 | PS-73 | PS-74 | PS-75 | PS-76 | PS-77 |
|---|---|---|---|---|---|---|---|---|---|---|---|---|
| Reactor conditions | First reactor (upper stage) | °C | 120 | 120 | 120 | 120 | 119 | 119 | 119 | 115 | 117 | 120 |
| | First reactor (middle stage) | °C | 125 | 125 | 125 | 125 | 124 | 124 | 124 | 120 | 122 | 125 |
| | First reactor (lower stage) | °C | 129 | 129 | 129 | 129 | 128 | 128 | 128 | 125 | 127 | 129 |
| | Second reactor (upper stage) | °C | 131 | 131 | 131 | 131 | 130 | 130 | 130 | 128 | 130 | 131 |
| | Second reactor (middle stage) | °C | 133 | 133 | 133 | 133 | 132 | 132 | 132 | 130 | 132 | 133 |
| | Second reactor (lower stage) | °C | 135 | 135 | 135 | 135 | 134 | 134 | 134 | 133 | 135 | 135 |
| | Third reactor (upper stage) | °C | 145 | 145 | 145 | 145 | 144 | 144 | 144 | 136 | 136 | 145 |
| | Third reactor (middle stage) | °C | 148 | 148 | 148 | 148 | 147 | 147 | 147 | 138 | 138 | 148 |
| | Third reactor (lower stage) | °C | 150 | 150 | 150 | 150 | 149 | 149 | 149 | 140 | 140 | 150 |
| Volatile system | Resin temperature | °C | 220 | 220 | 220 | 220 | 220 | 220 | 220 | 230 | 230 | 220 |
| | Pressure | kPa | 0.8 | 0.8 | 0.8 | 0.8 | 0.8 | 0.8 | 0.8 | 0.8 | 0.8 | 0.8 |

[Table 10-2]

| Table 10-2 | | L/h | PS-78 | PS-79 | PS-80 | PS-81 | PS-82 | PS-83 | PS-84 | PS-85 | PS-86 | PS-87 |
|---|---|---|---|---|---|---|---|---|---|---|---|---|
| Raw material composition and raw material supply | Styrene (SM) | mass% | 93.7 | 92.9 | 93.0 | 93.7 | 92.9 | 94.0 | 93.7 | 92.9 | 92.1 | 90 |
| | Methyl methacrylate | mass% | 0 | 0 | 0.0 | 0.0 | 0.0 | 0.0 | 0.0 | 0.0 | 0.0 | 0 |
| | Ethylbenzene (EB) | mass% | 5.5 | 5.5 | 5 | 5.5 | 5.5 | 6 | 5.5 | 5.5 | 5.5 | 10 |
| | Palm oil (PO) | mass% | 0 | 0 | 0 | 0 | 0 | 0 | 0 | 0 | 2.4 | 0 |
| | Epoxidized soybean oil (ESO) | mass% | 0.8 | 1.6 | 2 | 0 | 0 | 0 | 0 | 0 | 0 | 0 |
| | Hydrogenated castor oil | mass% | 0 | 0 | 0 | 0.8 | 1.6 | 0 | 0.0 | 0.0 | 0 | 0 |
| | Liquid paraffin (MO) | mass% | 0 | 0 | 0 | 0 | 0 | 0 | 0.8 | 1.6 | 0 | 0 |
| Polymerization initiator | Pertetra A | ppm | 0 | 0 | 0 | 0 | 0 | 0 | 0 | 0 | 0 | 0 |
| | Perhexa C | ppm | 0 | 0 | 0 | 0 | 0 | 0 | 0 | 0 | 0 | 0 |
| Chain transfer agent | a-MSD | ppm | 0 | 0 | 0 | 0 | 0 | 0 | 0 | 0 | 0 | 1200 |

(continued)

Table 10-2

| | | L/h | PS-78 | PS-79 | PS-80 | PS-81 | PS-82 | PS-83 | PS-84 | PS-85 | PS-86 | PS-87 |
|---|---|---|---|---|---|---|---|---|---|---|---|---|
| Reactor conditions | First reactor (upper stage) | °C | 120 | 119 | 119 | 120 | 119 | 121 | 120 | 119 | 120 | 124 |
| | First reactor (middle stage) | °C | 125 | 124 | 124 | 125 | 124 | 126 | 125 | 124 | 125 | 127 |
| | First reactor (lower stage) | °C | 129 | 128 | 128 | 129 | 128 | 130 | 129 | 128 | 129 | 130 |
| | Second reactor (upper stage) | °C | 131 | 130 | 130 | 131 | 130 | 131 | 131 | 130 | 131 | 136 |
| | Second reactor (middle stage) | °C | 133 | 132 | 132 | 133 | 132 | 133 | 133 | 132 | 133 | 139 |
| | Second reactor (lower stage) | °C | 135 | 134 | 134 | 135 | 134 | 135 | 135 | 134 | 135 | 142 |
| | Third reactor (upper stage) | °C | 145 | 144 | 144 | 145 | 144 | 145 | 145 | 144 | 144 | 149 |
| | Third reactor (middle stage) | °C | 148 | 147 | 147 | 148 | 147 | 148 | 148 | 147 | 147 | 153 |
| | Third reactor (lower stage) | °C | 150 | 149 | 149 | 150 | 149 | 150 | 150 | 149 | 149 | 156 |
| Volatile system | Resin temperature | °C | 220 | 220 | 220 | 220 | 220 | 220 | 220 | 220 | 220 | 220 |
| | Pressure | kPa | 0.8 | 0.8 | 0.8 | 0.8 | 0.8 | 0.8 | 0.8 | 0.8 | 0.8 | 0.8 |

[Table 11-1]

| Table 11-1 | | | Example 61 | Example 62 | Example 63 | Example 64 | Example 65 | Example 66 | Example 67 | Example 68 | Example 69 | Example 70 |
|---|---|---|---|---|---|---|---|---|---|---|---|---|
| Composition ratio in entire styrene-based resin composition | Styrene-based resin composition type used | | PS-68 | PS-69 | PS-70 | PS-71 | PS-72 | PS-73 | PS-74 | PS-75 | PS-76 | PS-77 |
| | Styrene-based copolymer (a-3) | mass% | 99.5 | 99 | 99 | 99 | 98.5 | 98 | 97.5 | 99 | 99 | 99.5 |
| | Palm oil (PO) | mass% | 0.5 | 1 | 1 | 1 | 1.5 | 2 | 2.5 | 1 | 1 | 0 |
| | Epoxidized soybean oil (ESO) | mass% | 0 | 0 | 0 | 0 | 0 | 0 | 0 | 0 | 0 | 0.5 |
| | Hydrogenated castor oil | mass% | 0 | 0 | 0 | 0 | 0 | 0 | 0 | 0 | 0 | 0 |
| | Liquid paraffin (MO) | mass% | 0 | 0 | 0 | 0 | 0 | 0 | 0 | 0 | 0 | 0 |
| | Polylactic acid (PLA) | mass% | 0 | 0 | 0 | 0 | 0 | 0 | 0 | 0 | 0 | 0 |
| Properties, etc. of styrene-based resin composition | Melt flow rate | g/10min | 2.5 | 2.8 | 2.2 | 4.8 | 3.2 | 3.6 | 4.0 | 2.5 | 2.1 | 2.4 |
| | Vicat softening temperature | °C | 99 | 97 | 98 | 97 | 95 | 94 | 92 | 97 | 97 | 99 |
| | SP value of styrene-based polymer (a-3) | (cal/cm3) 1/2 | 8.6 | 8.6 | 8.6 | 8.6 | 8.6 | 8.6 | 8.6 | 8.8 | 9.0 | 8.6 |
| | SP value of biomass plasticizer (B) | | 8.2 | 8.2 | 8.2 | 8.2 | 8.2 | 8.2 | 8.2 | 8.2 | 8.2 | 9 |
| | SP value difference between styrene-based polymer (a-3) and biomass plasticizer (B) | | 0.4 | 0.4 | 0.4 | 0.4 | 0.4 | 0.4 | 0.4 | 0.6 | 0.8 | 0.4 |
| | Number average molecular weight of styrene-based polymer (a-3) | $\times 10^4$ | 11 | 11 | 12 | 9 | 11 | 11 | 11 | 9 | 8 | 11 |
| | Weight average molecular weight of styrene-based polymer (a-3) | $\times 10^4$ | 27 | 27 | 30 | 21 | 27 | 27 | 27 | 20 | 18 | 27 |

EP 4 253 475 A1

56

(continued)

| Table 11-1 | | | % / units | Example 61 | Example 62 | Example 63 | Example 64 | Example 65 | Example 66 | Example 67 | Example 68 | Example 69 | Example 70 |
|---|---|---|---|---|---|---|---|---|---|---|---|---|---|
| Molded article evaluation | | Total light transmittance (2mm thick sheet) | % | 90 | 90 | 90 | 90 | 90 | 90 | 90 | 89 | 89 | 89 |
| | Stretched sheet evaluation | Sheet thickness (average) | turn | 0.25 | 0.25 | 0.25 | 0.25 | 0.25 | 0.26 | 0.26 | 0.23 | 0.24 | 0.25 |
| | | Impact strength | kgf·cm | 6.5 | 6.5 | 6.9 | 5.2 | 6.4 | 6.6 | 6.2 | 5.3 | 5.2 | 6.2 |
| | | Sheet appearance (number of stains) | number | 0 | 0 | 0 | 0 | 0 | 0 | 3 | 0 | 0 | 0 |
| | | Thickness uniformity (number of non-uniform sheets) | number | 0 | 0 | 2 | 1 | 0 | 0 | 0 | 0 | 2 | 0 |
| Biomass carbon ratio of biomass plasticizer (B) | | | % | 100 | 100 | 100 | 100 | 100 | 100 | 100 | 100 | 100 | 100 |
| Biomass carbon ratio in styrene-based resin composition | | | % | 0.5 | 1 | 1 | 1 | 1.5 | 2 | 2.5 | 1 | 1 | 0.5 |

*1 Prepared by adding palm oil to PS-83 and kneading with twin screw extruder.
*2 Prepared by adding palm oil to KIBISAN® PN-1 17C CHI-MEI product and kreading with twin screw extruder.
*3 Prepared by adding PLA to PS-83 and kneading with twin screw extruder.

[Table 11-2]

| Table 11-2 | | | Example 71 | Example 72 | Example 73 | Example 74 | Example 75 | Example 76 | Example 77 |
|---|---|---|---|---|---|---|---|---|---|
| Composition ratio in entire styrene-based resin composition | Styrene-based resin composition type used | | PS-78 | PS-79 | PS-80 | PS-81 | PS-82 | PS-88*1 | PS-89*2 |
| | Styrene-based copolymer (a-3) | mass% | 99 | 98 | 97.5 | 99 | 98 | 99 | 99 |
| | Palm oil (PO) | mass% | 0 | 0 | 0 | 0 | 0 | 1 | 1 |
| | Epoxidized soybean oil (ESO) | mass% | 1 | 2 | 2.5 | 0 | 0 | 0 | 0 |
| | Hydrogenated castor oil | mass% | 0 | 0 | 0 | 1 | 2 | 0 | 0 |
| | Liquid paraffin (MO) | mass% | 0 | 0 | 0 | 0 | 0 | 0 | 0 |
| | Polylactic acid (PLA) | mass% | 0 | 0 | 0 | 0 | 0 | 0 | 0 |
| Properties, etc. of styrene-based resin composition | Melt flow rate | g/10min | 2.8 | 3.6 | 4.0 | 2.6 | 3.4 | 3.0 | 5.5 |
| | Vicat softening temperature | °C | 97 | 94 | 92 | 98 | 95 | 97 | 95 |
| | SP value of styrene-based polymer (a-3) | (cal/cm3) $1/2 \times 10^4$ | 8.6 | 8.6 | 8.6 | 8.6 | 8.6 | 8.6 | 9.8 |
| | SP value of biomass plasticizer (B) | | 9 | 9 | 9 | 10.1 | 10.1 | 8.2 | 8.2 |
| | SP value difference between styrene-based polymer (a-3) and biomass plasticizer (B) | | 0.4 | 0.4 | 0.4 | 1.5 | 1.5 | 0.4 | 1.6 |
| | Number average molecular weight of stvrene-based polymer (a-3) | $\times 10^4$ | 11 | 11 | 11 | 11 | 11 | 10.5 | 6.5 |
| | Weight average molecular weight of stvrene-based polymer (a-3) | | 27 | 27 | 27 | 27 | 27 | 26 | 12.5 |

EP 4 253 475 A1

(continued)

| Table 11-2 | | | | Example 71 | Example 72 | Example 73 | Example 74 | Example 75 | Example 76 | Example 77 |
|---|---|---|---|---|---|---|---|---|---|---|
| Molded article evaluation | Total light transmittance (2mm thick sheet) | | % | 89 | 88 | 87 | 88 | 87 | 90 | 84 |
| | Stretched sheet evaluation | Sheet thickness (average) | mm | 0.26 | 0.25 | 0.25 | 0.25 | 0.24 | 0.24 | 0.26 |
| | | Impact strength | kgf·cm | 5.8 | 5.5 | 5.5 | 4.7 | 4.6 | 6.3 | 4.6 |
| | | Sheet appearance (number of stains) | number | 0 | 1 | 3 | 2 | 4 | 0 | 4 |
| | | Thickness uniformity (number of non-uniform sheets) | number | 0 | 0 | 0 | 0 | 0 | 0 | 1 |
| Biomass carbon ratio of biomass plasticizer (B) | | | % | 100 | 100 | 100 | 100 | 100 | 100 | 100 |
| Biomass carbon ratio in styrene-based resin composition | | | % | 1 | 2 | 2.5 | 1 | 2 | 1 | 3 |

*1 Prepared by adding palm oil to PS-83 and kneading with twin screw extruder.
*2 Prepared by adding palm oil to KIBISAN® PN-1 17C CHI-MEI product and kneading with twin screw extruder.
*3 Prepared by adding PLA to PS-83 and kneading with twin screw extruder.

[Table 11-3]

| Table 11-3 | | | Comparative Example 17 | Comparative Example 18 | Comparative Example 19 | Comparative Example 20 | Comparative Example 21 | Comparative Example 22 |
|---|---|---|---|---|---|---|---|---|
| Composition ratio in entire styrene-based resin composition | Styrene-based resin composition type used | | PS-83 | PS-84 | PS-85 | PS-86 | PS-87 | PS-90*3 |
| | Styrene-based copolymer (a-3) | mass% | 100 | 99 | 98 | 97 | 100 | 98 |
| | Palm oil (PO) | mass% | 0 | 0 | 0 | 3 | 0 | 0 |
| | Epoxidized soybean oil (ESO) | mass% | 0 | 0 | 0 | 0 | 0 | 0 |
| | Hydrogenated castor oil | mass% | 0 | 0 | 0 | 0 | 0 | 0 |
| | Liquid paraffin (MO) | mass% | 0 | 1 | 2 | 0 | 0 | 0 |
| | Polylactic acid (PLA) | mass% | 0 | 0 | 0 | 0 | 0 | 2 |
| Properties, etc. of styrene-based resin composition | Melt flow rate | g/10min | 1.9 | 2.8 | 3.7 | 4.5 | 5.6 | 2.4 |
| | Vicat softening temperature | °C | 101 | 97 | 94 | 89 | 100 | 100 |
| | SP value of styrene-based polymer (a-3) | (cal/cm3) 1/2 | 8.6 | 8.6 | 8.6 | 8.6 | 8.6 | 8.6 |
| | SP value of biomass plasticizer (B) | | - | - | - | 8.2 | - | - |
| | SP value difference between styrene-based polymer (a-3) and biomass plasticizer (B) | | - | - | - | 0.4 | - | - |
| | Number average molecular weight of styrene-based polymer (a-3) | $\times 10^4$ | 11 | 11 | 11 | 12 | 8 | 11 |
| | Weight average molecular weight of styrene-based polymer (a-3) | $\times 10^4$ | 27 | 27 | 26 | 32 | 19.5 | 26 |

60

(continued)

| Table 11-3 | | | | Comparative Example 17 | Comparative Example 18 | Comparative Example 19 | Comparative Example 20 | Comparative Example 21 | Comparative Example 22 |
|---|---|---|---|---|---|---|---|---|---|
| Molded article evaluation | Total light transmittance (2mm thick sheet) | | % | 90 | 88 | 88 | 90 | 90 | 62 |
| | Stretched sheet evaluation | Sheet thickness (average) | mm | 0.23 | 0.24 | 0.24 | 0.25 | 0.25 | 0.23 |
| | | Impact strength | kgf·cm | 5.5 | 5.4 | 5.0 | 6.2 | 3.7 | 4.1 |
| | | Sheet appearance (number of stains) | number | 0 | 8 | 13 | 5 | 0 | 3 |
| | | Thickness uniformity (number of non-uniform sheets) | number | 6 | 0 | 0 | 0 | 0 | 5 |
| Biomass carbon ratio of biomass plasticizer (B) | | | % | - | - | - | 100 | - | - |
| Biomass carbon ratio in styrene-based resin composition | | | % | 0 | 0 | 0 | 3 | 0 | 1 |

* 1 Prepared by adding palm oil to PS-83 and kneading with twin screw extruder.
*2 Prepared by adding palm oil to KIBISAN® PN-117C CHI-ME1 product and kneading with twin screw extruder.
*3 Prepared by adding PLA to PS-83 and kneading with twin screw extruder.

[Production method for styrene-based resin composition]

[Example 78]

(Production method for styrene-based resin composition (PS-91))

A polymerization liquid obtained by mixing and dissolving 92.1 mass% of styrene, 5.5 mass% of ethylbenzene, 2.4 mass% of Multi Ace 20 (S) (produced by Nisshin Oillio Group Co., Ltd.) was continuously charged at 0.78 liters/hr into a 1.5-liter laminar flow reactor-1 including a stirrer and capable of temperature control in three zones, and the temperature was adjusted to 120 °C/125 °C/129 °C. The rotation speed of the stirrer was 80 rotations per minute. The reaction rate at the reactor outlet was 30 %.

The reaction liquid was then sent to a 1.5-liter laminar flow reactor-2 including a stirrer connected in series with the laminar flow reactor-1 and capable of temperature control in three zones. The stirring speed of the stirrer was set to 40 rotations per minute, and the temperature was set to 131 °C/133 °C/135 °C. The reaction liquid was then sent to a 1.5-liter laminar flow reactor-3 including a stirrer and capable of temperature control in three zones. The rotation speed of the stirrer was 10 rotations per minute, and the temperature was set to 145 °C/148 °C/150 °C (see Table 12-1).

The polymer solution continuously discharged from the polymerization reactor (laminar flow reactor-3) was devolatilized and then pelletized at a reduced pressure of 0.8 kPa using an vacuum vent-equipped extruder, to produce a styrene-based resin composition (PS-91). The temperature of the extruder was set to 220 °C. The polymer matrix phase of the styrene-based resin composition (PS-91) contained polystyrene, and the SP value of the polystyrene was 8.6 $(cal/cm^3)^{1/2}$. For the obtained styrene-based composition of Example 78, the foregoing various evaluations were conducted. The evaluation results are shown in Table 13-1.

[Examples 79 to 93]

<Styrene-based resin compositions (PS-92) to (PS-104) and (PS-113) to (PS-114)>

Styrene-based resin compositions (PS-92) to (PS-104) were produced in the same way as the styrene-based resin composition (PS-91) except that the polymerization conditions were changed as shown in Tables 12-1 and 12-2. A styrene-based resin composition (PS-113) was produced by adding palm oil to a styrene-based resin composition (PS-105) (GPPS not containing a biomass plasticizer) so that the palm oil content would be 3 mass% with respect to the entire styrene-based resin composition (PS-113) and kneading the mixture with a twin screw extruder. A styrene-based resin composition (PS-114) was produced by adding palm oil to styrene-acrylonitrile (KIBISAN® PN-117C (CHI-MEI product)) so that the palm oil content would be 3 mass% with respect to the entire styrene-based resin composition (PS-114) and kneading the mixture with a twin screw extruder. For the obtained styrene-based compositions of Examples 79 to 93, the foregoing various evaluations were conducted. The evaluation results are shown in Tables 13-1 to 13-2.

[Comparative Examples 23 to 31]

<Styrene-based resin compositions (PS-105) to (PS-112) and (PS-115)>

Styrene-based resin compositions (PS-105) to (PS-112) and (PS-115) were produced in the same way as the styrene-based resin composition (PS-90) except that the polymerization conditions were changed as shown in Table 12-2. When producing PS-22, Diene 55 produced by Asahi Kasei Chemicals Corporation was used as polybutadiene rubber. The styrene-based resin composition (PS-115) was produced by adding polylactic acid (PLA) to the styrene-based resin composition (PS-105) so that the content of the polylactic acid (PLA) would be 3 mass% with respect to the entire styrene-based resin composition (PS-115) and kneading the mixture with a twin screw extruder. For the obtained styrene-based compositions of Comparative Examples 23 to 31, the foregoing various evaluations were conducted. The evaluation results are shown in Table 13-3.

[Table 12-1]

| Table 12-1 | | L/h | PS-91 | PS-92 | PS-93 | PS-94 | PS-95 | PS-96 | PS-97 | PS-98 | PS-99 | PS-100 | PS-101 |
|---|---|---|---|---|---|---|---|---|---|---|---|---|---|
| Raw material composition and raw material supply | Styrene (SM) | mass% | 92.1 | 93.1 | 90.6 | 91.2 | 90.8 | 88.4 | 66.5 | 40.0 | 92.1 | 91.2 | 90.8 |
| | Methyl methacrylate | mass% | 0 | 0 | 0 | 0 | 0 | 0.0 | 16.7 | 40.0 | 0 | 0 | 0 |
| | Ethylbenzene (EB) | mass% | 5.5 | 4.5 | 7 | 4 | 2 | 2 | 14.7 | 18 | 5.5 | 4 | 2 |
| | Polybutadiene (PBD) | mass% | 0 | 0 | 0 | 0 | 0 | 0 | 0 | 0 | 0 | 0 | |
| | Palm oil (PO) | mass% | 2.4 | 2.4 | 2.4 | 4.8 | 7.2 | 9.6 | 2.1 | 2.1 | 0 | 0 | 0 |
| | Epoxidized soybean oil (ESO) | mass% | 0 | 0 | 0 | 0 | 0 | 0 | 0 | 0 | 2.4 | 4.8 | 7.2 |
| | Hydrogenated castor oil | mass% | 0 | 0 | 0 | 0 | 0 | 0 | 0 | 0 | 0 | 0 | 0 |
| | Liquid paraffin (MO) | mass% | 0 | 0 | 0 | 0 | 0 | 0 | 0 | 0 | 0 | 0 | 0 |
| Polymerization initiator | Pertetra A | ppm | 0 | 200 | 0 | 0 | 0 | 0 | 0 | 0 | 0 | 0 | 0 |
| | Perhexa C | ppm | 0 | 0 | 0 | 0 | 0 | 0 | 200 | 250 | 0 | 0 | 0 |
| Chain transfer agent | a-MSD | ppm | 0 | 0 | 600 | 0 | 0 | 0 | 300 | 600 | 0 | 0 | 0 |

| Table 12-1 | | L/h | PS-91 | PS-92 | PS-93 | PS-94 | PS-95 | PS-96 | PS-97 | PS-98 | PS-99 | PS-100 | PS-101 |
|---|---|---|---|---|---|---|---|---|---|---|---|---|---|
| Reactor conditions | First reactor (upper stage) | °C | 120 | 118 | 121 | 119 | 118 | 118 | 115 | 117 | 120 | 119 | 118 |
| | First reactor (middle stage) | °C | 125 | 123 | 126 | 124 | 123 | 123 | 120 | 122 | 125 | 124 | 123 |
| | First reactor (lower stage) | °C | 129 | 127 | 130 | 128 | 127 | 127 | 125 | 127 | 129 | 128 | 127 |
| | Second reactor (upper stage) | °C | 131 | 129 | 132 | 130 | 129 | 129 | 128 | 130 | 131 | 130 | 129 |
| | Second reactor (middle stage) | °C | 133 | 132 | 135 | 132 | 131 | 131 | 130 | 132 | 133 | 132 | 131 |
| | Second reactor (lower stage) | °C | 135 | 133 | 138 | 134 | 133 | 133 | 133 | 135 | 135 | 134 | 133 |
| | Third reactor (upper stage) | °C | 145 | 142 | 148 | 144 | 143 | 142 | 136 | 136 | 145 | 144 | 143 |
| | Third reactor (middle stage) | °C | 148 | 145 | 151 | 147 | 146 | 145 | 138 | 138 | 148 | 147 | 146 |
| | Third reactor (lower stage) | °C | 150 | 147 | 153 | 149 | 148 | 147 | 140 | 140 | 150 | 149 | 148 |
| Volatile system | Resin temperature | °C | 220 | 220 | 220 | 220 | 220 | 220 | 230 | 230 | 220 | 220 | 220 |
| | Pressure | kPa | 0.8 | 0.8 | 0.8 | 0.8 | 0.8 | 0.8 | 0.8 | 0.8 | 0.8 | 0.8 | 0.8 |

EP 4 253 475 A1

64

[Table 12-2]

| Table 12-2 | | L/h | PS-102 | PS-103 | PS-104 | PS-105 | PS-106 | PS-107 | PS-108 | PS-109 | PS-110 | PS-111 | PS-112 |
|---|---|---|---|---|---|---|---|---|---|---|---|---|---|
| Raw material composition and raw material supply | Styrene (SM) | mass% | 88.4 | 92.1 | 91.2 | 94.0 | 94.5 | 96.0 | 92.9 | 93.7 | 90 | 90.8 | 90.6 |
| | Methyl methacrylate | mass% | 0.0 | 0.0 | 0.0 | 0.0 | 0.0 | 0.0 | 0.0 | 0.0 | 0 | 0 | 0 |
| | Ethylbenzene (EB) | mass% | 2 | 5.5 | 4 | 6 | 5.5 | 4 | 5.5 | 5.5 | 10 | 2 | 6 |
| | Polybutadiene (PBD) | mass% | 0 | 0 | 0 | 0 | 0 | 0 | 0 | 0 | 0 | 0 | 1 |
| | Palm oil (PO) | mass% | 0 | 0 | 0 | 0 | 0 | 0 | 1.6 | 0.8 | 0 | 0 | 2.4 |
| | Epoxidized soybean oil (ESO) | mass% | 9.6 | 0 | 0 | 0 | 0 | 0 | 0 | 0 | 0 | 0 | 0 |
| | Hydrogenated castor oil | mass% | 0 | 2.4 | 4.8 | 0 | 0.0 | 0.0 | 0 | 0 | 0 | 7.2 | 0 |
| | Liquid paraffin (MO) | mass% | 0 | 0 | 0 | 0 | 2.4 | 4.8 | 0 | 0 | 0 | 0 | 0 |
| Polymerization initiator | Pertetra A | ppm | 0 | 0 | 0 | 0 | 0 | 0 | 200 | 0 | 0 | 0 | 0 |
| | Perhexa C | ppm | 0 | 0 | 0 | 0 | 0 | 0 | 0 | 0 | 0 | 0 | 50 |
| Chain transfer agent | a-MSD | ppm | 0 | 0 | 0 | 0 | 0 | 0 | 0 | 0 | 1200 | 0 | 300 |

EP 4 253 475 A1

65

(continued)

| Table 12-2 | | L/h | PS-102 | PS-103 | PS-104 | PS-105 | PS-106 | PS-107 | PS-108 | PS-109 | PS-110 | PS-111 | PS-112 |
|---|---|---|---|---|---|---|---|---|---|---|---|---|---|
| Reactor conditions | First reactor (upper stage) | °C | 118 | 120 | 119 | 121 | 120 | 119 | 120 | 122 | 124 | 118 | 120 |
| | First reactor (middle stage) | °C | 123 | 125 | 124 | 126 | 125 | 124 | 125 | 127 | 127 | 123 | 125 |
| | First reactor (lower stage) | °C | 127 | 129 | 128 | 130 | 129 | 128 | 129 | 131 | 130 | 127 | 129 |
| | Second reactor (upper stage) | °C | 129 | 131 | 130 | 131 | 131 | 130 | 131 | 133 | 136 | 129 | 131 |
| | Second reactor (middle stage) | °C | 131 | 133 | 132 | 133 | 133 | 132 | 133 | 135 | 139 | 131 | 133 |
| | Second reactor (fewer stage) | °C | 133 | 135 | 134 | 135 | 135 | 134 | 135 | 138 | 142 | 133 | 135 |
| | Third reactor (upper stage) | °C | 142 | 145 | 144 | 145 | 145 | 144 | 144 | 146 | 149 | 143 | 145 |
| | Third reactor (middle stage) | °C | 145 | 148 | 147 | 148 | 148 | 147 | 147 | 148 | 153 | 146 | 148 |
| | Third reactor (lower stage) | °C | 147 | 150 | 149 | 150 | 150 | 149 | 149 | 151 | 156 | 148 | 150 |
| Volatile system | Resin temperature | °C | 220 | 220 | 220 | 220 | 220 | 220 | 220 | 220 | 220 | 220 | 220 |
| | Pressure | kPa | 0.8 | 0.8 | 0.8 | 0.8 | 0.8 | 0.8 | 0.8 | 0.8 | 0.8 | 0.8 | 0.8 |

| Table 13-1 | | | Example 78 | Example 79 | Example 80 | Example 81 | Example 82 | Example 83 | Example 84 | Example 85 | Example 86 | Example 87 | Example 88 |
|---|---|---|---|---|---|---|---|---|---|---|---|---|---|
| Styrene-based resin composition type used | | | PS-91 | PS-92 | PS-93 | PS-94 | PS-95 | PS-96 | PS-97 | PS-98 | PS-99 | PS-100 | PS-101 |
| Composition ratio in entire styrene-based resin composition | Styrene-based polymer (a-3) | mass% | 97 | 97 | 97 | 94 | 91 | 88 | 97 | 97 | 97 | 94 | 91 |
| | Palm oil (PO) | mass% | 3 | 3 | 3 | 6 | 9 | 12 | 3 | 3 | 0 | 0 | 0 |
| | Epoxidized soybean oil (ESO) | mass% | 0 | 0 | 0 | 0 | 0 | 0 | 0 | 0 | 3 | 6 | 9 |
| | Hydrogenated castor oil | mass% | 0 | 0 | 0 | 0 | 0 | 0 | 0 | 0 | 0 | 0 | 0 |
| | Liquid paraffin (MO) | mass% | 0 | 0 | 0 | 0 | 0 | 0 | 0 | 0 | 0 | 0 | 0 |
| | Polylactic acid (PLA) | mass% | 0 | 0 | 0 | 0 | 0 | 0 | 0 | 0 | 0 | 0 | 0 |
| Properties, etc. of styrene-based resin composition | Melt mass flow rate | g/10min | 4.5 | 3.7 | 14.0 | 8.5 | 16.0 | 27.0 | 4.4 | 3.6 | 4.5 | 8.0 | 14.5 |
| | Vicat softening temperature | °C | 89 | 90 | 88 | 80 | 73 | 65 | 90 | 90 | 89 | 80 | 73 |
| | SP value of styrene-based polymer (a-3) | (cal/cm3)1/2 | 8.6 | 8.6 | 8.6 | 8.6 | 8.6 | 8.6 | 8.8 | 9.0 | 8.6 | 8.6 | 8.6 |
| | SP value of biomass plasticizer (B) | | 8.2 | 8.2 | 8.2 | 8.2 | 8.2 | 8.2 | 8.2 | 8.2 | 9 | 9 | 9 |
| | SP value difference between styrene-based polymer (a-3) and biomass plasticizer (B) | | 0.4 | 0.4 | 0.4 | 0.4 | 0.4 | 0.4 | 0.6 | 0.8 | 0.4 | 0.4 | 0.4 |
| | Toluene insoluble matter | mass% | 0 | 0 | 0 | 0 | 0 | 0 | 0 | 0 | 0 | 0 | 0 |
| | Number average molecular weight of styrene-based polymer (a-3) (×10000) | | 11 | 12 | 9 | 11 | 11 | 10 | 9 | 7 | 11 | 11 | 10 |
| | Weight average molecular weight of styrene-based polymer (a-3) (×10000) | | 27 | 32 | 20 | 26 | 26 | 25 | 19 | 17 | 27 | 27 | 26 |
| Physical property evaluation | Total light transmittance (2mm thick sheet) | % | 90 | 90 | 90 | 90 | 90 | 89 | 89 | 89 | 89 | 88 | 87 |
| | Charpy impact strength | kJ | 2.3 | 2.7 | 1.9 | 2.3 | 2.3 | 2.2 | 2 | 1.9 | 2.4 | 2.2 | 2.3 |
| | Injection moldability | | ○ | ○ | ○ | ○ | ○ | ○ | ○ | ○ | ○ | ○ | ○ |
| | Number of shots upon mold staining | times | >150 | >150 | >150 | >150 | >150 | 134 | >150 | >150 | >150 | >150 | >150 |
| Biomass carbon ratio of biomass plasticizer (B) | | % | 100 | 100 | 100 | 100 | 100 | 100 | 100 | 100 | 100 | 100 | 100 |
| Biomass carbon ratio in styrene-based resin composition | | % | 3 | 3 | 3 | 6 | 9 | 12 | 3 | 3 | 3 | 6 | 9 |

*1 Prepared by adding palm oil (3mass% with respect to entire composition) to PS-105 and kneading with twin screw extruder.

*2 Prepared by adding palm oil (3mass% with respect to entire composition) to KIBISAN® PN-117C CHI-MEI product and kneading with twin screw extruder.

*3 Prepared by adding PLA to PS-105 and kneading with twin screw extruder.

[Table 13-1]

[Table 13-2]

| Table 13-2 | | | Example 89 | Example 90 | Example 91 | Example 92 | Example 93 |
|---|---|---|---|---|---|---|---|
| Styrene-based resin composition type used | | | PS-102 | PS-103 | PS-104 | PS-113*1 | PS-114*2 |
| Composition ratio in entire styrene-based resin composition | Styrene-based polymer (a-3) | mass% | 88 | 97 | 94 | 97 | 97 |
| | Palm oil (PO) | mass% | 0 | 0 | 0 | 3 | 3 |
| | Epoxidized soybean oil (ESO) | mass% | 12 | 0 | 0 | 0 | 0 |
| | Hydrogenated castor oil | mass% | 0 | 3 | 6 | 0 | 0 |
| | Liquid paraffin (MO) | mass% | 0 | 0 | 0 | 0 | 0 |
| | Polylactic acid (PLA) | mass% | 0 | 0 | 0 | 0 | 0 |
| Properties, etc. of styrene-based resin composition | Melt mass flow rate | g/10min | 25.0 | 4.2 | 7.8 | 4.7 | 7.5 |
| | Vicat softening temperature | °C | 65 | 90 | 83 | 89 | 95 |
| | SP value of styrene-based polymer (a-3) | (cal/cm3) 1/2 | 8.6 | 8.6 | 8.6 | 8.6 | 9.8 |
| | SP value of biomass plasticizer (B) | | 9 | 10.1 | 10.1 | 8.2 | 8.2 |
| | SP value difference between styrene-based polymer (a-3) and biomass plasticizer (B) | | 0.4 | 1.5 | 1.5 | 0.4 | 1.6 |
| | Toluene insoluble matter | mass% | 0 | 0 | 0 | 0 | 0.1 |
| | Number average molecular weight of styrene-based polymer (a-3) ($\times$10000) | | 10 | 11 | 11 | 10.5 | 6.5 |
| | Weight average molecular weight of styrene-based polymer (a-3) ($\times$10000) | | 25 | 27 | 26 | 26 | 12.5 |
| Physical property evaluation | Total light transmittance (2mm thick sheet) | % | 85 | 87 | 79 | 90 | 75 |
| | Charpy impact strength | kJ | 2.3 | 1.7 | 1.5 | 2.2 | 1.4 |
| | Injection moldability | | ○ | ○ | ○ | ○ | ○ |
| | Number of shots upon mold staining | times | 129 | >150 | >150 | >150 | 104 |

(continued)

| Table 13-2 | | Example 89 | Example 90 | Example 91 | Example 92 | Example 93 |
|---|---|---|---|---|---|---|
| Biomass carbon ratio of biomass plasticizer (B) | % | 100 | 100 | 100 | 100 | 100 |
| Biomass carbon ratio in styrene-based resin composition | % | 12 | 3 | 6 | 3 | 3 |

*1 Prepared by adding palm oil (3mass% with respect to entire composition) to PS-105 and kneading with twin screw extruder.
*2 Prepared by adding palm oil (3mass% with respect to entire composition) to KIBISAN® PN-117C CHI-MEI product and kneading with twin screw extruder.

[Table 13-3]

| Table 13-3 | | | Comparative Example 23 | Comparative Example 24 | Comparative Example 25 | Comparative Example 26 | Comparative Example 27 | Comparative Example 28 | Comparative Example 29 | Comparative Example 30 | Comparative Example 31 |
|---|---|---|---|---|---|---|---|---|---|---|---|
| Stvrene-based resin composition type used | | | PS-105 | PS-106 | PS-107 | PS-108 | PS-109 | PS-110 | PS-115*3 | PS-111 | PS-112 |
| Composition ratio in entire styrene-based resin composition | Styrene-based polymer (a-3) | mass% | 100 | 100 | 100 | 98 | 99 | 100 | 100 | 91 | 97 |
| | Palm oil (PO) | mass% | 0 | 0 | 0 | 2 | 1 | 0 | 0 | 0 | 3 |
| | Epoxidized soybean oil (ESO) | mass% | 0 | 0 | 0 | 0 | 0 | 0 | 0 | 0 | 0 |
| | Hydrogenated castor oil | mass% | 0 | 0 | 0 | 0 | 0 | 0 | 0 | 9 | 0 |
| | Liquid paraffin (MO) | mass% | 0 | 3 | 6 | 0 | 0 | 0 | 0 | 0 | 0 |
| | Polylactic acid (PLA) | mass% | 0 | 0 | 0 | 0 | 0 | 0 | 3 | 0 | 0 |

EP 4 253 475 A1

70

| Table 13-3 | | | Comparative Example 23 | Comparative Example 24 | Comparative Example 25 | Comparative Example 26 | Comparative Example 27 | Comparative Example 28 | Comparative Example 29 | Comparative Example 30 | Comparative Example 31 |
|---|---|---|---|---|---|---|---|---|---|---|---|
| Properties, etc. of styrene-based resin composition | Meft mass flow rate | g/10min | 2.1 | 4.8 | 8.7 | 2.8 | 2.8 | 14.0 | 2.7 | 14.0 | 6.5 |
| | Vicat softening temperature | °C | 101 | 89 | 80 | 94 | 97 | 100 | 100 | 74 | 89 |
| | SP value of styrene-based polymer (a-3) | (cal/cm3) 1/2 | 8.6 | 8.6 | 8.6 | 8.6 | 8.6 | 8.6 | 8.6 | 8.6 | 8.6 |
| | SP value of biomass plasticizer (B) | | - | - | - | 8.2 | 8.2 | - | - | 10.1 | 8.2 |
| | SP value difference between styrene-based polymer (a-3) and biomass plasticizer (B) | | - | - | - | 0.4 | 0.4 | - | - | 1.5 | 0.4 |
| | Toluene insoluble matter | mass% | 0 | 0 | 0 | 0 | 0 | 0 | 3 | 0 | 4 |
| | Number average molecular weight of styrene-based polymer (a-3) ($\times$10000) | | 11 | 11 | 11 | 12 | 11 | 6 | 11 | 11 | 9.5 |
| | Weight average molecular weight of styrene-based polymer (a-3) ($\times$10000) | | 27 | 27 | 26 | 32 | 27 | 15 | 26 | 25 | 22.5 |

(continued)

| Table 13-3 | | | Comparative Example 23 | Comparative Example 24 | Comparative Example 25 | Comparative Example 26 | Comparative Example 27 | Comparative Example 28 | Comparative Example 29 | Comparative Example 30 | Comparative Example 31 |
|---|---|---|---|---|---|---|---|---|---|---|---|
| Physical property evaluation | Total light transmittance (2mm thick sheet) | % | 90 | 88 | 68 | 90 | 90 | 90 | 27 | 58 | 68 |
| | Charpy impact strength | kJ | 2.1 | 1.9 | 1.4 | 2.6 | 2.3 | 1.1 | 1.2 | 1.3 | 3.4 |
| | Injection moldability | | Short | ○ | ○ | Short | Short | ○ | Short | ○ | ○ |
| | Number of shots upon mold staining | times | >150 | 87 | 51 | >150 | >150 | >150 | >150 | 121 | >150 |
| Biomass carbon ratio of biomass plasticizer (B) | | % | - | - | - | 100 | 100 | - | - | 100 | 100 |
| Biomass carbon ratio in styrene-based resin composition | | % | 0 | 0 | 0 | 2 | 1 | 0 | 3 | 9 | 3 |

*1 Prepared by adding palm oil (3mass% with respect to entire composition) to PS-105 and kneading with twin screw extruder.
*2 Prepared by adding palm oil (3mass% with respect to entire composition) to KIBISAN® PN-117C CHI-MEI product and kneading with twin screw extruder.
*3 Prepared by adding PLA to PS-105 and kneading with twin screw extruder.

The contents of the literatures described in this specification and the applications to which this application claims priority (Japanese Patent Application No. 2020-198999 (filed on November 30, 2020), Japanese Patent Application No. 2021-130990 (filed on August 10, 2021), Japanese Patent Application No. 2021-166317 (filed on October 8, 2021), Japanese Patent Application No. 2021-166318 (filed on October 8, 2021), and Japanese Patent Application No. 2021-190613 (filed on November 24, 2021)) are all incorporated herein.

INDUSTRIAL APPLICABILITY

It is thus possible to provide a styrene-based resin composition that reduces environmental load and has excellent mechanical strength, and a molded article made of the styrene-based resin composition. The molded article obtained from the styrene-based resin composition can be suitably used for food packaging containers, miscellaneous goods/toys, home electric appliance parts, industrial materials, and the like.

**Claims**

1.   A styrene-based resin composition comprising:

   82.5 mass% to 99.9 mass% of a styrene-based resin (A) containing a styrene-based monomer unit; and
   0.1 mass% to 15 mass% of a biomass plasticizer (B) having a biomass carbon ratio (pMC%) of 10 % or more.

2.   The styrene-based resin composition according to claim 1, comprising:

   90 mass% to 99.9 mass% of the styrene-based resin (A) containing the styrene-based monomer unit; and
   0.1 mass% to 10 mass% of the biomass plasticizer (B) having the biomass carbon ratio (pMC%) of 10 % or more.

3.   The styrene-based resin composition according to claim 1 or 2, wherein the styrene-based resin (A) is a styrene-based polymer (a-3) containing the styrene-based monomer unit, or a rubber-modified styrene-based resin containing: a polymer matrix phase having, as a constituent component, a styrene-based polymer (a-1) containing the styrene-based monomer unit; and rubbery polymer particles (a-2), and
   an absolute difference between an SP value of the styrene-based polymer (a-1) or the styrene-based polymer (a-3) and an SP value of the biomass plasticizer (B) is less than 2.5 $(cal/cm^3)^{1/2}$.

4.   The styrene-based resin composition according to any one of claims 1 to 3, wherein an SP value of the biomass plasticizer (B) is 7.4 $(cal/cm^3)^{1/2}$ to 10.5 $(cal/cm^3)^{1/2}$.

5.   The styrene-based resin composition according to any one of claims 1 to 4, wherein the styrene-based resin (A) is a rubber-modified styrene-based resin containing: a polymer matrix phase having a styrene-based polymer (a-1) as a constituent component; and rubbery polymer particles (a-2), and
   a content of the rubbery polymer particles (a-2) is 3 mass% to 36 mass% with respect to a total content of 100 mass% of the styrene-based resin (A), and an average particle diameter of the rubbery polymer particles (a-2) is 0.3 $\mu$m to 5.0 $\mu$m.

6.   The styrene-based resin composition according to any one of claims 1 to 5, wherein the styrene-based resin (A) is a rubber-modified styrene-based resin containing: a styrene-based polymer (a-1) containing the styrene-based monomer unit; and rubbery polymer particles (a-2) having an average particle diameter of 0.3 $\mu$m to 7.0 $\mu$m,

   the styrene-based resin composition further comprises a higher fatty acid compound (C), and
   a content of the rubbery polymer particles (a-2) is 3 mass% to 36 mass%, a content of the biomass plasticizer (B) is 0.1 mass% to 15 mass%, and a content of the higher fatty acid compound is 0.02 mass% to 2.5 mass%, with respect to 100 mass% of the entire styrene-based resin composition.

7.   The styrene-based resin composition according to any one of claims 1 to 6, wherein a content of the styrene-based monomer unit in the styrene-based resin (A) is 50 mass% or more with respect to a total content of 100 mass% of the styrene-based resin (A).

8.   The styrene-based resin composition according to any one of claims 1 to 7, wherein the styrene-based resin (A) is a styrene-based polymer (a-3), and a total light transmittance of a 2 mm thick plate of the styrene-based resin composition is 70 % or more.

9. The styrene-based resin composition according to any one of claims 1 to 8, wherein a content of the biomass plasticizer (B) is 0.1 mass% or more and less than 3.0 mass%, and a Vicat softening temperature is 90 °C or more.

10. An injection blow molded article obtainable by injection blow molding the styrene-based resin composition according to any one of claims 1 to 9.

11. An injection molded article obtainable by injection molding the styrene-based resin composition according to any one of claims 1 to 9.

12. A sheet comprising the styrene-based resin composition according to any one of claims 1 to 9.

## INTERNATIONAL SEARCH REPORT

| | International application No. |
|---|---|
| | **PCT/JP2021/043865** |

### A. CLASSIFICATION OF SUBJECT MATTER

*C08L 25/04*(2006.01)i; *C08L 25/08*(2006.01)i; *C08L 51/04*(2006.01)i; *C08L 91/00*(2006.01)i; *C08L 91/08*(2006.01)i; *C08L 63/08*(2006.01)i
FI: C08L25/04; C08L51/04 ZAB; C08L63/08; C08L91/08; C08L91/00; C08L25/08

According to International Patent Classification (IPC) or to both national classification and IPC

### B. FIELDS SEARCHED

Minimum documentation searched (classification system followed by classification symbols)

C08L25/04; C08L25/08; C08L51/04; C08L91/00; C08L91/08; C08L63/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2008-144025 A (DENKI KAGAKU KOGYO KK) 26 June 2008 (2008-06-26) claims, paragraphs [0007], [0008], [0022], examples | 1-4, 7, 12 |
| A | | 5, 6, 8-11 |
| X | WO 2019/235378 A1 (TOYO STYRENE CO., LTD.) 12 December 2019 (2019-12-12) claims, paragraphs [0009], [0026], examples | 1-4, 7, 11 |
| A | | 5-6, 8-10, 12 |
| X | JP 2016-515661 A (LANXESS DEUTSCHLAND GMBH) 30 May 2016 (2016-05-30) claims, examples | 1-4 |
| A | | 5-12 |
| A | JP 2010-504404 A (DOW GLOBAL TECHNOLOGIES INC) 12 February 2010 (2010-02-12) entire text | 1-12 |
| P, A | WO 2021/132692 A1 (PS JAPAN CORP) 01 July 2021 (2021-07-01) entire text | 1-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 January 2022** | **08 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/043865**

| Patent document cited in search report | | | Publication date (day/month/year) | Patent family member(s) | | | Publication date (day/month/year) |
|---|---|---|---|---|---|---|---|
| JP | 2008-144025 | A | 26 June 2008 | (Family: none) | | | |
| WO | 2019/235378 | A1 | 12 December 2019 | CN | 112204099 | A | |
| | | | | TW | 202003668 | A | |
| JP | 2016-515661 | A | 30 May 2016 | US claims, examples | 2016/0068659 | A1 | |
| | | | | EP | 2792689 | A1 | |
| | | | | CN | 105121476 | A | |
| | | | | KR | 10-2016-0012135 | A | |
| JP | 2010-504404 | A | 12 February 2010 | US entire text | 2010/0298486 | A1 | |
| | | | | WO | 2008/036530 | A2 | |
| | | | | EP | 2066746 | A2 | |
| | | | | CN | 101516989 | A | |
| WO | 2021/132692 | A1 | 01 July 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016199652 A
- JP 2005239914 A
- JP 2020193274 A
- JP H10251355 A
- JP 2017222770 A
- JP 2013100430 A
- WO 2017122775 A1
- WO 2021132692 A1

- JP H1076565 A
- JP 2013100435 A
- JP 2009120717 A
- JP 2020198999 A
- JP 2021130990 A
- JP 2021166317 A
- JP 2021166318 A
- JP 2021190613 A

**Non-patent literature cited in the description**

- Fundamentals of Biomaterials. Nihon Igakukan Publishing
- *J. Appl. Polym. Sci.,* 1968, vol. 12, 2359

- Paint Research. *Consideration on Solubility Parameters of Additives,* October 2010, (152